# EUROPEAN PATENT APPLICATION

(11) **EP 4 001 219 A1**
(43) Date of publication of application: **25.05.2022**
(21) Application number: 20841196.7
(22) Date of filing: 14.07.2020
(51) Int. Cl.: C02F 1/00, B01D 35/12, F16K 11/074

(54) **WATER PURIFIER AND CONTROL VALVE FOR USE IN WATER PURIFIER**

(30) Priority: 18.07.2019 CN 201910651142; 17.01.2020 CN 202020113926 U; 17.01.2020 CN 202010052563; 17.01.2020 CN 202020114173 U; 17.01.2020 CN 202020113042 U; 17.01.2020 CN 202010053469; 17.01.2020 CN 202020112904 U; 17.01.2020 CN 202020113607 U; 17.01.2020 CN 202020113435 U; 03.04.2020 CN 202020484268 U; 03.04.2020 CN 202020483754 U; 03.04.2020 CN 202020487506 U; 10.07.2020 CN 202010660295; 10.07.2020 CN 202021362678 U
(71) Applicant: Yzyao Yadong Plastic Co., Ltd., Yuyao, Zhejiang 315456 (CN)
(72) Inventor: HU, Jizong, Zhejiang 315456 (CN); HU, Xiaozong, Zhejiang 315456 (CN); CHU, Zhenlin, Zhejiang 315456 (CN)
(74) Representative: Casalonga
(86) International application number: PCT/CN2020/101776
(87) International publication number: WO 2021/008509

(57) **Abstract**

Provided by the present invention is a water purifier comprising a control valve for controlling the flow of water and a filter device, wherein the filter comprises an outer casing, a primary filter and a secondary filter, wherein the outer casing defines a first accommodation cavity, wherein the primary filter and the secondary filter are disposed inside the first accommodation cavity of the outer casing, and the outer casing and the primary filter define a raw water channel therebetween, the primary filter and the secondary filter define a purified water channel therebetween, the secondary filter has a purified water outlet, wherein the filter device has a first communicating opening, a second communicating opening and a third communicating opening, the control valve comprises a valve body and a valve core, wherein the valve body defines a valve cavity, a first opening, a second opening, a third opening, a fourth opening, a fifth opening, a raw water inlet and a draining opening.

## Description

### CROSS REFERENCE OF RELATED APPLICATION

This application claims the benefit under 35 U.S.C. §119 from International Application No.PCT/CN2020/101776, which claims priorities to CN201910651142.7, filed Jul. 18, 2019; CN202020113926.2, filed Jan. 17, 2020; CN202010052563.0, filed Jan. 17, 2020; CN202020114173.7, filed Jan. 17, 2020; CN202020113042.7, filed Jan. 17, 2020; CN202010053469.7, filed Jan. 17, 2020; CN202020112904.4, filed Jan. 17, 2020; CN202020113607.1, filed Jan. 17, 2020; CN202020113435.8, filed Jan. 17, 2020; CN202020484268.8, filed Apr. 03, 2020; CN202020483754.8, filed Apr. 03, 2020; CN202020487506.0, filed Apr. 03, 2020; CN202010660295.0, filed Jul. 10, 2020; CN202021362678.1, filed Jul. 10, 2020, the entire contents of which are hereby incorporated by reference in their entireties for teachings of additional or alternative details, and/or features.

### BACKGROUND OF THE PRESENT INVENTION

### FIELD OF INVENTION

The present invention relates to a water purifier, and more particularly to a water purifier capable of purifying raw water (or tap water) in two stages. Further, the water purifier of the present invention is also capable of controlling the raw water to back-flush its primary filter. The present invention further relates to a control valve for the water purifier.

### DESCRIPTION OF RELATED ARTS

With the increasing improvement of people's living standards and increasing attention to health, people's requirements for the quality of domestic water are getting higher and higher. However, on the other hand, in many countries, especially developing countries, with the continuous development of industry and agriculture, the problem of water pollution has become more and more serious, which will inevitably lead to a lesser or more severe impact on the source of the domestic water, especially the source of the tap water. In addition, the quality of the tap water will also be affected by the external environment and water supply pipelines. For example, the increase in the sand content of the source of the tap water will cause the water quality of the tap water to deteriorate. The long-term lack of cleaning of the tap water supply pipe network and the aging of the pipe network will also affect the water quality of the tap water. Therefore, in many cases, the tap water is not suitable for direct drinking. In order to solve the above-mentioned problems of the tap water, various household water purifiers have appeared on the market, such as ultrafiltration water purifiers, RO membrane water purifiers, prefilters, etc., for purifying the tap water. Among these water purification equipment, faucet water purifiers are favored by many consumers because of their small size, easy installation and disassembly, the ability to automatically purify the tap water under the pressure of the tap water without requiring electricity, etc. However, the existing faucet water purifier also has many defects. First, most existing faucet water purifiers only use a single filter, for example, only use a ceramic filter, an activated carbon filter or an ultrafiltration filter to purify the tap water. The faucet water purifier with a single ceramic filter or activated carbon filter, because of the large pore size of the ceramic filter or the activated carbon filter, does not completely purify the tap water, and the purified water obtained is not suitable for direct drinking. However, the faucet water purifier that uses a single ultrafiltration filter to purify the tap water, because of the small pore size of the ultrafiltration filter, is prone to blockage and cause the faucet water purifier to become unusable soon. Especially in the case of poor water quality, the ultrafiltration filter is prone to blockage.

CN Pat. No. 201811199228.2 discloses a faucet water purifier with microfiltration ceramics, activated carbon and ultrafiltration ceramics for purifying the tap water, wherein when the faucet water purifier purifies the tap water, the tap water is first microfiltered by microfiltration ceramics, and then the purified water generated by the microfiltration ceramics is filtered by the activated carbon, and the purified water generated by the activated carbon is further filtered by the ultrafiltration ceramics and the ultrafiltration purified water is generated. However, the faucet water purifier disclosed by the patent lacks a flushing mechanism, especially a mechanism for flushing the microfiltration ceramics and the ultrafiltration ceramics, which will cause a large number of impurities and microorganisms to accumulate on the surface of the microfiltration ceramic and ultrafiltration ceramic membrane and clogging the microfiltration ceramic and ultrafiltration ceramic membrane in a short period of time. Even the accumulation of a large number of microorganisms causes the faucet water purifier provided by the patent to be stinky after being used for a short period of time. Finally, the water inlet of the faucet water purifier is communicated with the water outlet of the faucet. In other words, the water supply and the water treatment of the faucet water purifier are controlled by the faucet switch, not by the faucet water purifier itself. This makes it difficult for the faucet water purifier to perform functions other than the water treatment (such as filtration). For example, control and adjust the water flow rate of the raw water that flows through the faucet water purifier and is treated by it.

CN Pat. No. 201220080023.4 discloses a faucet water purifier with ceramics and ultrafiltration filter for two-stage purification of the tap water, wherein the primary filter of the faucet water purifier is capable of preliminarily purifying the tap water, and its secondary filter further purifies the purified water generated by the primary filter. However, the faucet water purifier provided by the patent application lacks both a mechanism for flushing the primary filter and a mechanism for cleaning (or flushing) the secondary filter, which causes the faucet water purifier provided by the patent application also to be stinky after being used for a short period of time. Finally, the water inlet of the faucet water purifier is communicated with the water outlet of the faucet. In other words, the water supply and the water treatment of the faucet water purifier are also controlled by the faucet switch, not by the faucet water purifier itself. This makes it difficult for the faucet water purifier to perform functions other than the water treatment (such as filtration). For example, control and adjust the water flow rate of the raw water that flows through the faucet water purifier and is treated by it.

### SUMMARY OF THE PRESENT INVENTION

The main advantage of the present invention is to provide a water purifier, wherein the water purifier of the present invention is integrated with a primary filter and a secondary filter, wherein the primary filter is adapted for the primary purification of the tap water, and the secondary filter is adapted to repurify the purified water generated by the primary filter.

Another advantage of the present invention is to provide a water purifier, wherein a raw water inlet of the water purifier of the present invention is adapted to directly communicate with a raw water source, such as a tap water pipe. In other words, the communication between the raw water inlet of the water purifier of the present invention and the raw water source, such as the tap water pipe, is no longer through the faucet. Accordingly, the water purifier of the present invention is capable of independently controlling the flow of the raw water to its filtering device.

Another advantage of the present invention is to provide a water purifier, wherein a control valve of the water purifier of the present invention is capable of controlling the flow rate of the raw water (or the tap water) flowing to the filtering device of the water purifier. Further, the control valve of the water purifier of the present invention is capable of realizing stepless control of the flow rate of the water purifier of the present invention, so as to meet the different water needs of users or the water needs of different users.

Another advantage of the present invention is to provide a water purifier, wherein the control valve of the water purifier of the present invention is capable of cutting off the flow of the raw water to the filtering device of the water purifier of the present invention, so as to prevent the filtering device of the water purifier of the present invention from being constantly affected by the water hammer from the raw water (such as the tap water), thereby improving the service life of the water purifier.

Another advantage of the present invention is to provide a water purifier, wherein the control valve of the water purifier of the present invention is capable of controlling the raw water (such as the tap water) to back-flush the filter to increase the service life of the filter of the water purifier.

Another advantage of the present invention is to provide a water purifier, wherein the water purifier of the present invention is capable of being integrated and used with the faucet. In other words, the water purifier of the present invention and the faucet are capable of being respectively communicated with the tap water pipe. Further, the water purifier and the faucet are capable of being respectively communicated with the tap water pipe, so that the faucet, the water purifier and the tap water pipe define a three-way structure. In addition, the water purifier of the present invention is integrated and used with the faucet, which reduces the installation processes for installing the water purifier and the faucet respectively.

Another advantage of the present invention is to provide a water purifier, wherein the purified water generated by the primary filter of the water purifier of the present invention is capable of being provided to the users for using, and when the purified water generated by the primary filter is provided, it is capable of being guided to flow through the outer surface of the ultrafiltration membrane filament of the secondary filter, so that the outer surface of the ultrafiltration membrane filament of the secondary filter is flushed. Accordingly, the secondary filter is an ultrafiltration filter, and the ultrafiltration filter is an external pressure type ultrafiltration membrane filament filter. Alternatively, the ultrafiltration filter is an internal pressure type ultrafiltration membrane filament filter, accordingly, when the purified water generated by the primary filter is provided, it is capable of being guided to flow through the membrane filament channels of the ultrafiltration membrane filament of the secondary filter, so that the interior of the ultrafiltration membrane filament of the secondary filter is flushed. Those skilled in the art will appreciate that the secondary filter may also be a filter made of other materials, such as a ceramic filter, carbon fiber, PP cotton or activated carbon filter. Alternatively, the secondary filter is a composite filter made of multiple materials, for example, a composite filter composed of any two or more materials of ceramic, carbon fiber, PP cotton and activated carbon particles.

Another advantage of the present invention is to provide a water purifier, wherein the purified water generated by the primary filter and the purified water generated by the secondary filter of the water purifier of the present invention are provided through different water outlets, thereby preventing the purified water generated by the primary filter from affecting the purified water generated by the secondary filter. In other words, the flow channel of the purified water generated by the secondary filter of the water purifier of the present invention is independent of the flow channel of the purified water generated by the primary filter. In addition, the way of providing the purified water generated by the primary filter and the purified water generated by the secondary filter of the water purifier of the present invention is more in line with the usage habits of consumers.

Another advantage of the present invention is to provide a water purifier, wherein the control valve of the water purifier of the present invention is capable of controlling the raw water (such as the tap water) to back-flush the primary filter to increase the service life of the primary filter of the water purifier. It is appreciated that the water purifier of the present invention controls the back-flushing of the primary filter by the raw water, which can improve the filtering effect of the primary filter, reduce the accumulation of impurities in the raw water on the surface of the primary filter and prevent the growth of bacteria in the water purifier.

Another advantage of the present invention is to provide a water purifier, wherein the purified water generated by the primary filter of the water purifier of the present invention and the waste water generated by the back-flushing flow out through different water outlets, thereby preventing the waste water generated by the primary filter from polluting its purified water outlet. In other words, the flow channel of the waste water generated by the primary filter of the water purifier of the present invention is independent of the flow channel of the purified water generated by the primary filter.

Another advantage of the present invention is to provide a water purifier, wherein the purified water generated by the secondary filter of the water purifier of the present invention and the waste water generated by back-flushing the primary filter flow out through different water outlets, thereby preventing the waste water generated by the primary filter from polluting its purified water outlet of the secondary filter. In other words, the flow channel of the waste water generated by the primary filter of the water purifier of the present invention is independent of the flow channel of the purified water generated by the secondary filter.

Another advantage of the present invention is to provide a control valve for the water purifier, wherein the control valve for the water purifier of the present invention is capable of controlling the water purifier to provide the purified water generated by the primary filter, the purified water generated by the secondary filter and to discharge the waste water, wherein the purified water generated by the primary filter, the purified water generated by the secondary filter and the waste water flow out through different outlets.

Additional objects and features of the present invention will become apparent from the following detailed description, and may be realized by means of the instrumentalities and combinations particular point out in the appended claims.

According to one aspect of the present invention, the foregoing and other objects and advantages are attained by a water purifier of the present invention, which comprising:

a control valve for controlling the flow of water and a filtering device for purifying a raw water, wherein the filtering device has a first communicating opening, a second communicating opening and a third communicating opening, the control valve comprises a valve body and a valve core, wherein the valve body defines a valve cavity, a first opening, a second opening, a third opening, a fourth opening, a fifth opening, a raw water inlet and a draining opening, wherein the valve core is provided inside the valve cavity, wherein the first opening of the valve body is adapted to be communicated with the first communicating opening of the filtering device, the second opening of the valve body is adapted to be communicated with the second communicating opening of the filtering device, the fourth opening of the valve body is adapted to be communicated with the third communicating opening of the filtering device, the raw water inlet of the valve body is adapted to be communicated with a raw water source.

Still further objects and advantages of the present invention will become apparent from a consideration of the ensuing description and drawings.

These and other objectives, features, and advantages of the present invention will become apparent from the following detailed description, the accompanying drawings, and the appended claims.

### BRIEF DESCRIPTION OF THE DRAWINGS

FIG.1A is a front view of a water purifier according to the first embodiment of the present invention.
FIG.1B is an exploded view of the water purifier according to the above first embodiment of the present invention.
FIG.1C is a sectional view of the water purifier according to the above first embodiment of the present invention.
FIG.1D is another sectional view of the water purifier according to the above first embodiment of the present invention.
FIG.2A is an exploded view of a control valve of the water purifier according to the above first embodiment of the present invention.
FIG.2B is an exploded view of a filtering device of the water purifier according to the above first embodiment of the present invention.
FIG.3A is a front view of the filtering device of the water purifier according to the above first embodiment of the present invention.
FIG.3B is a sectional view of the filtering device of the water purifier according to the above first embodiment of the present invention.
FIG.3C is another sectional view of the filtering device of the water purifier according to the above first embodiment of the present invention, which shows a brush of the filtering device.
FIG.3D is a perspective view of a primary filter of the filtering device of the water purifier according to the above first embodiment of the present invention.
FIG.3E is a perspective view of a secondary filter of the filtering device of the water purifier according to the above first embodiment of the present invention.
FIG.4A is a perspective view of a base of the filtering device of the water purifier according to the above first embodiment of the present invention.
FIG.4B is a sectional view of the base of the filtering device of the water purifier according to the above first embodiment of the present invention.
FIG.4C is another sectional view of the base of the filtering device of the water purifier according to the above first embodiment of the present invention.
FIG.4D is another sectional view of the base of the filtering device of the water purifier according to the above first embodiment of the present invention.
FIG.5A is a perspective view of a plane valve of the water purifier according to the above first embodiment of the present invention, which shows a first channel, a second channel, a third channel, a fourth channel, a fifth channel, an eighth channel, a ninth channel, a tenth channel and an eleventh channel of the plane valve.
FIG.5B is another perspective view of the plane valve of the water purifier according to the above first embodiment of the present invention, which shows the first channel, the second channel, the third channel, the fourth channel, the fifth channel, the eighth channel, the ninth channel, the tenth channel, the eleventh channel and a second seal of the plane valve.
FIG.5C is another perspective view of the plane valve of the water purifier according to the above first embodiment of the present invention, which shows a first opening, a second opening, a third opening, a fourth opening, a fifth opening and a raw water inlet of a valve body.
FIG.5D is another perspective view of the plane valve of the water purifier according to the above first embodiment of the present invention, which shows the raw water inlet of the valve body.
FIG.5E is another perspective view of the plane valve of the water purifier according to the above first embodiment of the present invention, which shows the third opening and the fifth opening of the valve body.
FIG.5F is another perspective view of the plane valve of the water purifier according to the above first embodiment of the present invention, which shows a draining opening of the valve body.
FIG.5G is a top view of the valve body of the plane valve of the water purifier according to the above first embodiment of the present invention.
FIG.5H is a bottom view of the valve body of the plane valve of the water purifier according to the above first embodiment of the present invention.
FIG.5I is a front view of the valve body of the plane valve of the water purifier according to the above first embodiment of the present invention.
FIG.5J is a side view of the valve body of the plane valve of the water purifier according to the above first embodiment of the present invention.
FIG.5K is another side view of the valve body of the plane valve of the water purifier according to the above first embodiment of the present invention.
FIG.6A is a sectional view of the valve body of the plane valve of the water purifier according to the above first embodiment of the present invention, which shows that the first channel, the eighth channel and the eleventh channel of the plane valve are all communicated with the first opening.
FIG.6B is a sectional view of the valve body of the plane valve of the water purifier according to the above first embodiment of the present invention, which shows that the second channel of the plane valve is communicated with the second opening, the fourth channel is communicated with the fourth opening, the raw water inlet is communicated with a valve cavity.
FIG.6C is a sectional view of the valve body of the plane valve of the water purifier according to the above first embodiment of the present invention, which shows that the third channel of the plane valve is communicated with the third opening.
FIG.6D is a sectional view of the valve body of the plane valve of the water purifier according to the above first embodiment of the present invention, which shows that the fifth channel of the plane valve is communicated with the fifth opening.
FIG.6E is a sectional view of the valve body of the plane valve of the water purifier according to the above first embodiment of the present invention, which shows that the second channel of the plane valve is communicated with the tenth channel, the ninth channel is communicated with the draining opening.
FIG.6F is a sectional view of the valve body of the plane valve of the water purifier according to the above first embodiment of the present invention, which shows that the second channel of the plane valve is communicated with the tenth channel, the first channel and the eighth channel are communicated with the eleventh channel.
FIG.7A is a sectional view of the plane valve of the water purifier according to the above first embodiment of the present invention, wherein a fixing device is provided inside the valve cavity of the plane valve.
FIG.7B is a perspective view of the valve body of the plane valve of the water purifier according to the above first embodiment of the present invention, wherein a guiding plate of the water purifier of the present invention is provided at the valve body of the plane valve.
FIG.7C is a perspective view of the valve body of the plane valve of the water purifier according to the above first embodiment of the present invention, wherein a sealing gasket of the water purifier of the present invention is provided at the valve body of the plane valve.
FIG.7D is a perspective view of the guiding plate of the water purifier according to the above first embodiment of the present invention.
FIG.7E is another perspective view of the guiding plate of the water purifier according to the above first embodiment of the present invention.
FIG.7F is a perspective view of the sealing gasket of the water purifier according to the above first embodiment of the present invention.
FIG.8A is a perspective view of the fixing device of the water purifier according to the above first embodiment of the present invention.
FIG.8B is a sectional view of the fixing device of the water purifier according to the above first embodiment of the present invention.
FIG.8C is a perspective view of a fixing portion of a fixed disk of the plane valve of the water purifier according to the above first embodiment of the present invention, which shows first sealing grooves of the fixing portion.
FIG.8D is another perspective view of the fixing portion of the fixed disk of the plane valve of the water purifier according to the above first embodiment of the present invention, which shows second sealing grooves of the fixing portion.
FIG.8E is a drawing of the fixing portion and an upper end portion of the fixed disk of the plane valve of the water purifier according to the above first embodiment of the present invention, wherein the upper end portion of the fixed disk is provided at the fixing portion.
FIG.8F is a perspective view of a first seal of a sealing assembly of the water purifier according to the above first embodiment of the present invention.
FIG.8G is a perspective view of the second seal of the sealing assembly of the water purifier according to the above first embodiment of the present invention.
FIG.8H is a perspective view of a fixing holder of the fixing device of the water purifier according to the above first embodiment of the present invention, which shows restricting grooves of the fixing holder.
FIG.9A is a perspective view of the fixed disk of the plane valve of the water purifier according to the above first embodiment of the present invention.
FIG.9B is a top view of the fixed disk of the plane valve of the water purifier according to the above first embodiment of the present invention.
FIG.9C is a bottom view of the fixed disk of the plane valve of the water purifier according to the above first embodiment of the present invention.
FIG.9D is a perspective view of a rotatable disk of the plane valve of the water purifier according to the above first embodiment of the present invention.
FIG.9E is a top view of the rotatable disk of the plane valve of the water purifier according to the above first embodiment of the present invention.
FIG.9F is a bottom view of the rotatable disk of the plane valve of the water purifier according to the above first embodiment of the present invention.
FIG.10A is a structure diagram of the water purifier according to the above first embodiment of the present invention, wherein the water purifier shown in the drawing is under a first purifying working state, and the arrows in the drawing point to the direction of water flow.
FIG.10B is a structure diagram of the water purifier according to the above first embodiment of the present invention, wherein the water purifier shown in the drawing is under a second purifying working state, and the arrows in the drawing point to the direction of water flow.
FIG.10C is a structure diagram of the water purifier according to the above first embodiment of the present invention, wherein the water purifier shown in the drawing is under a standby working state.
FIG.10D is a structure diagram of the water purifier according to the above first embodiment of the present invention, wherein the water purifier shown in the drawing is under a back-flushing working state, and the arrows in the drawing point to the direction of water flow.
FIG.11A is a structure diagram of the fixed disk of the plane valve of the water purifier according to the above first embodiment of the present invention.
FIG.11B is a structure diagram of the rotatable disk of the plane valve of the water purifier according to the above first embodiment of the present invention, wherein the dotted line in the drawing shows a communicating channel of the rotatable disk.
FIG.11C is a diagram of the equal division of the fixed disk of the plane valve of the water purifier according to the above first embodiment of the present invention, which shows that each channel is provided in the specific equal division position of the fixed disk.
FIG.11D is a diagram of the equal division of the rotatable disk of the plane valve of the water purifier according to the above first embodiment of the present invention, which shows that each channel is provided in the specific equal division position of the rotatable disk.
FIG.12A is a diagram of the communication between the channels of the rotatable disk of the plane valve and the channels of the fixed disk when the plane valve of the water purifier according to the above first embodiment of the present invention is completely switched to the first purifying working position, wherein the shaded area in the drawing shows the channels defined by the communication between the rotatable disk of the plane valve and the fixed disk.
FIG.12B is a diagram of the communication between the channels of the rotatable disk of the plane valve and the channels of the fixed disk during the switching process of the plane valve of the water purifier according to the above first embodiment of the present invention, such as from the standby working position to the first purifying working position or from the first purifying working position to the standby working position, wherein the shaded area in the drawing shows the channels defined by the communication between the rotatable disk of the plane valve and the fixed disk.
FIG.12C is a diagram of the communication between the channels of the rotatable disk of the plane valve and the channels of the fixed disk when the plane valve of the water purifier according to the above first embodiment of the present invention is completely switched to the second purifying working position, wherein the shaded area in the drawing shows the channels defined by the communication between the rotatable disk of the plane valve and the fixed disk.
FIG.12D is a diagram of the communication between the channels of the rotatable disk of the plane valve and the channels of the fixed disk during the switching process of the plane valve of the water purifier according to the above first embodiment of the present invention, such as from the standby working position to the second purifying working position or from the second purifying working position to the standby working position, wherein the shaded area in the drawing shows the channels defined by the communication between the rotatable disk of the plane valve and the fixed disk.
FIG.12E is a diagram of the communication between the channels of the rotatable disk of the plane valve and the channels of the fixed disk when the plane valve of the water purifier according to the above first embodiment of the present invention is under the standby working position, wherein the shaded area in the drawing shows the channels defined by the communication between the rotatable disk of the plane valve and the fixed disk.
FIG.12F is a diagram of the communication between the channels of the rotatable disk of the plane valve and the channels of the fixed disk when the plane valve of the water purifier according to the above first embodiment of the present invention is under the back-flushing working position, wherein the shaded area in the drawing shows the channels defined by the communication between the rotatable disk of the plane valve and the fixed disk.
FIG.13 is an exploded view of an alternative embodiment of the filtering device of the water purifier according to the above first embodiment of the present invention.
FIG.14A is a front view of the alternative embodiment of the filtering device of the water purifier according to the above first embodiment of the present invention.
FIG.14B is a sectional view of the alternative embodiment of the filtering device of the water purifier according to the above first embodiment of the present invention.
FIG.14C is another sectional view of the alternative embodiment of the filtering device of the water purifier according to the above first embodiment of the present invention, which shows the brush of the filtering device.
FIG.14D is a perspective view of the primary filter of the alternative embodiment of the filtering device of the water purifier according to the above first embodiment of the present invention.
FIG.14E is a perspective view of the secondary filter of the alternative embodiment of the filtering device of the water purifier according to the above first embodiment of the present invention.
FIG.15A is a perspective view of the base of the alternative embodiment of the filtering device of the water purifier according to the above first embodiment of the present invention.
FIG.15B is a sectional view of the base of the alternative embodiment of the filtering device of the water purifier according to the above first embodiment of the present invention.
FIG.15C is another sectional view of the base of the alternative embodiment of the filtering device of the water purifier according to the above first embodiment of the present invention.
FIG.15D is another sectional view of the base of the alternative embodiment of the filtering device of the water purifier according to the above first embodiment of the present invention.
FIG.16 is an exploded view of another alternative embodiment of the filtering device of the water purifier according to the above first embodiment of the present invention.
FIG.17A is a front view of the alternative embodiment of the filtering device of the water purifier according to the above first embodiment of the present invention.
FIG.17B is a sectional view of the alternative embodiment of the filtering device of the water purifier according to the above first embodiment of the present invention.
FIG.17C is another sectional view of the alternative embodiment of the filtering device of the water purifier according to the above first embodiment of the present invention, which shows the brush of the filtering device.
FIG.17D is a perspective view of the primary filter of the alternative embodiment of the filtering device of the water purifier according to the above first embodiment of the present invention.
FIG.17E is a perspective view of the secondary filter of the alternative embodiment of the filtering device of the water purifier according to the above first embodiment of the present invention.
FIG.17F is a sectional view of the secondary filter of the alternative embodiment of the filtering device of the water purifier according to the above first embodiment of the present invention.
FIG.18A is a perspective view of the base of the alternative embodiment of the filtering device of the water purifier according to the above first embodiment of the present invention.
FIG.18B is a sectional view of the base of the alternative embodiment of the filtering device of the water purifier according to the above first embodiment of the present invention.
FIG.18C is another sectional view of the base of the alternative embodiment of the filtering device of the water purifier according to the above first embodiment of the present invention.
FIG.18D is another sectional view of the base of the alternative embodiment of the filtering device of the water purifier according to the above first embodiment of the present invention.
FIG.19 is an exploded view of an alternative embodiment of the control valve of the water purifier according to the above first embodiment of the present invention.
FIG.20A is a perspective view of the alternative embodiment of the plane valve of the water purifier according to the above first embodiment of the present invention, which shows the first channel, the second channel, the third channel, the fourth channel, the fifth channel, the eighth channel, the ninth channel, the tenth channel, the eleventh channel and a raw water inlet channel of the plane valve.
FIG.20B is another perspective view of the alternative embodiment of the plane valve of the water purifier according to the above first embodiment of the present invention, which shows the first channel, the second channel, the third channel, the fourth channel, the fifth channel, the eighth channel, the ninth channel, the tenth channel, the eleventh channel, the raw water inlet channel and the second seal of the plane valve.
FIG.20C is another perspective view of the alternative embodiment of the plane valve of the water purifier according to the above first embodiment of the present invention, which shows the first opening, the second opening, the third opening, the fourth opening and the fifth opening of the valve body.
FIG.20D is another perspective view of the alternative embodiment of the plane valve of the water purifier according to the above first embodiment of the present invention, which shows the raw water inlet of the valve body.
FIG.20E is another perspective view of the alternative embodiment of the plane valve of the water purifier according to the above first embodiment of the present invention, which shows the third opening and the fifth opening of the valve body.
FIG.20F is another perspective view of the alternative embodiment of the plane valve of the water purifier according to the above first embodiment of the present invention, which shows the draining opening of the valve body.
FIG.20G is a top view of the valve body of the alternative embodiment of the plane valve of the water purifier according to the above first embodiment of the present invention.
FIG.20H is a bottom view of the valve body of the alternative embodiment of the plane valve of the water purifier according to the above first embodiment of the present invention.
F1G.20I is a front view of the valve body of the alternative embodiment of the plane valve of the water purifier according to the above first embodiment of the present invention.
FIG.20J is a side view of the valve body of the alternative embodiment of the plane valve of the water purifier according to the above first embodiment of the present invention.
FIG.20K is another side view of the valve body of the alternative embodiment of the plane valve of the water purifier according to the above first embodiment of the present invention.
FIG.21A is a sectional view of the valve body of the alternative embodiment of the plane valve of the water purifier according to the above first embodiment of the present invention, which shows that the first channel, the eighth channel and the eleventh channel of the plane valve are all communicated with the first opening, and the raw water inlet channel is communicated with the raw water inlet.
FIG.21B is a sectional view of the valve body of the alternative embodiment of the plane valve of the water purifier according to the above first embodiment of the present invention, which shows that the second channel of the plane valve is communicated with the second opening, and the fourth channel is communicated with the fourth opening.
FIG.21C is a sectional view of the valve body of the alternative embodiment of the plane valve of the water purifier according to the above first embodiment of the present invention, which shows that the third channel of the plane valve is communicated with the third opening.
FIG.21D is a sectional view of the valve body of the alternative embodiment of the plane valve of the water purifier according to the above first embodiment of the present invention, which shows that the fifth channel of the plane valve is communicated with the fifth opening.
FIG.21E is a sectional view of the valve body of the alternative embodiment of the plane valve of the water purifier according to the above first embodiment of the present invention, which shows that the ninth channel of the plane valve is communicated with the draining opening.
FIG.21F is a sectional view of the valve body of the alternative embodiment of the plane valve of the water purifier according to the above first embodiment of the present invention, which shows that the second channel of the plane valve is communicated with the tenth channel, the first channel and the eighth channel are communicated with the eleventh channel.
FIG.22A is a sectional view of the alternative embodiment of the plane valve of the water purifier according to the above first embodiment of the present invention, wherein the fixing device is provided inside the valve cavity of the plane valve.
FIG.22B is a perspective view of the valve body of the alternative embodiment of the plane valve of the water purifier according to the above first embodiment of the present invention, wherein the guiding plate of the water purifier of the present invention is provided at the valve body of the plane valve.
FIG.22C is a perspective view of the valve body of the alternative embodiment of the plane valve of the water purifier according to the above first embodiment of the present invention, wherein the sealing gasket of the water purifier of the present invention is provided at the valve body of the plane valve.
FIG.22D is a perspective view of the guiding plate of the water purifier according to the above first embodiment of the present invention.
FIG.22E is another perspective view of the guiding plate of the water purifier according to the above first embodiment of the present invention.
FIG.22F is a perspective view of the sealing gasket of the water purifier according to the above first embodiment of the present invention.
FIG.23A is a perspective view of the fixing device of the alternative embodiment of the plane valve of the water purifier according to the above first embodiment of the present invention.
FIG.23B is a sectional view of the fixing device of the alternative embodiment of the plane valve of the water purifier according to the above first embodiment of the present invention.
FIG.23C is a perspective view of a fixing portion of a fixed disk of the alternative embodiment of the plane valve of the water purifier according to the above first embodiment of the present invention, which shows the first sealing grooves of the fixing portion.
FIG.23D is another perspective view of the fixing portion of the fixed disk of the alternative embodiment of the plane valve of the water purifier according to the above first embodiment of the present invention, which shows the second sealing grooves of the fixing portion.
FIG.23E is a drawing of the fixing portion and an upper end portion of the fixed disk of the alternative embodiment of the plane valve of the water purifier according to the above first embodiment of the present invention, wherein the upper end portion of the fixed disk is provided at the fixing portion.
FIG.23F is a perspective view of the first seal of the sealing assembly of the alternative embodiment of the plane valve of the water purifier according to the above first embodiment of the present invention.
FIG.23G is a perspective view of the second seal of the sealing assembly of the alternative embodiment of the plane valve of the water purifier according to the above first embodiment of the present invention.
FIG.23H is a perspective view of a fixing holder of the fixing device of the alternative embodiment of the plane valve of the water purifier according to the above first embodiment of the present invention, which shows the restricting grooves of the fixing holder.
FIG.24A is a perspective view of the fixed disk of the alternative embodiment of the plane valve of the water purifier according to the above first embodiment of the present invention.
FIG.24B is a top view of the fixed disk of the alternative embodiment of the plane valve of the water purifier according to the above first embodiment of the present invention.
FIG.24C is a bottom view of the fixed disk of the alternative embodiment of the plane valve of the water purifier according to the above first embodiment of the present invention.
FIG.24D is a perspective view of the rotatable disk of the alternative embodiment of the plane valve of the water purifier according to the above first embodiment of the present invention.
FIG.24E is a top view of the rotatable disk of the alternative embodiment of the plane valve of the water purifier according to the above first embodiment of the present invention.
FIG.24F is a bottom view of the rotatable disk of the alternative embodiment of the plane valve of the water purifier according to the above first embodiment of the present invention.
FIG.25A is a structure diagram of the alternative embodiment of the plane valve of the water purifier according to the above first embodiment of the present invention, wherein the water purifier shown in the drawing is under the first purifying working position, and the arrows in the drawing point to the direction of water flow.
FIG.25B is a structure diagram of the alternative embodiment of the plane valve of the water purifier according to the above first embodiment of the present invention, wherein the water purifier shown in the drawing is under the second purifying working position, and the arrows in the drawing point to the direction of water flow.
FIG.25C is a structure diagram of the alternative embodiment of the plane valve of the water purifier according to the above first embodiment of the present invention, wherein the water purifier shown in the drawing is under the standby working position.
FIG.25D is a structure diagram of the alternative embodiment of the plane valve of the water purifier according to the above first embodiment of the present invention, wherein the water purifier shown in the drawing is under the back-flushing working position, and the arrows in the drawing point to the direction of water flow.
FIG.26A is a structure diagram of the fixed disk of the alternative embodiment of the plane valve of the water purifier according to the above first embodiment of the present invention.
FIG.26B is a structure diagram of the rotatable disk of the alternative embodiment of the plane valve of the water purifier according to the above first embodiment of the present invention, wherein the dotted line in the drawing shows the communicating channel of the rotatable disk.
FIG.26C is a diagram of the equal division of the fixed disk of the alternative embodiment of the plane valve of the water purifier according to the above first embodiment of the present invention, which shows that each channel is provided in the specific equal division position of the fixed disk.
FIG.26D is a diagram of the equal division of the rotatable disk of the alternative embodiment of the plane valve of the water purifier according to the above first embodiment of the present invention, which shows that each channel is provided in the specific equal division position of the rotatable disk.
FIG.27A is a diagram of the communication between the channels of the rotatable disk of the plane valve and the channels of the fixed disk when the alternative embodiment of the plane valve of the water purifier according to the above first embodiment of the present invention is completely switched to the first purifying working position, wherein the shaded area in the drawing shows the channels defined by the communication between the rotatable disk and the fixed disk of the plane valve.

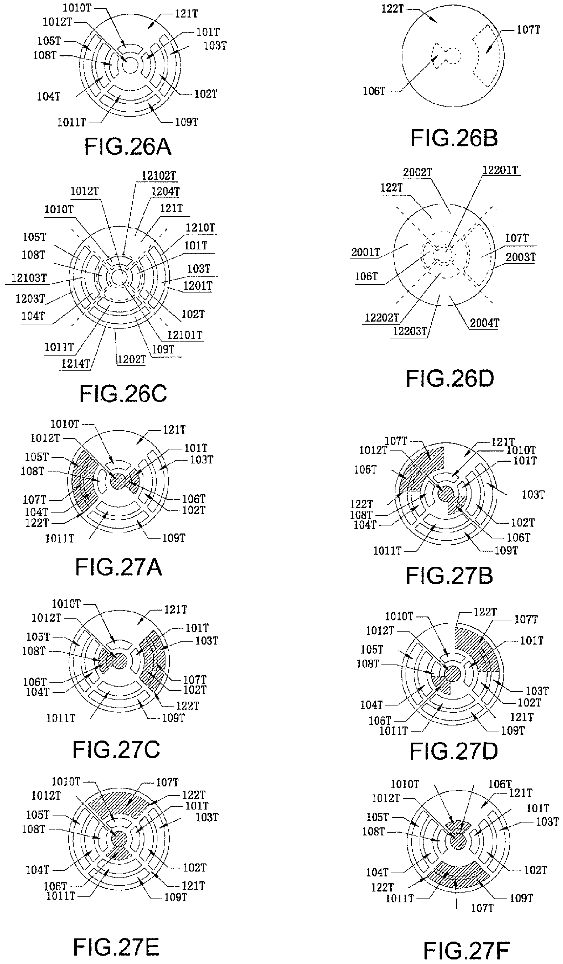

FIG.27B is a diagram of the communication between the channels of the rotatable disk of the plane valve and the channels of the fixed disk during the switching process of the alternative embodiment of the plane valve of the water purifier according to the above first embodiment of the present invention, such as from the standby working position to the first purifying working position or from the first purifying working position to the standby working position, wherein the shaded area in the drawing shows the channels defined by the communication between the rotatable disk of the plane valve and the fixed disk.
FIG.27C is a diagram of the communication between the channels of the rotatable disk of the plane valve and the channels of the fixed disk when the alternative embodiment of the plane valve of the water purifier according to the above first embodiment of the present invention is completely switched to the second purifying working position, wherein the shaded area in the drawing shows the channels defined by the communication between the rotatable disk of the plane valve and the fixed disk.
FIG.27D is a diagram of the communication between the channels of the rotatable disk of the plane valve and the channels of the fixed disk during the switching process of the alternative embodiment of the plane valve of the water purifier according to the above first embodiment of the present invention, such as from the standby working position to the second purifying working position or from the second purifying working position to the standby working position, wherein the shaded area in the drawing shows the channels defined by the communication between the rotatable disk of the plane valve and the fixed disk.
FIG.27E is a diagram of the communication between the channels of the rotatable disk of the plane valve and the channels of the fixed disk when the alternative embodiment of the plane valve of the water purifier according to the above first embodiment of the present invention is under the standby working position, wherein the shaded area in the drawing shows the channels defined by the communication between the rotatable disk of the plane valve and the fixed disk.
FIG.27F is a diagram of the communication between the channels of the rotatable disk of the plane valve and the channels of the fixed disk when the alternative embodiment of the plane valve of the water purifier according to the above first embodiment of the present invention is under the back-flushing working position, wherein the shaded area in the drawing shows the channels defined by the communication between the rotatable disk of the plane valve and the fixed disk.
FIG.28 is a front view of the water purifier according to a second embodiment of the present invention.
FIG.29 is an exploded view of the water purifier according to the above second embodiment of the present invention.
FIG.30A is a front view of the filtering device of the water purifier according to the above second embodiment of the present invention.
FIG.30B is a sectional view of the filtering device of the water purifier according to the above second embodiment of the present invention.
FIG.30C is a perspective view of the primary filter of the filtering device of the water purifier according to the above second embodiment of the present invention.
FIG.30D is a perspective view of the secondary filter of the filtering device of the water purifier according to the above second embodiment of the present invention.
FIG.31A is a perspective view of the base of the filtering device of the water purifier according to the above second embodiment of the present invention.
FIG.31B is a sectional view of the base of the filtering device of the water purifier according to the above second embodiment of the present invention.
FIG.31C is another sectional view of the base of the filtering device of the water purifier according to the above second embodiment of the present invention.
FIG.31D is another sectional view of the base of the filtering device of the water purifier according to the above second embodiment of the present invention.
FIG.31E is another sectional view of the base of the filtering device of the water purifier according to the above second embodiment of the present invention.
FIG.32A is a sectional view of the base and a terminal filter of the filtering device of the water purifier according to the above second embodiment of the present invention.
FIG.32B is a sectional view of the terminal filter of the filtering device of the water purifier according to the above second embodiment of the present invention.
FIG.32C is another sectional view of the terminal filter of the filtering device of the water purifier according to the above second embodiment of the present invention.
FIG.33A is a perspective view of the valve body of an alternative embodiment of the plane valve of the water purifier according to the above second embodiment of the present invention, which shows the first channel, the second channel, the third channel, the fourth channel, the fifth channel and a raw water supplying channel.
FIG.33B is another perspective view of the valve body of the alternative embodiment of the plane valve of the water purifier according to the above second embodiment of the present invention, which shows the first channel, the second channel, the third channel, the fourth channel, the fifth channel, the raw water supplying channel and the second seal.
FIG.33C is another perspective view of the valve body of the alternative embodiment of the plane valve of the water purifier according to the above second embodiment of the present invention, which shows the first opening, the second opening, the fourth opening and the fifth opening of the valve body.
FIG.33D is another perspective view of the valve body of the alternative embodiment of the plane valve of the water purifier according to the above second embodiment of the present invention, which shows the raw water inlet of the valve body.
FIG.33E is another perspective view of the valve body of the alternative embodiment of the plane valve of the water purifier according to the above second embodiment of the present invention, which shows the third opening and a sixth opening of the valve body.
FIG.33F is a top view of the valve body of the alternative embodiment of the plane valve of the water purifier according to the above second embodiment of the present invention.
FIG.33G is a bottom view of the valve body of the alternative embodiment of the plane valve of the water purifier according to the above second embodiment of the present invention.
FIG.34A is a sectional view of the valve body of the alternative embodiment of the plane valve of the water purifier according to the above second embodiment of the present invention, which shows the first channel, the fifth channel, the first opening and the fifth opening.
FIG.34B is another sectional view of the valve body of the alternative embodiment of the plane valve of the water purifier according to the above second embodiment of the present invention, which shows the second channel, the fourth channel, the second opening and the fourth opening.
FIG.34C is another sectional view of the valve body of the alternative embodiment of the plane valve of the water purifier according to the above second embodiment of the present invention, which shows the third channel and the third opening.
FIG.34D is another sectional view of the valve body of the alternative embodiment of the plane valve of the water purifier according to the above second embodiment of the present invention, which shows the raw water supplying channel, the sixth opening and the raw water inlet.
FIG.35A is a sectional view of the alternative embodiment of the plane valve of the water purifier according to the above second embodiment of the present invention.
FIG.35B is a perspective view of the alternative embodiment of the plane valve of the water purifier according to the above second embodiment of the present invention.
FIG.35C is a perspective view of the guiding plate of the alternative embodiment of the plane valve of the water purifier according to the above second embodiment of the present invention.
FIG.35D is another perspective view of the guiding plate of the alternative embodiment of the plane valve of the water purifier according to the above second embodiment of the present invention.
FIG.36A is a perspective view of the fixing device of the alternative embodiment of the plane valve of the water purifier according to the above second embodiment of the present invention.
FIG.36B is a sectional view of the fixing device of the alternative embodiment of the plane valve of the water purifier according to the above second embodiment of the present invention.
FIG.36C is a perspective view of the fixing portion of the fixed disk of the alternative embodiment of the plane valve of the water purifier according to the above second embodiment of the present invention, which shows the first sealing grooves of the fixing portion.
FIG.36D is another perspective view of the fixing portion of the fixed disk of the alternative embodiment of the plane valve of the water purifier according to the above second embodiment of the present invention, which shows the second sealing grooves of the fixing portion.
FIG.36E is a drawing of the upper end portion of the fixed disk of the alternative embodiment of the plane valve of the water purifier according to the above second embodiment of the present invention, wherein the upper end portion of the fixed disk is provided at the fixing portion of the fixed disk.
FIG.36F is a perspective view of the first seal of the sealing assembly of the alternative embodiment of the plane valve of the water purifier according to the above second embodiment of the present invention.
FIG.36G is a perspective view of the second seal of the sealing assembly of the alternative embodiment of the plane valve of the water purifier according to the above second embodiment of the present invention.
FIG.37A is a perspective view of the fixed disk of the alternative embodiment of the plane valve of the water purifier according to the above second embodiment of the present invention.
FIG.37B is a top view of the fixed disk of the alternative embodiment of the plane valve of the water purifier according to the above second embodiment of the present invention.
FIG.37C is a bottom view of the fixed disk of the alternative embodiment of the plane valve of the water purifier according to the above second embodiment of the present invention.
FIG.37D is a perspective view of the rotatable disk of the alternative embodiment of the plane valve of the water purifier according to the above second embodiment of the present invention.
FIG.37E is a top view of the rotatable disk of the alternative embodiment of the plane valve of the water purifier according to the above second embodiment of the present invention.
FIG.37F is a bottom view of the rotatable disk of the alternative embodiment of the plane valve of the water purifier according to the above second embodiment of the present invention.
FIG.38A is a structure diagram of the alternative embodiment of the plane valve of the water purifier according to the above second embodiment of the present invention, wherein the water purifier shown in the drawing is under a first working position, and the arrows in the drawing point to the direction of water flow.
FIG.38B is a structure diagram of the alternative embodiment of the plane valve of the water purifier according to the above second embodiment of the present invention, wherein the water purifier shown in the drawing is under a second working position, and the arrows in the drawing point to the direction of water flow.
FIG.38C is a structure diagram of the alternative embodiment of the plane valve of the water purifier according to the above second embodiment of the present invention, wherein the water purifier shown in the drawing is under a third working position, and the arrows in the drawing point to the direction of water flow.
FIG.39A is a structure diagram of the fixed disk of the alternative embodiment of the plane valve of the water purifier according to the above second embodiment of the present invention.
FIG.39B is a structure diagram of the rotatable disk of the alternative embodiment of the plane valve of the water purifier according to the above second embodiment of the present invention, wherein the dotted line in the drawing shows the communicating channel of the rotatable disk.
FIG.40A is a diagram of the communication between the channels of the rotatable disk of the plane valve and the channels of the fixed disk when the alternative embodiment of the plane valve of the water purifier according to the above second embodiment of the present invention is under the first working position, wherein the shaded area in the drawing shows the channels defined by the communication between the rotatable disk of the plane valve and the fixed disk.
FIG.40B is a diagram of the communication between the channels of the rotatable disk of the plane valve and the channels of the fixed disk when the alternative embodiment of the plane valve of the water purifier according to the above second embodiment of the present invention is under the second working position, wherein the shaded area in the drawing shows the channels defined by the communication between the rotatable disk of the plane valve and the fixed disk.
FIG.40C is a diagram of the communication between the channels of the rotatable disk of the plane valve and the channels of the fixed disk when the alternative embodiment of the plane valve of the water purifier according to the above second embodiment of the present invention is under the third working position, wherein the shaded area in the drawing shows the channels defined by the communication between the rotatable disk of the plane valve and the fixed disk.
FIG.41A is a front view of an alternative embodiment of the filtering device of the water purifier according to the above second embodiment of the present invention.
FIG.41B is a sectional view of the alternative embodiment of the filtering device of the water purifier according to the above second embodiment of the present invention.
FIG.41C is a perspective view of the secondary filter of the alternative embodiment of the filtering device of the water purifier according to the above second embodiment of the present invention.
FIG.41D is a sectional view of the secondary filter of the alternative embodiment of the filtering device of the water purifier according to the above second embodiment of the present invention.
FIG.42A is a perspective view of the base of the alternative embodiment of the filtering device of the water purifier according to the above second embodiment of the present invention.
FIG.42B is a sectional view of the base of the alternative embodiment of the filtering device of the water purifier according to the above second embodiment of the present invention.
FIG.42C is another sectional view of the base of the alternative embodiment of the filtering device of the water purifier according to the above second embodiment of the present invention.
FIG.42D is another sectional view of the base of the alternative embodiment of the filtering device of the water purifier according to the above second embodiment of the present invention.
FIG.42E is another sectional view of the base of the alternative embodiment of the filtering device of the water purifier according to the above second embodiment of the present invention.
FIG.43A is another front view of an alternative embodiment of the filtering device of the water purifier according to the above second embodiment of the present invention.
FIG.43B is a sectional view of the alternative embodiment of the filtering device of the water purifier according to the above second embodiment of the present invention.
FIG.43C is a perspective view of the secondary filter of the alternative embodiment of the filtering device of the water purifier according to the above second embodiment of the present invention.
FIG.43D is a sectional view of the secondary filter of the alternative embodiment of the filtering device of the water purifier according to the above second embodiment of the present invention.
FIG.44A is a perspective view of the base of the alternative embodiment of the filtering device of the water purifier according to the above second embodiment of the present invention.
FIG.44B is a sectional view of the base of the alternative embodiment of the filtering device of the water purifier according to the above second embodiment of the present invention.
FIG.44C is another sectional view of the base of the alternative embodiment of the filtering device of the water purifier according to the above second embodiment of the present invention.
FIG.44D is another sectional view of the base of the alternative embodiment of the filtering device of the water purifier according to the above second embodiment of the present invention.
FIG.44E is another sectional view of the base of the alternative embodiment of the filtering device of the water purifier according to the above second embodiment of the present invention.

### DETAILED DESCRIPTION OF THE PREFERRED EMBODIMENT

The following description is disclosed to enable any person skilled in the art to make and use the present invention. Preferred embodiments are provided in the following description only as examples and modifications will be apparent to those skilled in the art. The general principles defined in the following description would be applied to other embodiments, alternatives, modifications, equivalents, and applications without departing from the spirit and scope of the present invention.

Those skilled in the art should understand that, in the disclosure of the present invention, terminologies of "longitudinal", "lateral", "upper", "lower", "front", "back", "left", "right", "perpendicular", "horizontal", "top", "bottom", "inner", "outer" and etc. just indicate relations of direction or position are based on the relations of direction or position shown in the appended drawings, which is only to facilitate descriptions of the present invention and to simplify the descriptions, rather than to indicate or imply that the referred device or element must apply specific direction or to be operated or configured in specific direction. Therefore, the above-mentioned terminologies shall not be interpreted as confine to the present invention.

It will be understood that the term "a" should be understood as "at least one" or "one or more", that is, in one embodiment, the number of an element may be one, and in other embodiments, the number of the element can be greater than one, and the term "a" cannot be construed as a limitation to the quantity.

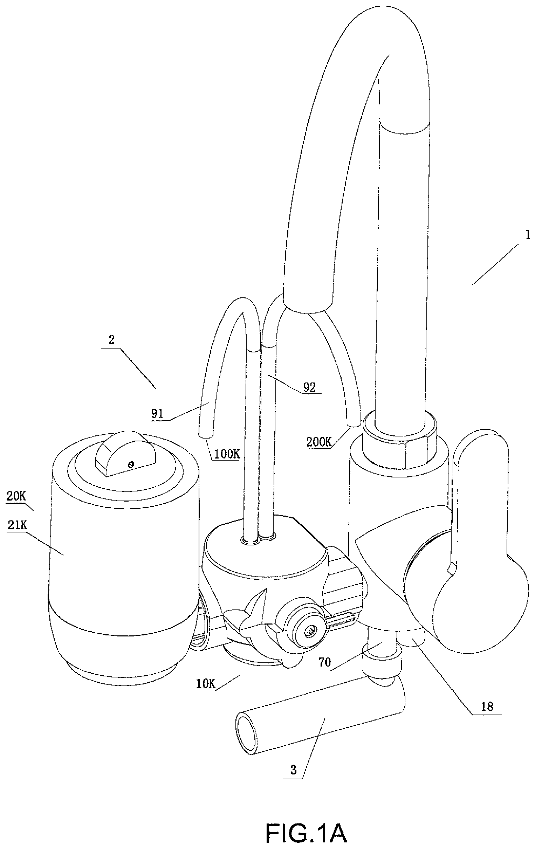

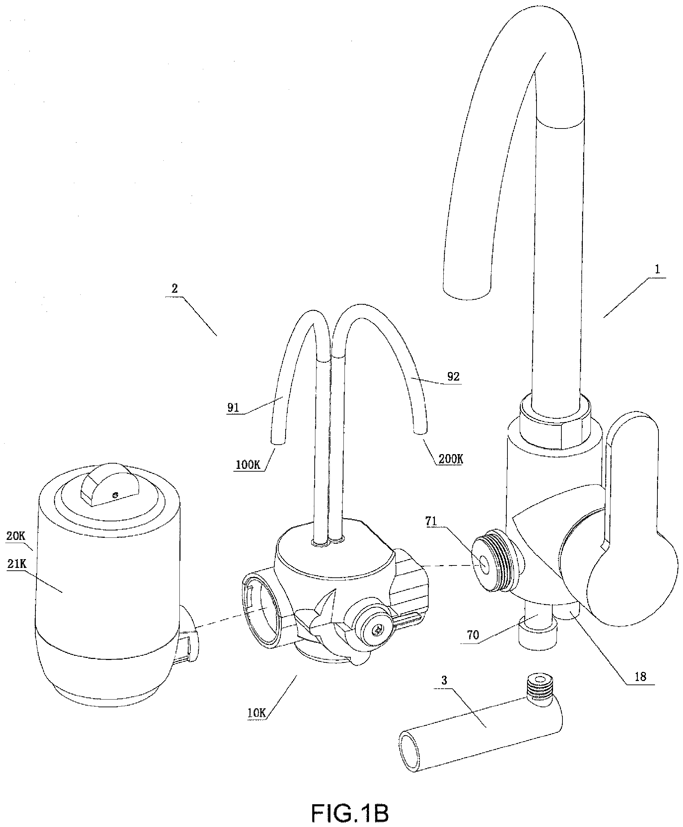

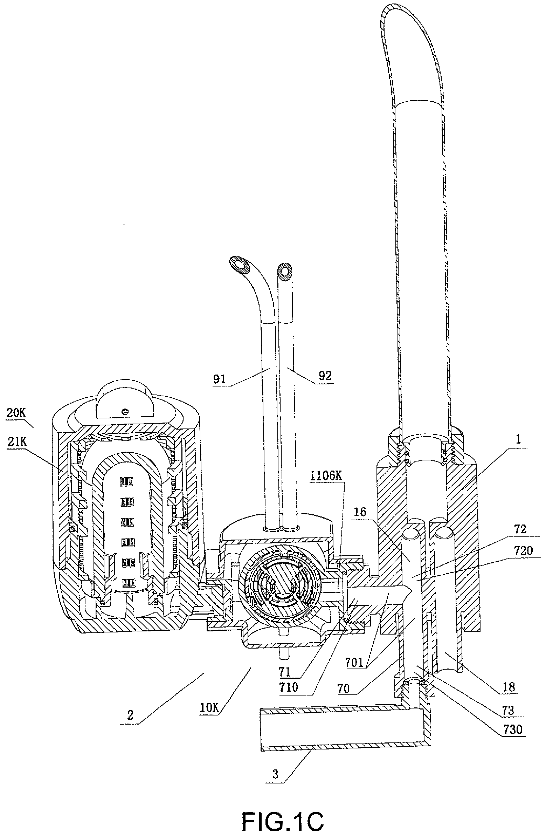

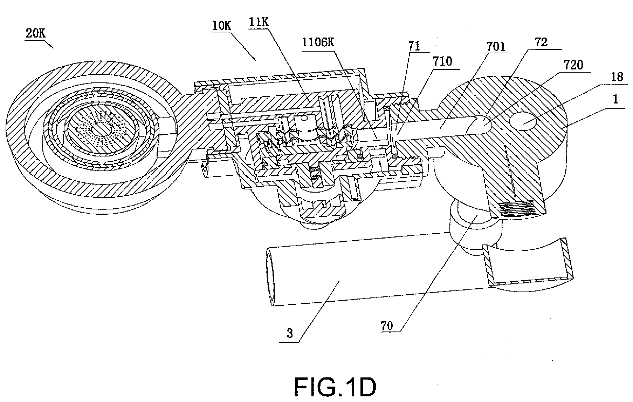

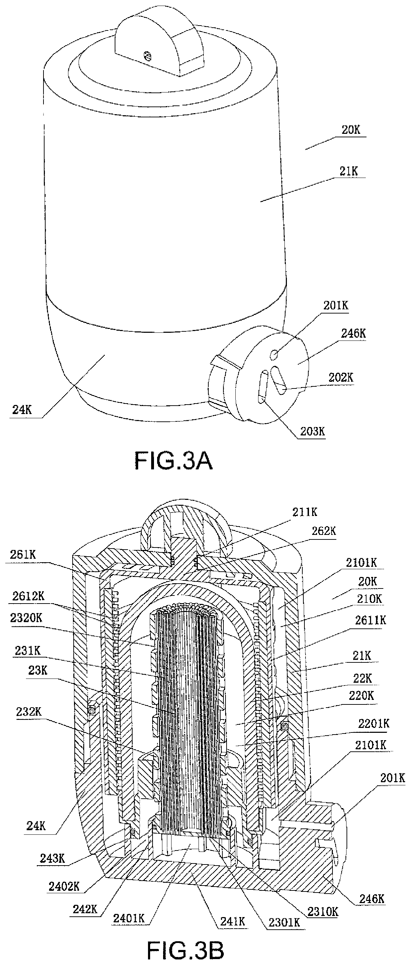

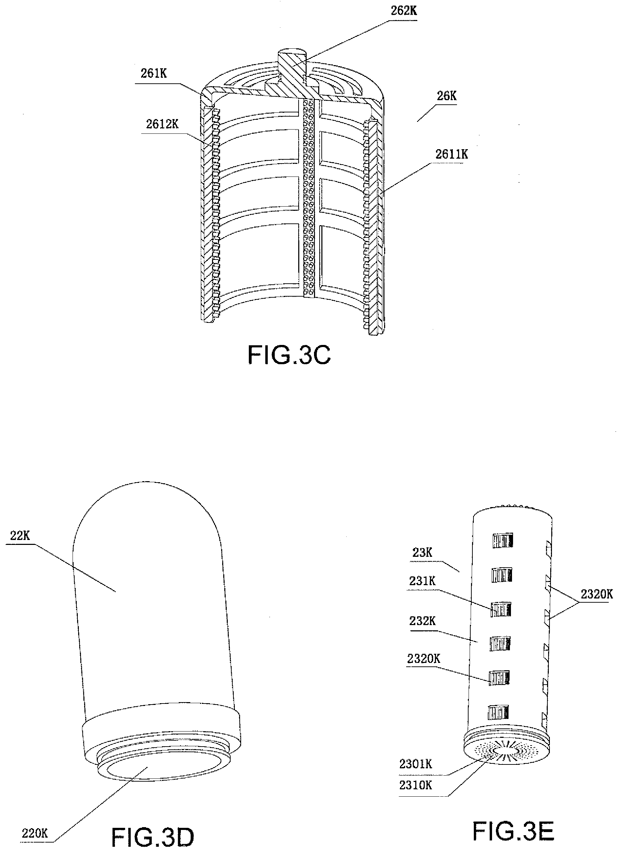

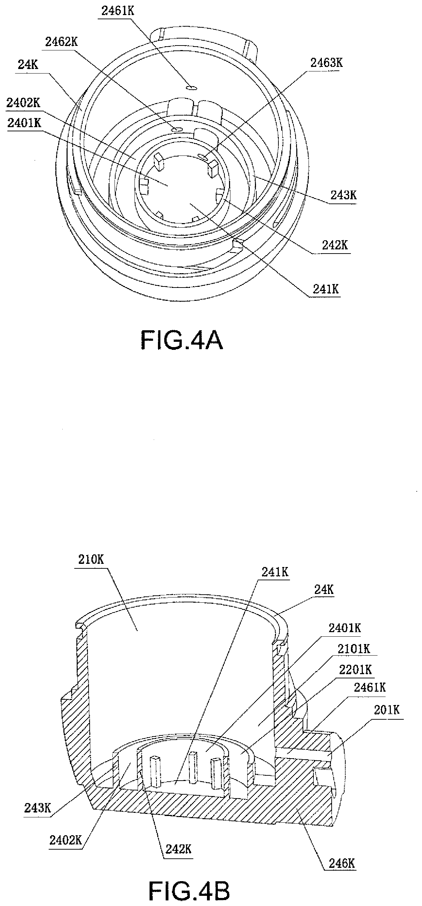

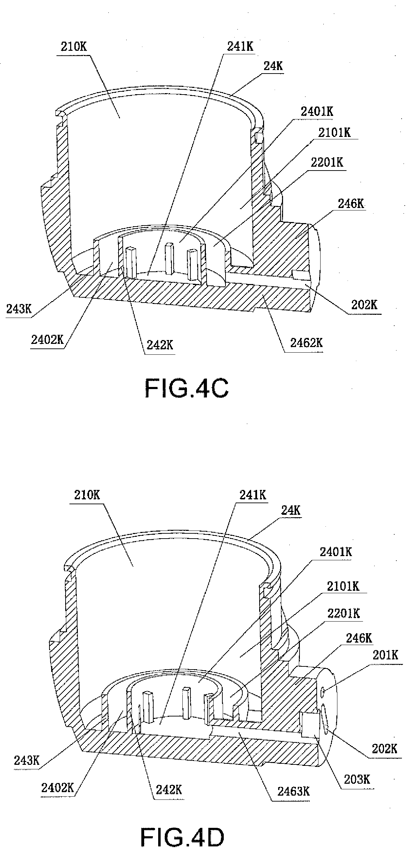

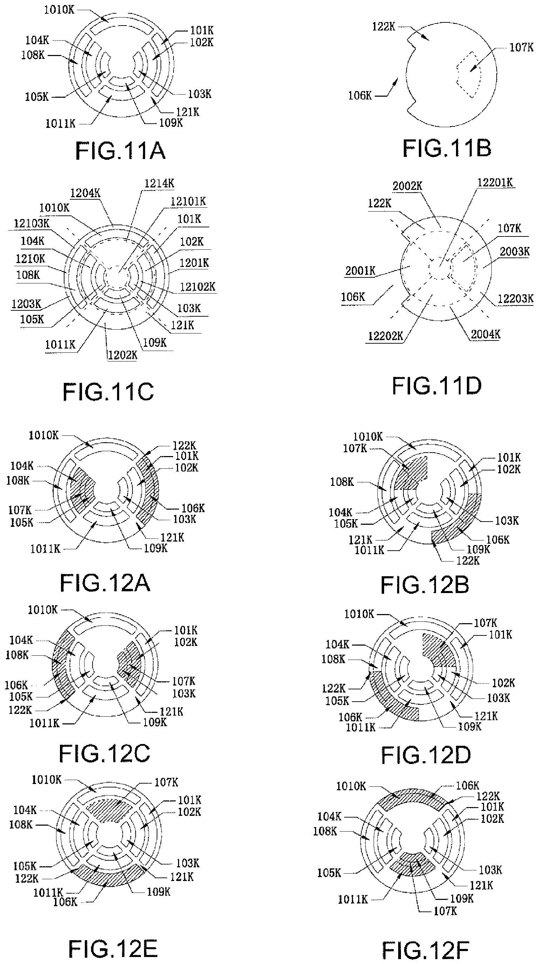

Referring to FIG.1A to FIG.12F, a water purifier 2 of a first embodiment of the present invention is illustrated, wherein the water purifier 2 of the present invention comprises a control valve 10K and a filtering device 20K, wherein the control valve 10K is provided between a tap water pipe 3 and the filtering device 20K. It should be understood that the control valve 10K is provided for controlling the flow of water, such as controlling the supply of raw water (or tap water) to the filtering device 20K and controlling the supply of the purified water generated or produced by treating the raw water by the filtering device 20K, and the filtering device 20K is provided for purifying the raw water. Further, the control valve 10K is provided to be capable of controlling the flow rate of the raw water flowing to the filtering device 20K of the water purifier 2, so as to meet the different water needs of users or the water needs of different users.

Significantly, the water purifier 2 of the present invention is provided to be capable of being used with a faucet together, such as the faucet 1 shown in FIG.1A to FIG.1D. At this time, the water purifier 2 of the present invention is capable of being integrated with the faucet 1, so as to install the water purifier 2 of the present invention and the faucet 1. Therefore, the faucet 1 can be regarded as a part or an assembly unit of the water purifier 2 of the present invention.

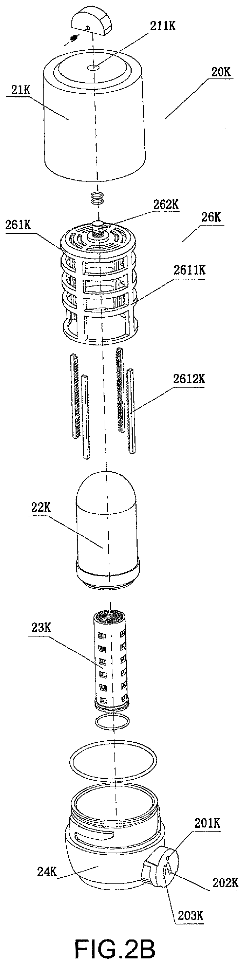

As shown in FIG.2B to FIG.4D, the filtering device 20K of the water purifier 2 according to the first embodiment of the present invention comprises a outer casing 21K, a primary filter 22K and a secondary filter 23K, wherein the outer casing 21K defines a first accommodation cavity 210K, wherein the primary filter 22K and the secondary filter 23K are all provided inside the first accommodation cavity 210K of the outer casing 21K, and the outer casing 21K and the primary filter 22K define a raw water channel 2101K therebetween, the primary filter 22K and the secondary filter 23K define a purified water channel 2201K therebetween, the secondary filter 23K has a purified water outlet 2301K. Further, the purified water channel 2201K is provided at one side of the secondary filter 23K, and the purified water outlet 2301K is provided at an opposite side of the secondary filter 23K.

As shown in FIG.2B to FIG.4D, further, the primary filter 22K of the filtering device 20K of the water purifier 2 according to the first embodiment of the present invention defines a second accommodation cavity 220K, and the secondary filter 23K is provided inside the second accommodation cavity 220K of the primary filter 22K (accordingly, the purified water channel 2201K can be regarded as a part of the second accommodation cavity 220K). Accordingly, since the secondary filter 23K is provided inside the second accommodation cavity 220K of the primary filter 22K, after the raw water flows into the raw water channel 2101K under the action of water pressure and is treated by the primary filter 22K, the purified water generated by the primary filter 22K can flow to the secondary filter 23K under the action of water pressure and be treated by the secondary filter 23K, and the cleaner secondary purified water is obtained, wherein the secondary purified water flows out through the purified water outlet 2301K under the action of water pressure, so as to be provided. Preferably, the primary filter 22K is a ceramic filter, and the secondary filter 23K is an external pressure type ultrafiltration filter, wherein the ultrafiltration membrane filaments 231K of the secondary filter 23K are provided inside the second accommodation cavity 220K of the primary filter 22K, so that the purified water channel 2201K is defined between the ultrafiltration membrane filaments 231K of the secondary filter 23K and the primary filter 22K. Therefore, the purified water generated by the primary filter 22K can be further ultrafiltered by the secondary filter 23K under the action of water pressure, so as to obtain cleaner purified water (or ultrafiltration filtered water). It should be understood that the primary filter 22K may also be a filter made of other materials, or a composite filter made of multiple materials, for example, a composite filter composed of any two or more materials of ceramic, carbon fiber, PP cotton and activated carbon particles.

As shown in FIG.1A, FIG.2B to FIG.4D and FIG.10A to FIG.10B, the filtering device 20K of the water purifier 2 according to the first embodiment of the present invention has a first communicating opening 201K, a second communicating opening 202K and a third communicating opening 203K, wherein the first communicating opening 201K of the filtering device 20K is communicated with the raw water channel 2101K of the filtering device 20K, so that the control valve 10K can supply the raw water to the filtering device 20K through the first communicating opening 201K, the second communicating opening 202K of the filtering device 20K is communicated with the purified water channel 2201K, so that the purified water generated by treating the raw water by the primary filter 22K can flow to a second water outlet 200K of the water purifier 2 of the present invention under the control of the control valve 10K and be provided to the users, the third communicating opening 203K of the filtering device 20K is communicated with the purified water outlet 2301K of the secondary filter 23K, so that the purified water generated by the secondary filter 23K can flow out through the third communicating opening 203K, and be provided to the users through a first water outlet 100K of the water purifier 2 of the present invention under the control of the control valve 10K. Preferably, the secondary filter 23K of the filtering device 20K of the water purifier 2 of the present invention is an external pressure type ultrafiltration filter. Accordingly, each ultrafiltration membrane filament 231K of the secondary filter 23K defines a membrane filament channel 2310K, and the membrane filament channels 2310K of the ultrafiltration membrane filaments 231K are all communicated with the purified water outlet 2301K of the secondary filter 23K, so that the purified water generated by each ultrafiltration membrane filament 231K of the secondary filter 23K can flow to the third communicating opening 203K of the filtering device 20K under the action of water pressure.

As shown in FIG.1A, FIG.2B to FIG.4D and FIG.10A to FIG.10B, accordingly, when the filtering device 20K of the water purifier 2 according to the first embodiment of the present invention is used to treat the raw water, the users can control the raw water flowing to the first communicating opening 201K of the filtering device 20K through the control valve 10K, and the raw water flows to the raw water channel 2101K of the filtering device 20K under the action of water pressure, then the purified water generated by the treatment of the primary filter 22K flows to the purified water channel 2201K under the action of water pressure, at this time, if the purified water inside the purified water channel 2201K cannot flow freely through the second communicating opening 202K of the filtering device 20K under the control of the control valve 10K, and the purified water generated by the secondary filter 23K can flow freely to the third communicating opening 203K, the purified water generated by the primary filter 22K will be further purified by the secondary filter 23K under the action of water pressure, and the purified water generated by the secondary filter 23K will flow out and be provided through the third communicating opening 203K. Accordingly, at this time, the water purifier 2 according to the first embodiment of the present invention is under a first purifying working state. On the other hand, if the purified water inside the purified water channel 2201K can flow freely through the second communicating opening 202K of the filtering device 20K under the control of the control valve 10K, and the purified water generated by the secondary filter 23K cannot flow freely to the third communicating opening 203K, the purified water generated by the primary filter 22K will flow out and be provided through the second communicating opening 202K under the action of water pressure. Accordingly, at this time, the water purifier 2 according to the first embodiment of the present invention is under a second purifying working state.

As shown in FIG.1A, FIG.2B to FIG.4D and FIG.10D, further, the water purifier 2 according to the first embodiment of the present invention has a back-flushing working state, wherein when the water purifier 2 of the present invention is under the back-flushing working state, the users can control the raw water flowing to the second communicating opening 202K of the filtering device 20K through the control valve 10K, and the raw water flows to the purified water channel 2201K of the filtering device 20K through the second communicating opening 202K under the action of water pressure, at this time, under the control of the control valve 10K, the purified water generated by the secondary filter 23K cannot flow freely to the third communicating opening 203K, the raw water inside the purified water channel 2201K back-flushes the primary filter 22K under the action of water pressure, the generated waste water flows to the first communicating opening 201K of the filtering device 20K through the raw water channel 2101K under the action of water pressure, and flows out through the first communicating opening 201K under the control of the control valve 10K. It should be understood that the back-flushing mentioned herein refers to the flow direction of the raw water flowing through the primary filter 22K during the primary filter 22K being flushed is opposite to the flow direction of the raw water flowing through the primary filter 22K during the raw water being purified by the primary filter 22K.

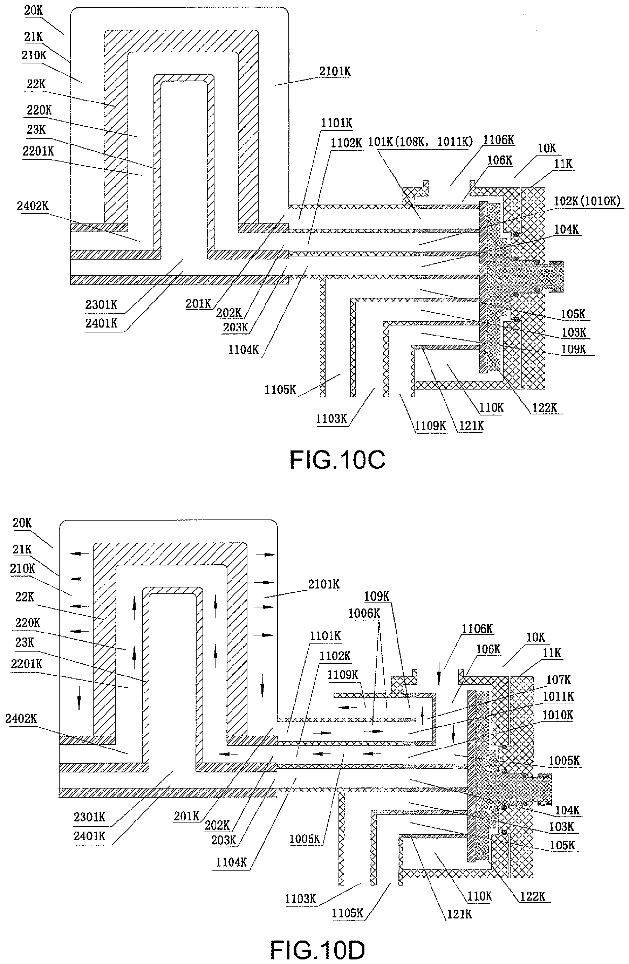

As shown in FIG.10C, further, the water purifier 2 according to the first embodiment of the present invention has a standby working state, wherein when the water purifier 2 of the present invention is under the standby working state, the users can control the raw water not to flow to the filtering device 20K through the control valve 10K.

Significantly, if the secondary filter 23K of the filtering device 20K of the water purifier 2 of the present invention is the external pressure type ultrafiltration filter, and the purified water generated by the primary filter 22K is able to flow out freely through the second communicating opening 202K of the filtering device 20K, when the purified water generated by the primary filter 22K flows out through the second communicating opening 202K of the filtering device 20K, the purified water generated by the primary filter 22K will flow through the ultrafiltration membrane filaments 231K of the secondary filter 23K, so that the ultrafiltration membrane filaments 231K of the secondary filter 23K are flushed by the purified water generated by the primary filter 22K. In other words, at this time, the filtering device 20K of the water purifier 2 of the present invention allows the purified water generated by the primary filter 22K to be provided, at the same time, the purified water generated by the primary filter 22K is further used to flush the ultrafiltration membrane filaments 231K of the secondary filter 23K. Those skilled in the art know that the faucet water purifier directly installed on the tap water faucet has a small size due to the restriction of the using space where it is located in. When the faucet water purifier adopts the ultrafiltration filter, especially the ultrafiltration filter with ultrafiltration membrane filaments as the main filter elements, the ultrafiltration filter is easily to stink and can no longer be used due to the accumulation of tap water impurities attached to the surface of its ultrafiltration membrane filaments, such as microorganisms, etc. The filtering device 20K of the water purifier 2 of the present invention allows the purified water generated by the primary filter 22K to be provided, at the same time, the purified water generated by the primary filter 22K is further used to flush the surfaces of the ultrafiltration membrane filaments 231K of the secondary filter 23K, so as to prevent impurities such as microorganisms in the tap water from accumulating on the secondary filter 23K and prevent it from being unusable because of stinking. In other words, the water purifier 2 of the present invention uses the ingenious structural design of its filtering device 20K to solve the issue that when the traditional faucet water purifier uses the ultrafiltration filter (or ultrafiltration membrane filaments) to filter water, it is easy to cause impurities to accumulate and cannot be discharged in time and cause stinking, so that the ultrafiltration membrane filaments 231K of the secondary filter 23K have a better filtering effect and the service life of the secondary filter 23K is prolonged. More importantly, because of the small size of the faucet water purifier, with the structure of the traditional faucet water purifier, when it uses the ultrafiltration filter to treat the raw water such as tap water, it will block in a short time. The water purifier 2 of the present invention uses the purified water generated by the primary filter 22K to flush the ultrafiltration membrane filaments 231K of the secondary filter 23K, which significantly improves the issue that the impurities accumulate and cannot be discharged in time when the traditional faucet water purifier uses the ultrafiltration filter (or ultrafiltration membrane filaments) to filter water, so that it is possible for the faucet water purifier to use the ultrafiltration filter to filter the water. The greater significance of the water purifier 2 of the present invention is that it may enable the consumers to get rid of the large and expensive traditional desktop water purifier. In addition, since the primary filter 22K of the water purifier 2 of the present invention is preferably a ceramic filter, although the purified water generated by its filtration is not suitable for direct drinking, the raw water is also preliminarily filtered and purified, and can be used for washing vegetables, washing face or mouth and so on.

As shown in FIG.2B to FIG.4D, the filtering device 20K of the water purifier 2 according to the first embodiment of the present invention further comprises a base 24K, wherein the secondary filter 23K is provided at the base 24K, and the base 24K defines a first water cavity 2401K, wherein the first water cavity 2401K of the base 24K is communicated with the third communicating opening 203K of the filtering device 20K and the purified water outlet 2301K of the secondary filter 23K respectively. In other words, the membrane filament channel 2310K of the ultrafiltration membrane filament 231K of the secondary filter 23K is communicated with the third communicating opening 203K of the filtering device 20K through the purified water outlet 2301K of the secondary filter 23K and the first water cavity 2401K of the base 24K, so that the secondary purified water generated by the secondary filter 23K can flow out through the third communicating opening 203K. Preferably, the third communicating opening 203K is provided at the base 24K. More preferably, the secondary filter 23 is water-sealedly provided at the base 24K, and the secondary filter 23K and the base 24K define the first water cavity 2401K therebetween.

As shown in FIG.2B to FIG.4D, the primary filter 22K of the filtering device 20K of the water purifier 2 according to the first embodiment of the present invention is provided at the base 24K, and the base 24K further defines a second water cavity 2402K, wherein the second water cavity 2402K of the base 24K is communicated with the second communicating opening 202K of the filtering device 20K and the purified water channel 2201K respectively. In other words, the purified water channel 2201K of the filtering device 20K is communicated with the second communicating opening 202K of the filtering device 20K through the second water cavity 2402K of the base 24K, so that the purified water generated by the primary filter 22K can flow out through the second communicating opening 202K. It should be understood that when the control valve 10K of the water purifier 2 of the present invention controls the raw water back-flushing the primary filter 22K, the raw water flows into the filtering device 20K through the second communicating opening 202K of the filtering device 20K, and flows into the purified water channel 2201K of the filtering device 20K through the second water cavity 2402K of the base 24K, and the raw water back-flushes the primary filter 22K under the action of water pressure, and the generated waste water flows to the first communicating opening 201K of the filtering device 20K through the raw water channel 2101K under the action of water pressure. Preferably, the second communicating opening 202K is provided at the base 24K.

As shown in FIG.2B to FIG.4D, the primary filter 22K of the filtering device 20K of the water purifier 2 according to the first embodiment of the present invention is water-sealedly provided at the base 24K, so as to prevent the raw water inside the raw water channel 2101K from flowing to the purified water channel 2201K. More preferably, the primary filter 22K is detachably provided at the base 24K, so that the primary filter 22K can be replaced. Alternatively, the primary filter 22K is water-sealedly provided at the outer casing 21K, so that the raw water can only flow inside the raw water channel 2101K. Alternatively, the primary filter 22K is detachably provided at the outer casing 21K. Alternatively, the primary filter 22K is integrally provided at the base 24K. Alternatively, the primary filter 22K is integrally provided at the outer casing 21K.

As shown in FIG.2B to FIG.4D, the secondary filter 23K of the filtering device 20K of the water purifier 2 according to the first embodiment of the present invention further comprises a shell 232K, wherein the ultrafiltration membrane filaments 231K of the secondary filter 23K are provided inside the shell 232K, and the shell 232K has at least one water inlet 2320K, wherein the inner space and the outer space of the shell 232K are communicated by the water inlet 2320K of the shell 232K, so that when the water purifier 2 of the present invention is under the first purifying working state, the purified water generated by the primary filter 22K flows to the ultrafiltration membrane filament 231K through the water inlet 2320K of the shell 232K under the action of water pressure. Therefore, the water inlet 2320K of the shell 232K of the secondary filter 23K can be regard as a part of the purified water channel 2201K of the filtering device 20K.

As shown in FIG.2B to FIG.4D, the base 24K of the filtering device 20K of the water purifier 2 according to the first embodiment of the present invention comprises a bottom portion 241K and a first spacing portion 242K, wherein the first spacing portion 242K is provided at the bottom portion 241K and is extended from the bottom portion 241K, wherein the first spacing portion 242K is provided between the first water cavity 2401K and the second water cavity 2402K, so as to separate the first water cavity 2401K and the second water cavity 2402K from each other. Preferably, the base 24K further comprises a second spacing portion 243K provided at the bottom portion 241K and extended from the bottom portion 241K, wherein the second water cavity 2402K is provided between the first spacing portion 242K and the second spacing portion 243K, and the first water cavity 2401K is defined by the embracement of the first spacing portion 242K. More preferably, the first spacing portion 242K and the second spacing portion 243K are both ring-shaped, and the second spacing portion 243K is provided at the outer side of the first spacing portion 242K.

As shown in FIG.2B to FIG.4D, the purified water channel 2201K of the filtering device 20K of the water purifier 2 according to the first embodiment of the present invention, the second water cavity 2402K of the base 24K and the second communicating opening 202K of the filtering device 20K define a primary purified water route, the membrane filament channel 2310K of the ultrafiltration membrane filament 231K of the secondary filter 23K, the purified water outlet 2301K of the secondary filter 23K, the first water cavity 2401K of the base 24K and the third communicating opening 203K of the filtering device 20K define a secondary purified water route. It should be understood that the primary purified water route and the secondary purified water route are separated from each other, so as to prevent the water inside the primary purified water route and the secondary purified water route from mixing, in other words, the primary purified water route and the secondary purified water route are separated from each other, so as to prevent the purified water generated by the primary filter 22K from being mixed into the purified water generated by the secondary filter 23K.

As shown in FIG.2B to FIG.4D, the first communicating opening 201K of the filtering device 20K of the water purifier 2 according to the first embodiment of the present invention is preferably provided at the base 24K. Alternatively, the first communicating opening 201K of the filtering device 20K is provided at the outer casing 21K. As shown in FIG.2B to FIG.4D, the outer casing 21K of the filtering device 20K of the water purifier 2 according to the first embodiment of the present invention is preferably provided at the edge of the base 24K. Preferably, the outer casing 21K is integrated with the base 24K.

As shown in FIG.2B to FIG.4D, the base 24K of the water purifier 2 according to the first embodiment of the present invention is further provided with a communicating portion 246K, wherein the communicating portion 246K has a first communicating channel 2461K, a second communicating channel 2462K and a third communicating channel 2463K, wherein the first communicating channel 2461K is provided to be communicated with the first communicating opening 201K and the raw water channel 2101K respectively, the second communicating channel 2462K is provided to be communicated with the second communicating opening 202K and the second water cavity 2402K respectively, the third communicating channel 2463K is provided to be communicated with the third communicating opening 203K and the first water cavity 2401K respectively. Preferably, the first communicating channel 2461K is provided between the first communicating opening 201K and the raw water channel 2101K, the second communicating channel 2462K is provided between the second communicating opening 202K and the second water cavity 2402K, the third communicating channel 2463K is provided between the third communicating opening 203K and the first water cavity 2401K.

As shown in FIG.2B to FIG.3D, further, the filtering device 20K of the water purifier 2 according to the first embodiment of the present invention comprises a brush 26K, wherein the brush 26 comprises a brush body 261K, wherein the brush body 261K is rotatablely provided between the outer casing 21K and the primary filter 22K, so that when the brush body 261K is rotated, the outer surface of the primary filter 22K facing the outer casing 21K can be flushed. Further, the brush body 261K of the brush 26K of the filtering device 20K comprises a bristle holder 2611K and a plurality of brush bristles 2612K, wherein the brush bristles 2612K of the brush body 261K of the brush 26K are provided at the bristle holder 2611K, and the brush bristles 2612K are provided facing the primary filter 22K, so that when the brush body 261K is rotated, the brush bristles 2612K can flush the outer surface of the primary filter 22K. It should be understood that when the primary filter 22K of the filtering device 20K of the water purifier 2 of the present invention being back-flushed, rotating the brush body 261K can make the outer surface of the primary filter 22K facing the outer casing 21K to be flushed clean. In other words, combining the brush 26K with the back-flushing for the primary filter 22K of the filtering device 20K of the water purifier 2 of the present invention by the raw water can effectively back-flush the primary filter 22K of the filtering device 20K of the water purifier 2 of the present invention, so as to improve the service life of the filtering device 20K of the water purifier 2 of the present invention.

As shown in FIG.2B to FIG.3D, the brush 26K of the filtering device 20K of the water purifier 2 according to the first embodiment of the present invention is further provided with an operation end 262K provided at the bristle holder 2611K, the outer casing 21K of the filtering device 20K has an operation hole 211K, the operation end 262K is extended from the bristle holder 2611K, and crosses through the operation hole 211K of the outer casing 21K, so that the users can rotate the operation end 262K through the driving mechanism such as rotating button, rotating handle, etc., so as to drive the brush body 261K to rotate along the outer surface of the primary filter 22K. It should be understood that the operation end 262K is extended from the bristle holder 2611K, and crosses through the operation hole 211K of the outer casing 21K.

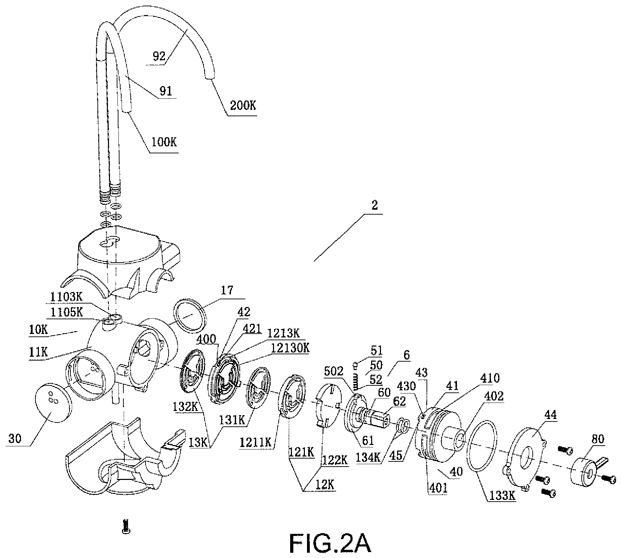

As shown in FIG.2A, FIG.5A to FIG.12F, the control valve 10K of the water purifier 2 according to the first embodiment of the present invention comprises a valve body 11K and a valve core 12K, wherein the valve body 11K defines a valve cavity 110K, a first opening 1101K, a second opening 1102K, a third opening 1103K, a fourth opening 1104K, a fifth opening 1105K, a raw water inlet 1106K and a draining opening 1109K, wherein the valve core 12K is provided inside the valve cavity 110K, wherein the first opening 1101K of the valve body 11K is adapted to be communicated with the first communicating opening 201K of the filtering device20K, the second opening 1102K of the valve body 11K is adapted to be communicated with the second communicating opening 202K of the filtering device 20K, the fourth opening 1104K of the valve body 11K is adapted to be communicated with the third communicating opening 203K of the filtering device 20K, the fifth opening 1105K of the valve body 11K is adapted to be communicated with a first water outlet 100K, the third opening 1103K of the valve body 11K is adapted to be communicated with a second water outlet 200K, the raw water inlet 1106K of the valve body 11K is adapted to be communicated with a raw water source.

As shown in FIG.1A to FIG.1D, the water purifier 2 of the present invention further comprises a connecting tube 70, wherein the connecting tube 70 defines a raw water route 701 adapted to be communicated with the raw water source (such as the tap water pipe 3), wherein the control valve 10K and the faucet 1 are respectively connected with the connecting tube 70, and the raw water inlet 1106K of the control valve 10K and the cold water pipe 16 of the faucet 1 are respectively communicated with the raw water route 701, so that the raw water can flow to the control valve 10K and the cold water pipe 16 of the faucet 1 through the raw water route 701.

As shown in FIG.1A to FIG.1D, the connecting tube 70 of the water purifier 2 according to the first embodiment of the present invention further defines a first communicating opening 710, a second communicating opening 720 and a third communicating opening 730, wherein the first communicating opening 710 is adapted to be respectively communicated with the raw water inlet 1106K of the control valve 10K and the raw water route 701, the second communicating opening 720 is adapted to be respectively communicated with the cold water pipe 16 of the faucet 1 and the raw water route 701, the third communicating opening 730 is adapted to be respectively communicated with the raw water route 701 and the raw water source. Accordingly, the water purifier 2 and the faucet 1 of the present invention can both be communicated with the raw water source through the connecting tube 70.

As shown in FIG.1A to FIG.1D, the connecting tube 70 of the water purifier 2 according to the first embodiment of the present invention is further provided with a first connecting end 71, a second connecting end 72 and a third connecting end 73, wherein the first connecting end 71 of the connecting tube 70 defines the first communicating opening 710, the second connecting end 72 defines the second communicating opening 720, the third connecting end 73 defines the third communicating opening 730, wherein the control valve 10K is connected with the first connecting end 71 of the connecting tube 70, the faucet 1 is connected with the second connecting end 72 of the connecting tube 70. In other words, the control valve 10K and the faucet 1 obtain the raw water through the raw water route 701 respectively, and the flow of the raw water to the filtering device 20K is not controlled by the faucet 1. Accordingly, the faucet 1, the water purifier 2 and the connecting tube 70 can be regarded as defining a three-way structure. Preferably, the water purifier 2 and the faucet 1 of the present invention are integrated together through the connecting tube 70, and communicate with the tap water pipe 3 through the connecting tube 70. Therefore, the water purifier 2 of the present invention can be regarded as a faucet water purifier that can be integrated with the faucet 1 for using and has the function of controlling the flow rate of the raw water. In addition, since the water purifier 2 and the faucet 1 of the present invention are integrated together through the connecting tube 70, the faucet 1 can be regarded as an element or assembly unit of the water purifier 2 of the present invention. Preferably, the cold water pipe 16 is integrated with the connecting tube 70. As shown in FIG.1A to FIG.1D, the faucet 1 of the water purifier 2 according to the first embodiment of the present invention further preferably comprises a hot water pipe 18. In some embodiments, the faucet 1 is an electric heating faucet.

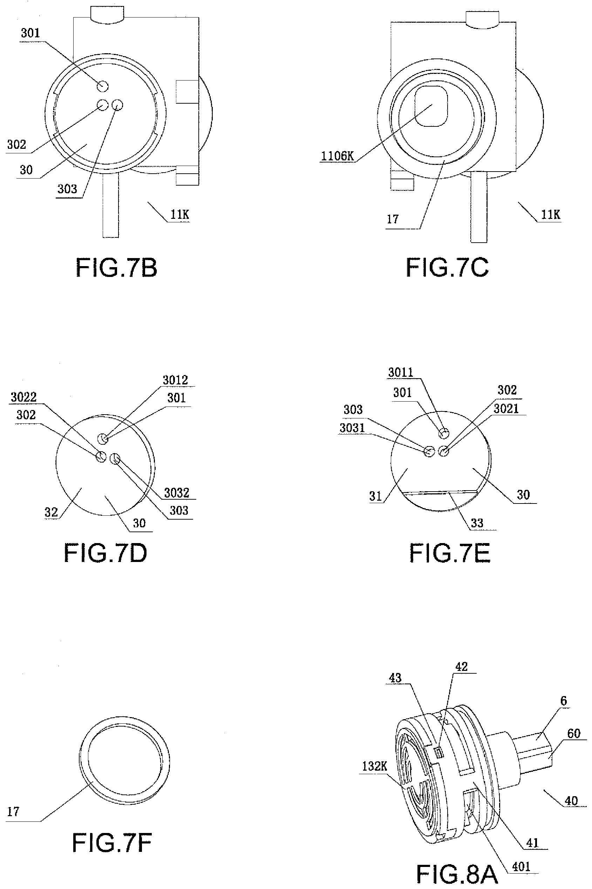

As shown in FIG.7C to FIG.7F, the water purifier 2 according to the first embodiment of the present invention further comprises a sealing gasket 17, wherein the sealing gasket 17 is provided between the connecting tube 70 and the control valve 10K, so as to achieve the seal between the connecting tube 70 and the control valve 10K. As shown in FIG.1A, FIG.2A, FIG.7C to FIG.7F, the water purifier 2 according to the first embodiment of the present invention further comprises a first water outlet elbow tube 91 and a second water outlet elbow tube 92, wherein the first water outlet elbow tube 91 is communicated with the fifth opening 1105K of the control valve 10K, so that the secondary purified water generated by the secondary filter 23K of the filtering device 20K can be provided through the first water outlet elbow tube 91, the second water outlet elbow tube 92 is communicated with the third opening 1103K of the control valve 10K, so that the purified water generated by the primary filter 22K of the filtering device 20K can be provided through the second water outlet elbow tube 92. Preferably, the first water outlet elbow tube 91 of the water purifier 2 of the present invention defines the first water outlet 100K, and the second water outlet elbow tube 92 defines the second water outlet 200K.

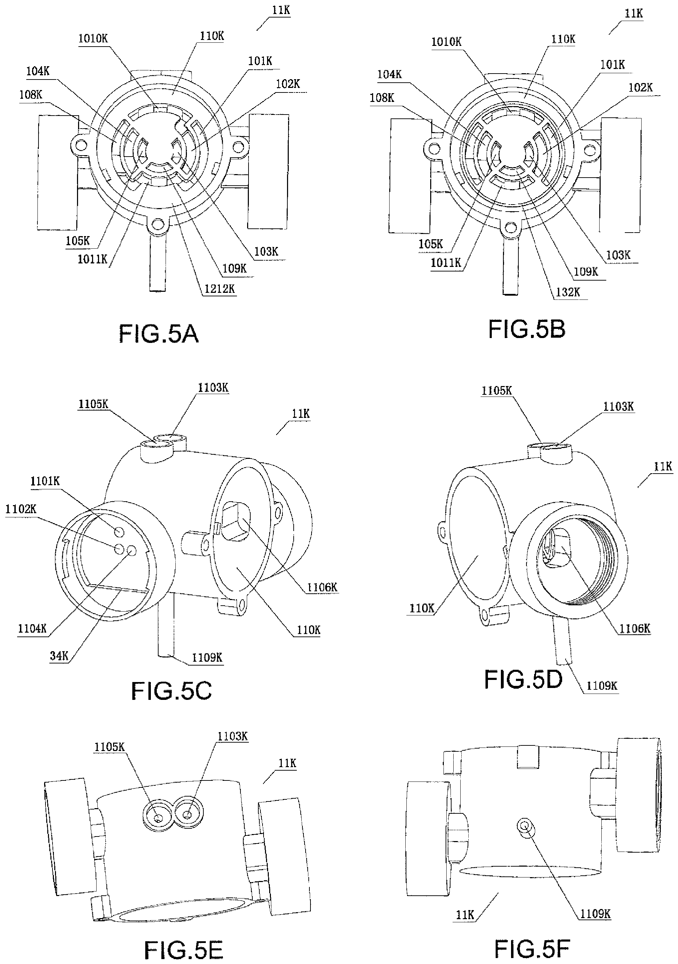

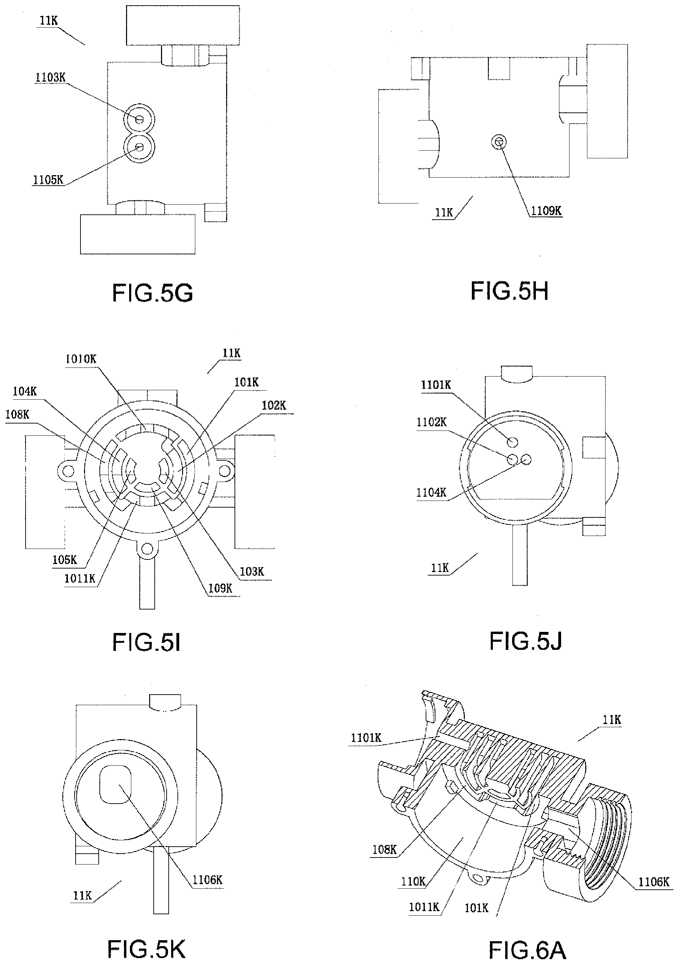

As shown in FIG.5A to FIG.6F, and FIG.10A, the control valve 10K of the water purifier 2 according to the first embodiment of the present invention has a first purifying working position, wherein when the control valve 10K is under the first purifying working position, the valve core 12K of the control valve 10K defines a first communicating passage 1001K and a second communicating passage 1002K, wherein the first communicating passage 1001K is communicated with the first opening 1101K of the valve body 11K and the raw water inlet 1106K respectively, the second communicating passage 1002K is communicated with the fourth opening 1104K of the valve body 11K and the fifth opening 1105K respectively. Further, when the control valve 10K is under the first purifying working position, the second opening 1102K of the valve body 11K is not communicated with the third opening 1103K. In other words, when the control valve 10K is under the first purifying working position, the second opening 1102K of the valve body 11K cannot communicate with the third opening 1103K. Accordingly, when the control valve 10K is under the first purifying working position, under the action of water pressure, the raw water or the tap water flows from the raw water inlet 1106K of the valve body 11K of the control valve 10K, and flows to the first opening 1101K of the valve body 11K through the first communicating passage 1001K, so as to further flow to the raw water channel 2101K of the filtering device 20K through the first communicating opening 201K of the filtering device 20K, after the raw water flowing into the raw water channel 2101K is filtered by the primary filter 22K, the generated purified water flows into the purified water channel 2201K. Further, when the control valve 10K is under the first purifying working position, the second opening 1102K of the valve body 11K cannot communicate with the third opening 1103K, so that the purified water inside the purified water channel 2201K cannot flow freely through the second communicating opening 202K of the filtering device 20K under the control the control valve 10K. Therefore, the purified water generated by the primary filter 22K is further purified and treated by the secondary filter 23K, the purified water generated by the secondary filter 23K flows out from the third communicating opening 203K through the purified water outlet 2301K, and flows through the fourth opening 1104K, the second communicating passage 1002K and the fifth opening 1105K in sequence, so that the purified water generated by the secondary filter 23K can be provided through the first water outlet 100K communicated with the fifth opening 1105K. Preferably, the secondary filter 23K is an ultrafiltration filter. Accordingly, the purified water generated by the secondary filter 23K can be directly drunk. It should be understood that when the control valve 10K of the water purifier 2 according to the first embodiment of the present invention is controlled under the first purifying working position, the water purifier 2 of the present invention is controlled under its first purifying working state.

As shown in FIG.5A to FIG.6F, and FIG.10B, the control valve 10K of the water purifier 2 according to the first embodiment of the present invention is further provided with a second purifying working position, wherein when the control valve 10K is under the second purifying working position, the valve core 12K of the control valve 10K defines a third communicating passage 1003K and a fourth communicating passage 1004K, wherein the third communicating passage 1003K is communicated with the first opening 1101K of the valve body 11K and the raw water inlet 1106K respectively, the fourth communicating passage 1004K is communicated with the second opening 1102K of the valve body 11K and the third opening 1103K respectively. Further, when the control valve 10K is under the second purifying working position, the fourth opening 1104K of the valve body 11K is not communicated with the fifth opening 1105K. In other words, when the control valve 10K is under the second purifying working position, the fourth opening 1104K of the valve body 11K cannot communicate with the fifth opening 1105K. Accordingly, when the control valve 10K is under the second purifying working position, under the action of water pressure, the raw water or the tap water flows from the raw water inlet 1106K of the valve body 11K of the control valve 10K, and flows to the first opening 1101K of the valve body 11K through the third communicating passage 1003K, and further flows to the raw water channel 2101K of the filtering device 20K through the first communicating opening 201K of the filtering device 20K, after the raw water flowing into the raw water channel 2101K is filtered by the primary filter 22K, the generated purified water flows into the purified water channel 2201K. At this time, since the second opening 1102K of the valve body 11K is communicated with the third opening 1103K through the fourth communicating passage 1004K, therefore, the purified water generated by the primary filter 22K flows out through the second communicating opening 202K after flowing into the purified water channel 2201K, and flows through the second opening 1102K, the fourth communicating passage 1004K and the third opening 1103K in sequence, so that the purified water generated by the primary filter 22K can be provided through the second water outlet 200K communicated with the third opening 1103K. It should be understood that when the control valve 10K of the water purifier 2 according to the first embodiment of the present invention is controlled under the second purifying working position, the water purifier 2 of the present invention is controlled under its second purifying working state.

As shown in FIG.5A to FIG.6F, and FIG.10C, the control valve 10K of the water purifier 2 according to the first embodiment of the present invention is further provided with a standby working position, wherein when the water purifier 2 of the present invention is under the standby working position, the control valve 10K controls the raw water not to flow to the filtering device 20K and does not provide the raw water or the purified water to the users. Further, when the control valve 10K is under the standby working position, the raw water inlet 1106K is not communicated with the first opening 1101K, the second opening 1102K, the third opening 1103K, the fourth opening 1104K and the fifth opening 1105K. It should be understood that when the control valve 10K of the water purifier 2 according to the first embodiment of the present invention is controlled under the standby working position, the water purifier 2 of the present invention is controlled under its standby working state.

As shown in FIG.5A to FIG.6F, and FIG.10D, the control valve 10K of the water purifier 2 according to the first embodiment of the present invention is further provided with a back-flushing working position, wherein when the control valve 10K is under the back-flushing working position, the valve core 12K of the control valve 10K defines a fifth communicating passage 1005K and a sixth communicating passage 1006K, wherein the fifth communicating passage 1005K is communicated with the second opening 1102K of the valve body 11K and the raw water inlet 1106K respectively, the sixth communicating passage 1006K is communicated with the first opening 1101K of the valve body 11K and the draining opening 1109K respectively. Accordingly, when the control valve 10K is under back-flushing working position, under the action of water pressure, the raw water or the tap water flows from the raw water inlet 1106K of the valve body 11K of the control valve 10K, and flows to the second opening 1102K of the valve body 11K through the fifth communicating passage 1005K, and further flows into the filtering device 20K through the second communicating opening 202K of the filtering device 20K, the raw water flows into the primary filter 22K through the purified water channel 2201K of the filtering device 20K under the action of water pressure, after back-flushing the primary filter 22K, the generated waste water flows into the raw water channel 2101K. At this time, since the first opening 1101K of the valve body 11K is communicated with the draining opening 1109K through the sixth communicating passage 1006K, therefore, the waste water generated by using the raw water to back-flush the primary filter 22K flows out through the first communicating opening 201K after flowing into the raw water channel 2101K, and flows through the first opening 1101K, the sixth communicating passage 1006K and the draining opening 1109K in sequence, so that the waste water generated by using the raw water to back-flush the primary filter 22K can flow out through the draining opening 1109K. It should be understood that when the control valve 10K of the water purifier 2 according to the first embodiment of the present invention is controlled under the back-flushing working position, the water purifier 2 of the present invention is controlled under its back-flushing working state.

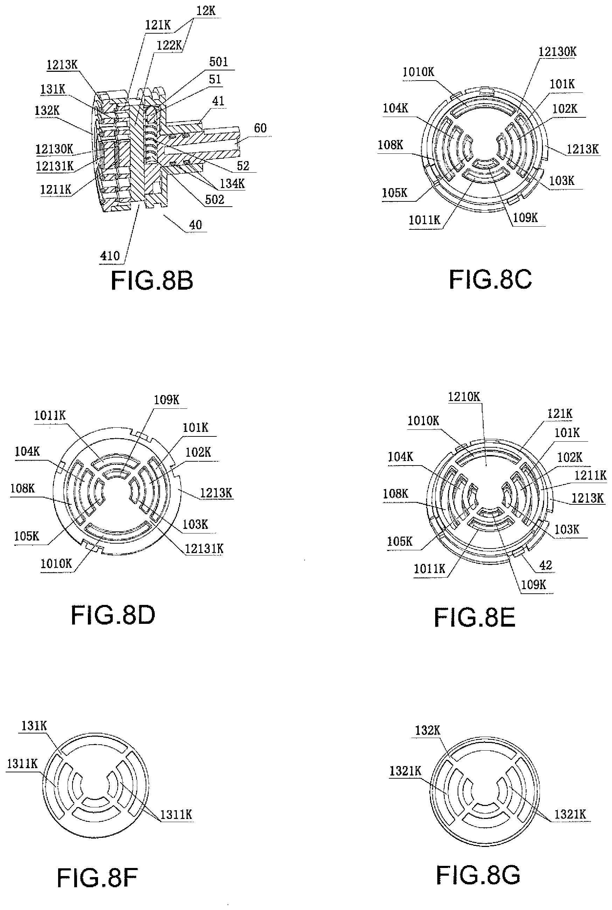

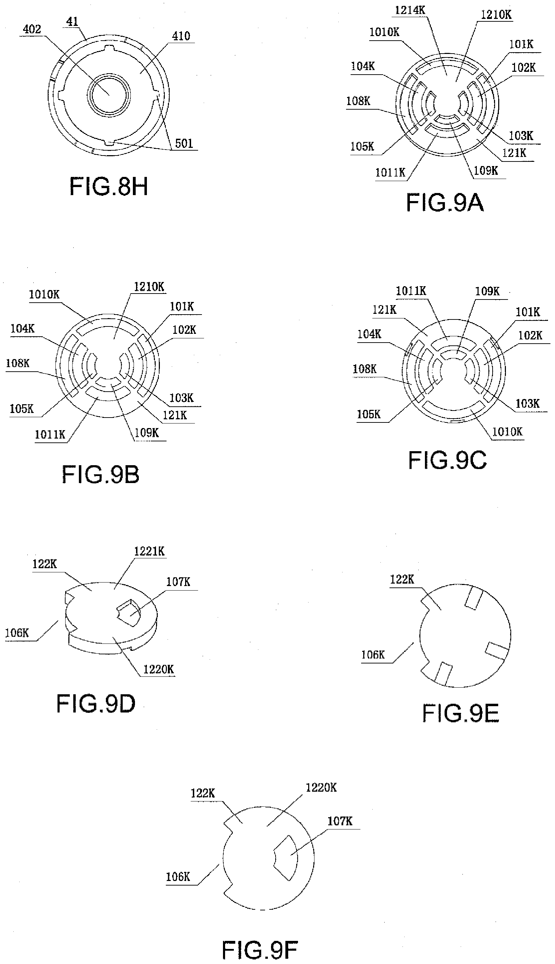

As shown in FIG.8A to FIG.12F, the control valve 10K of the water purifier 2 according to the first embodiment of the present invention is a plane valve, wherein the valve core 12K of the plane valve 10K further comprises a fixed disk 121K and a rotatable disk 122K, wherein the fixed disk 121K has a first fluid control surface 1210K, the rotatable disk 122K has a second fluid control surface 1220K, wherein the rotatable disk 122K and the fixed disk 121K are both provided inside the valve cavity 110K, wherein the second fluid control surface 1220K of the rotatable disk 122K is provided at the first fluid control surface 1210K of the fixed disk 121K, and the rotatable disk 122K is provided to be capable of rotating relative to the fixed disk 121K. Preferably, the raw water inlet 1106K is communicated with the valve cavity 110K of the valve body 11K.

As shown in FIG.5A to FIG.12F, the plane valve 10K of the water purifier 2 according to the first embodiment of the present invention has a first channel 101K, a second channel 102K, a third channel 103K, a fourth channel 104K, a fifth channel 105K, a sixth channel 106K and a seventh channel 107K, wherein the first channel 101K, the second channel 102K, the third channel 103K, the fourth channel 104K and the fifth channel 105K are provided at the fixed disk 121K respectively and are extended from the first fluid control surface 1210K of the fixed disk 121K respectively; the sixth channel 106K and the seventh channel 107K are provided at the rotatable disk 122K respectively and are extended from the second fluid control surface 1220K of the rotatable disk 122K respectively, wherein the first channel 101K is communicated with the first opening 1101K, the second channel 102K is communicated with the second opening 1102K, the third channel 103K is communicated with the third opening 1103K, the fourth channel 104K is communicated with the fourth opening 1104K, the fifth channel 105K is communicated with the fifth opening 1105K, the sixth channel 106K is communicated with the raw water inlet 1106K. Preferably, the raw water inlet 1106K and the sixth channel 106K are communicated with the valve cavity 110K respectively, so that the sixth channel 106K is communicated with the raw water inlet 1106K. More preferably, the seventh channel 107K of the rotatable disk 122K is preferably a communicating blind hole.

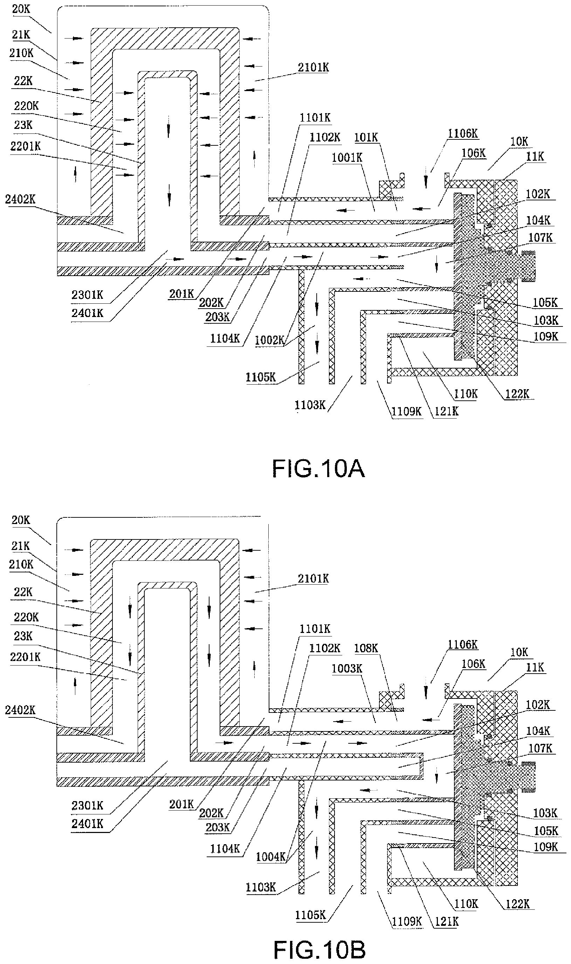

As shown in FIG.10A and FIG.12A to FIG.12B, the rotatable disk 122K of the plane valve 10K of the water purifier 2 according to the first embodiment of the present invention is capable of rotating relative to the fixed disk 121K, so that the plane valve 10K has a first purifying working position, wherein when the plane valve 10K of the water purifier 2 according to the first embodiment of the present invention is under the first purifying working position, the sixth channel 106K of the plane valve 10K is communicated with the first channel 101K, so as to define the first communicating passage 1001K communicated with the raw water inlet 1106K and the first opening 1101K respectively, the seventh channel 107K is communicated with the fourth channel 104K and the fifth channel 105K respectively, so as to define the second communicating passage 1002K communicated with the fourth opening 1104K and the fifth opening 1105K respectively. As shown in FIG.12A to FIG.12B, when the plane valve 10K is under the first purifying working position, the second channel 102K and the third channel 103K of the plane valve 10K are blocked (or closed) by the rotatable disk 122K respectively. Accordingly, the primary purified water generated by the primary filter 22K will flow to the secondary filter 23K under the action of water pressure, and be provided through the fourth opening 1104K, the second communicating passage 1002K and the fifth opening 1105K after being further purified and treated by the secondary filter 23K.

As shown in FIG.10B and FIG.12C to FIG.12D, the plane valve 10K of the water purifier 2 according to the first embodiment of the present invention is further provided with an eighth channel 108K, wherein the eighth channel 108K is provided at the fixed disk 121K and is extended from the first fluid control surface 1210K of the fixed disk 121K, wherein the eighth channel 108K is communicated with the first opening 1101K. The plane valve 10K of the water purifier 2 according to the first embodiment of the present invention is further provided with a second purifying working position, wherein when the plane valve 10K is under the second purifying working position, the sixth channel 106K of the plane valve 10K is communicated with the eighth channel 108K, so as to define the third communicating passage 1003K communicated with the raw water inlet 1106K and the first opening 1101K respectively, the seventh channel 107K is communicated with the second channel 102K and the third channel 103K respectively, so as to define the fourth communicating passage 1004K communicated with the second opening 1102K and the third opening 1103K respectively. When the plane valve 10K of the water purifier 2 according to the first embodiment of the present invention is under the second purifying working position, the fourth channel 104K and the fifth channel 105K of the plane valve 10K are blocked (or closed) by the rotatable disk 122K respectively, so that the water inside the fourth channel 104K cannot flow freely, accordingly, the primary purified water generated by the primary filter 22K will flow to the second opening 1102K under the action of water pressure, and be provided through the fourth communicating passage 1004K and the third opening 1103K.

As shown in FIG.10C to FIG.12E, the plane valve 10K of the water purifier 2 according to the first embodiment of the present invention is further provided with a standby working position, wherein when the plane valve 10K is under the standby working position, the sixth channel 106K and the seventh channel 107K of the plane valve 10K are both blocked by the first fluid control surface 1210K of the fixed disk 121 K, so that the raw water can only flow to the raw water inlet 1106K. Further, when the plane valve 10K is under the standby working position, the first channel 101K, the second channel 102K, the third channel 103K, the fourth channel 104K, the fifth channel 105K and the eighth channel 108K of the fixed disk 121K are blocked (or closed) by the rotatable disk 122K respectively. That is, when the plane valve 10K of the water purifier 2 according to the first embodiment of the present invention is under the standby working position, the plane valve 10K is capable of preventing the raw water from flowing through the plane valve 10K, so that the plane valve 10K can control the raw water not to flow to the filtering device 20K and does not provide the raw water or the purified water to the users.

As shown in FIG.10D to FIG.12F, the plane valve 10K of the water purifier 2 according to the first embodiment of the present invention is further provided with a ninth channel 109K, a tenth channel 1010K and an eleventh channel 1011K, wherein the ninth channel 109K, the tenth channel 1010K and the eleventh channel 1011K are provided at the fixed disk 121K respectively and are extended from the first fluid control surface 1210K of the fixed disk 121K respectively, wherein the ninth channel 109K is communicated with the draining opening 1109K, the tenth channel 1010K is communicated with the second opening 1102K, the eleventh channel 1011K is communicated with the first opening 1101K. The plane valve 10K of the water purifier 2 according to the first embodiment of the present invention is further provided with a back-flushing working position, wherein when the plane valve 10K is under the back-flushing working position, the sixth channel 106K of the plane valve 10K is communicated with the tenth channel 1010K, so as to define the fifth communicating passage 1005K communicated with the raw water inlet 1106K and the second opening 1102K respectively, the seventh channel 107K is communicated with the ninth channel 109K and the eleventh channel 1011K respectively, so as to define the sixth communicating passage 1006K communicated with the first opening 1101K and the draining opening 1109K respectively. As shown in FIG.12F, when the plane valve 10K of the water purifier 2 according to the first embodiment of the present invention is under the back-flushing working position, the first channel 101K, the second channel 102K, the third channel 103K, the fourth channel 104K, the fifth channel 105K and the eighth channel 108K of the plane valve 10K are blocked (or closed) by the rotatable disk 122K respectively.

As shown in FIG.9A to FIG.9F and FIG.11A to FIG.11D, the first fluid control surface 1210K of the fixed disk 121K of the plane valve 10K of the water purifier 2 according to the first embodiment of the present invention defines an inner portion 12101K, an extending portion 12102K extended outward from the inner portion 12101K and an edge portion 12103K extended outward from the extending portion 12102K, wherein the first channel 101K, the eighth channel 108K and the tenth channel 1010K of the plane valve 10K are extended from the edge portion 12103K of the first fluid control surface 1210K of the fixed disk 121K respectively, the second channel 102K, the third channel 103K, the fourth channel 104K, the fifth channel 105K, the ninth channel 109K and the eleventh channel 1011K are extended from the extending portion 12102K of the first fluid control surface 1210K of the fixed disk 121K respectively, the second fluid control surface 1220K of the rotatable disk 122K of the plane valve 10K defines an inner region 12201K, an extending region 12202K extended outward from the inner region 12201K and an edge region 12203K extended outward from the extending region 12202K, wherein the sixth channel 106K of the plane valve 10K is extended from the edge region 12203K of the second fluid control surface 1220K of the rotatable disk 122K, the seventh channel 107K is extended from the extending region 12202K of the second fluid control surface 1220K of the rotatable disk 122K. Further, when the second fluid control surface 1220K of the rotatable disk 122K is provided at the first fluid control surface 1210K of the fixed disk 121K, the inner portion 12101K of the first fluid control surface 1210K of the fixed disk 121K is directly facing the inner region 12201K of the second fluid control surface 1220K, the extending portion 12102K of the first fluid control surface 1210K of the fixed disk 121K is directly facing the extending region 12202K of the second fluid control surface 1220K, the edge portion 12103K of the first fluid control surface 1210K of the fixed disk 121K is directly facing the edge region 12203K of the second fluid control surface 1220K of the rotatable disk 122K. Preferably, the outer diameter of the rotatable disk 122K is the same as the outer diameter of the fixed disk 121K.

As shown in FIG.9A to FIG.9F and FIG.11A to FIG.11D, the first channel 101K, the second channel 102K, the third channel 103K, the fourth channel 104K, the fifth channel 105K, the eighth channel 108K, the ninth channel 109K, the tenth channel 1010K and the eleventh channel 1011K of the plane valve 10K of the water purifier 2 according to the first embodiment of the present invention are spacedly provided at the first fluid control surface 1210K of the fixed disk 121K; the sixth channel 106K and the seventh channel 107K of the plane valve 10K are spacedly provided at the second fluid control surface 1220K of the rotatable disk 122K.

As shown in FIG.5A to FIG.6E, the first opening 1101K, the second opening 1102K and the fourth opening 1104K of the plane valve 10K of the water purifier 2 according to the first embodiment of the present invention are provided at the same side of the valve body 11K of the plane valve 10K.

As shown in FIG.5C and FIG.7B to FIG.7E, the water purifier 2 according to the first embodiment of the present invention further comprises a guiding plate 30, wherein the guiding plate 30 is provided between the base 24K of the filtering device 20K and the valve body 11K of the plane valve 10K, wherein the guiding plate 30 is provided a first flow guide communicating hole 301, a second flow guide communicating hole 302 and a third flow guide communicating hole 303, wherein the first flow guide communicating hole 301 has a first flow guide port 3011 and a second flow guide port 3012, the second flow guide communicating hole 302 has a third flow guide port 3021 and a fourth flow guide port 3022, the third flow guide communicating hole 303 has a fifth flow guide port 3031 and a sixth flow guide port 3032, wherein the guiding plate 30 is further provided with a first side surface 31 and a second side surface 32, wherein the first flow guide port 3011, the third flow guide port 3021 and the fifth flow guide port 3031 are provided at the first side surface 31 of the guiding plate 30, the second flow guide port 3012, the fourth flow guide port 3022 and the sixth flow guide port 3032 are provided at the second side surface 32 of the guiding plate 30, wherein the first side surface 31 of the guiding plate 30 is provided facing the valve body 11K, the second side surface 32 is provided facing the base 24K. Further, the first flow guide port 3011 is provided to be adapted to be communicated with the first opening 1101K of the valve body 11K, the third flow guide port 3021 is provided to be adapted to be communicated with the second opening 1102K, the fifth flow guide port 3031 is provided to be adapted to be communicated with the fourth opening 1104K, the second flow guide port 3012 is provided to be adapted to be communicated with the first communicating opening 201K of the filtering device 20K, the fourth flow guide port 3022 is provided to be adapted to be communicated with the second communicating opening 202K, the sixth flow guide port 3032 is provided to be adapted to be communicated with the third communicating opening 203K. In other words, the first flow guide communicating hole 301 of the guiding plate 30 is communicated with the first opening 1101K and the first communicating opening 201K respectively, the second flow guide communicating hole 302 is communicated with the second opening 1102K and the second communicating opening 202K respectively, the third flow guide communicating hole 303 is communicated with the fourth opening 1104K and the third communicating opening 203K respectively. Preferably, the guiding plate 30 is made of sealing material, so as to be water-sealedly provided between the base 24 of the filtering device 20K and the control valve 10K, and then plays a role of water-sealediy sealing the connection between the base 24 of the filtering device 20K and the valve body 11K of the control valve 10K.

As shown in FIG.5C and FIG.7B to FIG.7E, the guiding plate 30 of the water purifier 2 according to the first embodiment of the present invention further comprises a positioning protrusion 33, wherein the positioning protrusion 33 is preferably provided at the first side surface 31, wherein the positioning protrusion 33 is provided to engage with the positioning groove 34K provided at the valve body 11K, so as to help the guiding plate 30 to be correctly provided between the valve body 11K of the control valve 10K and the base 24K of the filtering device 20K. It should be understood that when the positioning protrusion 33 of the guiding plate 30 is correctly engaged with the positioning groove 34K provided at the valve body 11K, the first flow guide port 3011 is communicated with the first opening 1101K of the valve body 11K, the third flow guide port 3021 is communicated with the second opening 1102K, the fifth flow guide port 3031 is communicated with the fourth opening 1104K, the second flow guide port 3012 is communicated with the first communicating opening 201K of the filtering device 20K, the fourth flow guide port 3022 is communicated with the second communicating opening 202K, the sixth flow guide port 3032 is communicated with the third communicating opening 203K. It is worth noting that the guiding plate 30 of the water purifier 2 of the present invention will significantly reduce the manufacturing difficulty of the base 24K of the filtering device 20K of the water purifier 2 of the present invention. As shown in FIG.5C and FIG.7B to FIG.7E, the distribution and shape of the first opening 1101K, the second opening 1102K and the fourth opening 1104K of the valve body 11K of the control valve 10K of the water purifier 2 of the present invention in the valve body 11K are relatively irregular, which causes it difficult for the first communicating opening 201K, the second communicating opening 202K and the third communicating opening 203K of the filtering device 20K to cooperate and communicate with the first opening 1101K, the second opening 1102K and the fourth opening 1104K. In addition, if the base 24K of the filtering device 20K is directly communicated with the valve body 11K, the distribution and shape of the first opening 1101K, the second opening 1102K and the fourth opening 1104K of the valve body 11K in the valve body 11K determine the distribution and shape of the first communicating opening 201K, the second communicating opening 202K and the third communicating opening 203K of the filtering device 20K in its base 24K, which will cause the significant increase of the manufacturing difficulty of the base 24K of the filtering device 20K. The structure of the guiding plate 30 adopted by the water purifier 2 of the present invention is convenient for the first communicating opening 201K, the second communicating opening 202K and the third communicating opening 203K of the filtering device 20K to cooperate and communicate with the first opening 1101K, the second opening 1102K and the fourth opening 1104K, wherein the first flow guide port 3011 provided at its first side surface 31 is adapted to be communicated with the first opening 1101K of the valve body 11K, the third flow guide port 3021 is adapted to be communicated with the second opening 1102K, the fifth flow guide port 3031 is adapted to be communicated with the fourth opening 1104K, the second flow guide port 3012 provided at its second side surface 32 is adapted to be communicated with the first communicating opening 201K of the filtering device 20K, the fourth flow guide port 3022 is adapted to be communicated with the second communicating opening 202K, and the sixth flow guide port 3032 is adapted to be communicated with the third communicating opening 203K. In addition, the above-mentioned structure of the guiding plate 30 adopted by the water purifier 2 of the present invention also makes the base 24K of the filtering device 20K of the water purifier 2 of the present invention and the valve body 11K of the control valve 10K can be manufactured separately, and the distribution and shape of the first communicating opening 201K, the second communicating opening 202K and the third communicating opening 203K of the filtering device 20K in the base 24K are not restricted by the distribution and shape of the first opening 1101K, the second opening 1102K and the fourth opening 1104K of the valve body 11K. This reduces the manufacturing difficulty of the base 24K of the filtering device 20K.

As shown in FIG.8A to FIG.9F, the fixed disk 121K of the valve core 12K of the plane valve 10K of the water purifier 2 according to the first embodiment of the present invention comprises an upper end portion 1211K, a lower end portion 1212K and a fixing portion 1213K provided between the upper end portion 1211K and the lower end portion 1212K, wherein the upper end portion 1211K defines the first fluid control surface 1210K of the fixed disk 121K, and the lower end portion 1212K is provided inside the valve cavity 110K of the valve body 11K. Preferably, the lower end portion 1212K of the fixed disk 121K of the valve core 12K of the plane valve 10K of the water purifier 2 of the present invention is integrally provided at the inner wall of the valve body 11K of the plane valve 10K.

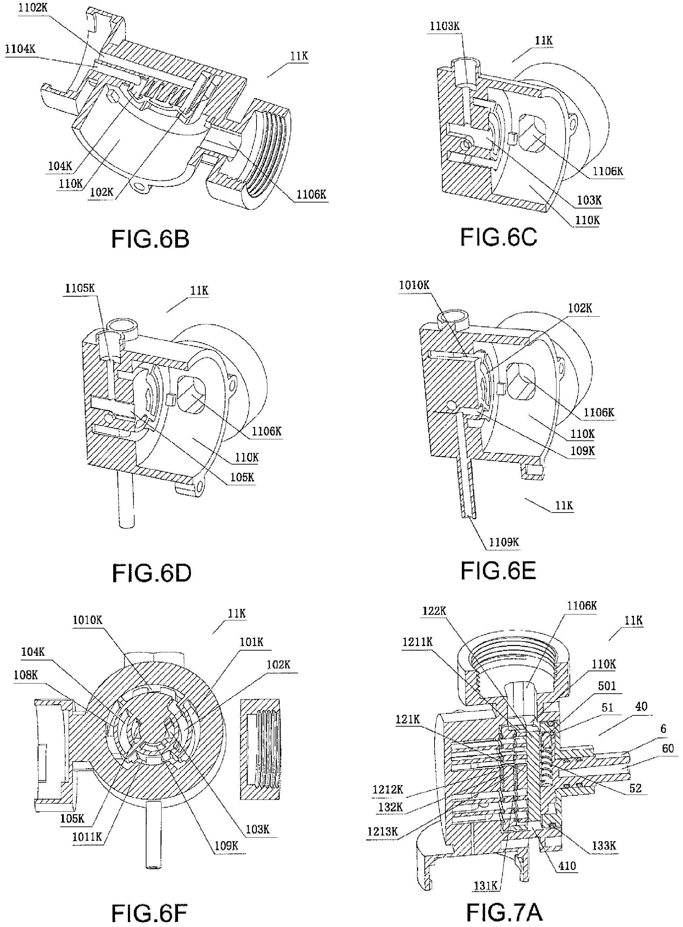

As shown in FIG.7A and FIG.8A to FIG.8H, the control valve 10K of the water purifier 2 according to the first embodiment of the present invention further comprises a fixing device 40, wherein the fixing device 40 comprises a fixing holder 41, a first clamping connector 42 and a second clamping connector 43, wherein the fixing holder 41 of the fixing device 40 has at least one accommodation chamber 410 and at least one water inlet opening 401, wherein the water inlet opening 401 is communicated with the raw water inlet 1106K and the accommodation chamber 410 respectively, wherein the first clamping connector 42 is provided at the fixing portion 1213K of the fixed disk 121K, the second clamping connector 43 is provided at the fixing holder 41, wherein the first clamping connector 42 and the second clamping connector 43 are provided to be adapted to be clamped together, so that the fixing portion 1213K of the fixed disk 121K can be fixed at the fixing holder 41 through the first clamping connector 42 and the second clamping connector 43. Further, the water inlet opening 401 of the fixing holder 41 and the raw water inlet 1106K are both communicated with the valve cavity 110K of the valve body 11K, so that the accommodation chamber 410 of the fixing holder 41 is communicated with the raw water inlet 1106K of the valve body 11K through the water inlet opening 401 and the valve cavity 110K of the valve body 11K, and the raw water can flow into the accommodation chamber 410 of the fixing holder 41 through the raw water inlet 1106K of the valve body 11K. As shown in FIG.7A and FIG.8A to FIG.8H, the accommodation chamber 410 of the fixing holder 41 of the fixing device 40 of the water purifier 2 according to the first embodiment of the present invention is provided to be adapted to accommodate the upper end portion 1211K of the fixed disk 121K and the rotatable disk 122K inside it, the sixth channel 106K of the plane valve 10K is provided to communicate with the accommodation chamber 410 of the fixing holder 41, so that raw water can be provided to the sixth channel 106K of the plane valve 10K through the water inlet opening 401 and the accommodation chamber 410 of the fixing holder 41. In other words, the sixth channel 106K of the plane valve 10K is communicated with the raw water inlet 1106K of the valve body 11K through the accommodation chamber 410 of the fixing holder 41, the water inlet opening 401 and the valve cavity 110K of the valve body 11K. As shown in FIG.7A and FIG.8A to FIG.8H, further, the upper end portion 1211K of the fixed disk 121K is adapted to be detachably clamped at the fixing portion 1213K of the fixed disk 121K, the fixing portion 1213K of the fixed disk 121K is adapted to be detachably clamped at the lower end portion 1212K of the fixed disk 121K, so that the upper end portion 1211K of the fixed disk 121K cannot rotate relative to the fixing portion 1213K, the fixing portion 1213K of the fixed disk 121K cannot rotate relative to the lower end portion 1212K.

It should be understood that the upper end portion 1211K of the fixed disk 121K of the valve core 12K of the plane valve 10K of the water purifier 2 of the present invention is detachably clamped at the fixing portion 1213K of the fixed disk 121K, the fixing portion 1213K of the fixed disk 121K is detachably clamped at the lower end portion 1212K of the fixed disk 121K, and the upper end portion 1211K of the fixed disk 121K and the rotatable disk 122K are accommodated inside the accommodation chamber 410 of the fixing holder 41, so that the upper end portion 1211K and the fixing portion 1213K of the fixed disk 121K and the rotatable disk 122K can be integrated together through the fixing holder 41, the first clamping connector 42 and the second clamping connector 43 of the fixing device 40. Especially, since the upper end portion 1211K of the fixed disk 121K defines the first fluid control surface 1210K of the fixed disk 121K, and the upper end portion 1211K of the fixed disk 121K is detachably clamped at the fixing portion 1213K of the fixed disk 121K, so that the upper end portion 1211K can be manufactured separately and the side surface of the upper end portion 1211K facing the rotatable disk 122K can be easily processed, such as being polished smooth, to form the first fluid control surface 1210K. However, if the fixed disk 121K of the valve core 12K of the plane valve 10K of the water purifier 2 of the present invention is fixedly provided at the valve body 11K, or the fixed disk 121K of the valve core 12K of the plane valve 10K is integrated with the valve body 11K, the side surface of the upper end portion 1211K of the fixed disk 121K of the valve core 12K of the plane valve 10K is difficult to be processed and define the first fluid control surface 1210K.

As shown in FIG.2A, FIG.7A and FIG.8A to FIG.8H, the first clamping connector 42 of the fixing device 40 of the water purifier 2 according to the first embodiment of the present invention comprises a plurality of hooks 421 provided at the side wall of the fixing portion 1213K of the fixed disk 121K, the second clamping connector 43 has a plurality of clamping concave grooves 430, wherein the hooks 421 of the first clamping connector 42 are adapted to engage with the clamping concave grooves 430 of the second clamping connector 43 together, so that the first clamping connector 42 is clamped with the second clamping connector 43. Alternatively, the first clamping connector 42 has a plurality of clamping concave grooves 430 provided at the side wall of the fixing portion 1213K of the fixed disk 121K, the second clamping connector 43 has a plurality of hooks 421 provided at the fixing holder 41, wherein the hooks 421 of the second clamping connector 43 are adapted to engage with the clamping concave grooves 430 of the first clamping connector 42 together. In other words, the hooks 421 of the fixing device 40 are provided at the fixing holder 41, and the clamping concave grooves 430 are provided at the side wall of the fixing portion 1213K of the fixed disk 121K. Further, the fixing device 40 has a plurality of guiding grooves 400 and a plurality of guiding members 45, wherein the guiding grooves 400 are provided at the side wall of the fixing portion 1213K of the fixed disk 121K respectively, the guiding members 45 are provided at the second clamping connector 43 and are extended from the second clamping connector 43, wherein the guiding members 45 are provided directly facing the clamping concave grooves 430 respectively, and the width of the guiding member 45 is not greater than the width of the guiding groove 400, so that the first clamping connector 42 and the second clamping connector 43 can be clamped together under the guidance of the guiding grooves 400 and the guiding members 45.

As shown in FIG.2A, FIG.7A and FIG.8A to FIG.8H, the control valve 10K of the water purifier 2 according to the first embodiment of the present invention further comprises a driving assembly 6, wherein the driving assembly 6 is provided for driving the rotatable disk 122K of the plane valve 10K to rotate relative to the fixed disk 121K. As shown in FIG.2A, FIG.7A and FIG.8A to FIG.8H, illustratively, the driving assembly 6 comprises a valve rod 60, the fixing holder 41 further comprises an operation opening 402, wherein the operation opening 402 is communicated with the accommodation chamber 410 of the fixing holder 41, wherein the valve rod 60 has a driving end 61 and an operating end 62 extended from the driving end 61, wherein the driving end 61 of the valve rod 60 is provided inside the accommodation chamber 410 of the fixing holder 41, the operating end 62 of the valve rod 60 is extended from the driving end 61 and crosses out the accommodation chamber 410 of the fixing holder 41 through the operation opening 402 of the fixing holder 41. Accordingly, when the operating end 62 of the valve rod 60 is operated to rotate, the driving end 61 is driven to rotate and further drives the rotatable disk 122K to rotate, so that the plane valve 10K is controlled to under the corresponding working position. Accordingly, the upper end portion 1211K and the fixing portion 1213K of the fixed disk 121K, the rotatable disk 122K and the valve rod 60 can be integrated together through the fixing holder 41, the first clamping connector 42 and the second clamping connector 43 of the fixing device 40, so as to reduce the manufacturing difficulty of the fixed disk 121K, and reduce the difficulty of assembling the upper end portion 1211K and the fixing portion 1213K of the fixed disk 121K, the rotatable disk 122K and the valve rod 60 into the valve cavity 110K of the valve body 11K. It should be understood that the way of integrating the upper end portion 1211K and the fixing portion 1213K of the fixed disk 121K, the rotatable disk 122K and the valve rod 60 together through the fixing holder 41, the first clamping connector 42 and the second clamping connector 43 of the fixing device 40 also makes the upper end portion 1211K and the fixing portion 1213K of the fixed disk 121K, the rotatable disk 122K and the valve rod 60 more convenient for the automated assembly and production of the plane valve 10K. Further, the outer diameter of the driving end 61 of the valve rod 60 is smaller than the inner diameter of the accommodation chamber 410 of the fixing holder 41 and greater than the inner diameter of the operation opening 402 of the fixing holder 41, the outer diameter of the operating end 62 of the valve rod 60 is smaller than the inner diameter of operation opening 402 of the fixing holder 41, so that the fixing holder 41 can be pressed against the driving end 61 of the valve rod 60 under the action of external force, and the rotatable disk 122K can be pressed against the upper end portion 1211K of the fixed disk 121K under the action of the driving end 61 of the valve rod 60, and the second fluid control surface 1220K of the rotatable disk 122K is provided at the first fluid control surface 1210K of the fixed disk 121K.

It should be understood that the driving assembly 6 can be any mechanism or assembly unit for driving the rotatable disk 122K of the plane valve 10K to rotate relative to the fixed disk 121K. Illustratively, the driving assembly 6 also can be a gear set for driving the rotatable disk 122K of the plane valve 10K to rotate relative to the fixed disk 121K, wherein the gear set comprises a driving gear and driven cogs provided at the side wall of the rotatable disk 122K, the driving gear is engaged with and driven cogs of the rotatable disk 122K, so that the users or the operators can drive the rotatable disk 122K to rotate relative to the fixed disk 121K by rotating the driving gear. Illustratively, the driving assembly 6 also comprises a driving rod provided at the rotatable disk 122K of the plane valve 10K and paralleled with the second fluid control surface 1220K of the rotatable disk 122K, and the users can drive the rotatable disk 122K to rotate relative to the fixed disk 121K by driving the driving rod of the driving assembly 6. As shown in FIG.2A, the fixing device 40 of the water purifier 2 according to the first embodiment of the present invention further comprises a fixing member 44, wherein the fixing member 44 is provided pressing against the fixing holder 41, and the fixing member 44 is provided to be adapted to be fixed at the valve body 11K of the plane valve 10K. Accordingly, the fixing holder 41 is held inside the valve cavity 110K of the valve body 11K through the fixing member 44.

As shown in FIG.2A, FIG.7A and FIG.8A to FIG.8H, the control valve 10K of the water purifier 2 according to the first embodiment of the present invention further comprises a positioning assembly 50, wherein the positioning assembly 50 has a restricting element 51, a resetting element 52 provided at the restricting element 51, a plurality of restricting grooves 501 provided at the inner wall of the fixing holder 41 and an operation chamber 502 provided at the driving end 61 of the valve rod 60, wherein the restricting element 51 and the resetting element 52 are both provided inside the operation chamber 502, and the resetting element 52 is provided between the restricting element 51 and the driving end 61, so that when the driving end 61 of the valve rod 60 is rotated and the restricting element 51 directly faces the restricting grooves 501, the restricting element 51 will move into the restricting grooves 501 under the action of the resetting force (or elastic force) of the resetting element 52; at this time, when the driving end 61 of the valve rod 60 continues to be rotated to make the fixing holder 41 pressing the restricting element 51 and further to make the restricting element 51 to retract into the operation chamber 502, the driving end 61 of the valve rod 60 can be easily rotated and the restricting element 51 is kept retracted inside the operation chamber 502 under the pressure of the fixing holder 41. It should be understood that when the driving end 61 of the valve rod 60 is rotated to make the restricting element 51 directly facing the restricting grooves 501 and further to make the restricting element 51 to move into the restricting grooves 501, the plane valve 10K is maintained under a corresponding working position, and the water purifier 2 of the present invention is under a corresponding working state. It should be understood that the resetting element 52 is a resetting spring. Alternatively, the resetting element 52 is a resetting elastic piece. Preferably, the restricting element 51 is provided to be engaged with the restricting grooves 501, so that the restricting element 51 can be stably held inside the restricting grooves 501 when there is no appropriate external force to drive the valve rod 60 to rotate.

As shown in FIG.2A, FIG.7A and FIG.8A to FIG.8H, the plane valve 10K of the water purifier 2 according to the first embodiment of the present invention further comprises a sealing assembly 13K, wherein the seating assembly 13 has a first seal 131K, wherein the first seal 131K is provided between the upper end portion 1211K and the fixing portion 1213K of the fixed disk 121K. Further, the first seal 131K has a plurality of first sealing strips 1311K, the fixing portion 1213K of the fixed disk 121K has a plurality of first sealing grooves 12130K, wherein the first sealing grooves 12130K are provided to respectively surround the first channel 101K, the second channel 102K, the third channel 103K, the fourth channel 104K, the fifth channel 105K, the eighth channel 108K, the ninth channel 109K, the tenth channel 1010K and the eleventh channel 1011K of the fixed disk 121K, the first sealing strips 1311K of the first seal 131K are provided according to the first sealing grooves 12130K of the fixing portion 1213K, so that the first sealing strips 1311K of the first seal 131K can be engaged with the first sealing grooves 12130K of the fixing portion 1213K and realizes the sealing between the upper end portion 1211K and the fixing portion 1213K of the fixed disk 121K. It should be understood that the first sealing grooves 12130K are defined at one side of the fixing portion 1213K facing the upper end portion 1211K. Further, the sealing assembly 13K has a second seal 132K, wherein the second seal 132K is provided between the fixing portion 1213K and the lower end portion 1212K of the fixed disk 121K. Further, the second seal 132K has a plurality of second sealing strips 1321K, the fixing portion 1213K of the fixed disk 121K has a plurality of second sealing grooves 12131K, wherein the second sealing grooves 12131K are provided to respectively surround the first channel 101K, the second channel 102K, the third channel 103K, the fourth channel 104K, the fifth channel 105K, the eighth channel 108K, the ninth channel 109K, the tenth channel 1010K and the eleventh channel 1011K of the fixed disk 121K, the second sealing strips 1321K of the second seal 132K are provided according to the second sealing grooves 12131K of the fixing portion 1213K, so that the second sealing strips 1321K of the second seal 132K can be engaged with the second sealing grooves 12131K of the fixing portion 1213K and realizes the sealing between the lower end portion 1212K and the fixing portion 1213K of the fixed disk 121K. It should be understood that the second sealing grooves 12131K are defined at one side of the fixing portion 1213K facing the lower end portion 1212K.

As shown in FIG.2A, FIG.7A and FIG.8A to FIG.8H, the sealing assembly 13K of the water purifier 2 according to the first embodiment of the present invention further comprises at least one first sealing ring 133K, wherein the first sealing ring 133K is provided at the outer surface of the fixing holder 41, so as to realize the sealing between the fixing holder 41 and the inner wall of the valve body 11K and prevent the raw water from flowing out between the fixing holder 41 and the inner wall of the valve body 11K. Further, the sealing assembly 13K comprises at least one second sealing ring 134K, wherein the second sealing ring 134K is provided between the valve rod 60 and the fixing holder 41, so as to realize the sealing between the valve rod 60 and the inner wall of the fixing holder 41 and prevent the raw water from flowing out between the valve rod 60 and the inner wall of the fixing holder 41.

As shown in FIG.2A, FIG.7A and FIG.8A to FIG.8B, the control valve 10K of the water purifier 2 according to the first embodiment of the present invention further comprises a rotary knob 80, wherein the rotary knob 80 is provided at the operating end 62 of the valve rod 60, so that the users can rotate the valve rod 60 to rotate the rotatable disk 122K and control the plane valve 10K to be under the corresponding working position.

As shown in FIG.10A to FIG.12F, the first fluid control surface 1210K of the fixed disk 121K of the plane valve 10K of the water purifier 2 according to the first embodiment of the present invention has an inner portion 12101K, an extending portion 12102K extended outward from the inner portion 12101K and an edge portion 12103K extended outward from the extending portion 12102K shown by the dashed line in the drawings, wherein the inner portion 12101K, the extending portion 12102K and the edge portion 12103K are provided at a top end portion 1214K of the fixed disk 121K, and the extending portion 12102K and the edge portion 12103K (or the part other than the inner portion 12101K) of the first fluid control surface 1210K are equally divided into a first portion 1201K, a second portion 1202K, a third portion 1203K and a fourth portion 1204K shown by the dashed line; the second fluid control surface 1220K of the rotatable disk 122K of the plane valve 10K has an inner region 12201K, an extending region 12202K extended outward from the inner region 12201K and an edge region 12203K extended outward from the extending region 12202K shown by the dashed line in the drawings, wherein the inner region 12201K, the extending region 12202K and the extending region 12202K are provided at a bottom end portion 1221K of the rotatable disk 122K, and the extending region 12202K and the edge region 12203K (or the part other than the inner region 12201K) of the second fluid control surface 1220K are equally divided into a first region 2001K, a second region 2002K, a third region 2003K and a fourth region 2004K shown by the dashed line; wherein the first channel 101K is extended downward from the first portion 1201K of the first fluid control surface 1210K of the fixed disk 121K, the second channel 102K is extended downward from the first portion 1201K of the first fluid control surface 1210K of the fixed disk 121K, the third channel 103K is extended downward from the first portion 1201K of the first fluid control surface 1210K of the fixed disk 121K, the fourth channel 104K is extended downward from the third portion 1203K of the first fluid control surface 1210K of the fixed disk 121K, the fifth channel 105K is extended downward from the third portion 1203K of the first fluid control surface 1210K of the fixed disk 121K, the sixth channel 106K is extended upward from the first region 2001K of the second fluid control surface 1220K of the rotatable disk 122K, the seventh channel 107K is extended upward from the third region 2003K of the second fluid control surface 1220K of the rotatable disk 122K, the eighth channel 108K is extended downward from the third portion 1203K of the first fluid control surface 1210K of the fixed disk 121K, the ninth channel 109K is extended downward from the second portion 1202K of the first fluid control surface 1210K of the fixed disk 121K, the tenth channel 1010K is extended downward from the fourth portion 1204K of the first fluid control surface 1210K of the fixed disk 121K, the eleventh channel 1011K is extended downward from the second portion 1202K of the first fluid control surface 1210K of the fixed disk 121K. As shown in FIG.11A to FIG.11D, preferably, the extending portion 12102K and the edge portion 12103K of the first fluid control surface 1210K are equally divided clockwise into the first portion 1201K, the second portion 1202K, the third portion 1203K and the fourth portion 1204K, the extending region 12202K and the edge region 12203K of the second fluid control surface 1220K of the rotatable disk 122K of the plane valve 10K are equally divided clockwise into the first region 2001K, the second region 2002K, the third region 2003K and the fourth region 2004K. In other words, the first fluid control surface 1210K of the fixed disk 121K of the plane valve 10K defines four equal divisions, and the second fluid control surface 1220K of the rotatable disk 122K of the plane valve 10K defines four equal divisions, wherein when the rotatable disk 122K of the plane valve 10K is rotated until the first division (the first region 2001K) of the second fluid control surface 1220K of the rotatable disk 122K directly faces the fourth division (the fourth portion 1204K) of the first fluid control surface 1210K of the fixed disk 121K, the third division (the third region 2003K) of the second fluid control surface 1220K of the rotatable disk 122K of the plane valve 10K directly faces the second division (the second portion 1202K) of the first fluid control surface 1210K of the fixed disk 121K, so that the sixth channel 106K of the plane valve 10K is communicated with the tenth channel 1010K, and the seventh channel 107K is communicated with the ninth channel 109K and the eleventh channel 1011K respectively, so as to allow the raw water to flow into the filtering device 20K through the raw water inlet 1106K, the sixth channel 106K, the tenth channel 1010K, the second opening 1102K and the second communicating opening 202K. After back-flushing (referring to the flow direction of the water in the primary filter 22K during the back-flushing is opposite to the flow direction of the water in the primary filter 22K during the filtering) the primary filter 22K of the filtering device 20K, the waste water flows out through the first communicating opening 201K of the filtering device 20, and then flows out through the first opening 1101K, the eleventh channel 1011K, the seventh channel 107K, the ninth channel 109K and the draining opening 1109K, accordingly, the water purifier 2 is under the back-flushing working state at this time. Further, when the rotatable disk 122K of the plane valve 10K is rotated until the first division (the first region 2001K) of the second fluid control surface 1220K of the rotatable disk 122K directly faces the third division (the third portion 1203K) of the first fluid control surface 1210K of the fixed disk 121K, the third division (the third region 2003K) of the second fluid control surface 1220K of the rotatable disk 122K of the plane valve 10K directly faces the first division (the first portion 1201K) of the first fluid control surface 1210K of the fixed disk 121K, so that the sixth channel 106K of the plane valve 10K is communicated with the eighth channel 108K, and the seventh channel 107K is communicated with the second channel 102K and the third channel 103K respectively, so as to allow the raw water to flow into the filtering device 20K through the raw water inlet 1106K, the sixth channel 106K, the eighth channel 108K, the first opening 1101K and the first communicating opening 201K. After filtered by the primary filter 22K of the filtering device 20K, the purified water flows out through the purified water channel 2201K of the primary filter 22K and the second communicating opening 202K, and then flows out and is provided through the second opening 1102K, the second channel 102K, the seventh channel 107K, the third channel 103K and the third opening 1103K, accordingly, the water purifier 2 is under the second purifying working state at this time. Further, when the rotatable disk 122K of the plane valve 10K is rotated until the first division (the first region 2001K) of the second fluid control surface 1220K of the rotatable disk 122K directly faces the second division (the second portion 1202K) of the first fluid control surface 1210K of the fixed disk 121K, the third division (the third region 2003K) of the second fluid control surface 1220K of the rotatable disk 122K of the plane valve 10K directly faces the fourth division (the fourth portion 1204K) of the first fluid control surface 1210K of the fixed disk 121K, so that the sixth channel 106K of the plane valve 10K is blocked by the first fluid control surface 1210K of the fixed disk 121K, the seventh channel 107K is blocked by the first fluid control surface 1210K of the fixed disk 121K, the first channel 101K, the second channel 102K, the tenth channel 103K, the fourth channel 104K, the fifth channel 105K, the eighth channel 108K, the ninth channel 109K, the tenth channel 1010K and the eleventh channel 1011K of the fixed disk 121K are blocked by the rotatable disk 122K respectively, the plane valve 10K controls the raw water not to flow to the filtering device 20K and does not provide the raw water or the purified water to the users, accordingly, the water purifier 2 is under the standby working state at this time. Wherein when the rotatable disk 122K of the plane valve 10K is rotated until the first division (the first region 2001K) of the second fluid control surface 1220K of the rotatable disk 122K directly faces the first division (the first portion 1201K) of the first fluid control surface 1210K of the fixed disk 121K, the third division (the third region 2003K) of the second fluid control surface 1220K of the rotatable disk 122K of the plane valve 10K directly faces the third division (the third portion 1203K) of the first fluid control surface 1210K of the fixed disk 121K, so that the sixth channel 106K of the plane valve 10K is communicated with the first channel 101K, and the seventh channel 107K is communicated with the fourth channel 104K and the fifth channel 105K respectively, so as to allow the raw water to flow into the filtering device 20K through the raw water inlet 1106K, the sixth channel 106K, the first channel 101K, the first opening 1101K and the first communicating opening 201K. After the raw water is filtered by the primary filter 22K of the filtering device 20K, the generated purified water flows into the purified water channel 2201K of the filtering device 20K, and the secondary purified water that the purified water generated by the primary filter 22K further filtered by the secondary filter 23K flows out the third communicating opening 203K through the purified water outlet 2301K, then flows out and is provided through the fourth opening 1104K, the fourth channel 104K, the seventh channel 107K, the fifth channel 105K and the fifth opening 1105K, accordingly, the water purifier 2 is under the first purifying working state at this time.

As shown in FIG.11A to FIG.12F, preferably, the fourth channel 104K and the fifth channel 105K of the water purifier 2 according to the first embodiment of the present invention are extended along the first fluid control surface 1210K, and the fourth channel 104K and the fifth channel 105K are extended in the same direction, and the sixth channel 106K corresponds to the seventh channel 107K, so that when the plane valve 10K is switched from the standby working position to the first purifying working position and the rotatable disk 122K of the plane valve 10K is rotated until the sixth channel 106K coincides with the first channel 101K, the seventh channel 107K coincides with the fourth channel 104K and the fifth channel 105K at the same time; and when the plane valve 10K is switched from the standby working position to the second purifying working position and the rotatable disk 122K of the plane valve 10K is rotated until the sixth channel 106K coincides with the eighth channel 108K, the seventh channel 107K coincides with the second channel 102K and the third channel 103K at the same time. Accordingly, when the plane valve 10K is switched from the standby working position to the first purifying working position (or from the first purifying working position to the standby working position), the users can adjust the degree of overlap between the sixth channel 106K and the first channel 101K to control the flow rate of the raw water to the filtering device 20K. Further, the second channel 102K and the third channel 103K are extended along the first fluid control surface 1210K, and the second channel 102K and the third channel 103K are extended in the same direction, so that when the plane valve 10K is switched from the standby working position to the second purifying working position (or from the second purifying working position to the standby working position), the users can adjust the degree of overlap between the sixth channel 106K and the eighth channel 108K to control the flow rate of the raw water to the filtering device 20K. Accordingly, the fourth channel 104K corresponds to the fifth channel 105K, and the second channel 102K corresponds to the third channel 103K. It should be understood that when the users adjust the degree of overlap between the sixth channel 106K and the first channel 101K, the degree of overlap between the seventh channel 107K and the fourth channel 104K (and the fifth channel 105K) is adjusted accordingly; when the users adjust the degree of overlap between the sixth channel 106K and the eighth channel 108K, the degree of overlap between the seventh channel 107K and the second channel 102K (and the third channel 103K) is adjusted accordingly. Therefore, the users can adjust the water inlet and outlet of the water purifier 2 of the first embodiment of the present invention to realize the stepless flow rate control of the water purifier 2 of the first embodiment of the present invention. In other words, when the plane valve 10K is switched from the standby working position to the first purifying working position or from the standby working position to the second purifying working position, the stepless flow control of the water inlet and outlet of the water purifier 2 can be realized by rotating the rotatable disk 122K around the circle center of the rotatable disk 122K to adjust the degree of overlap between the channels (the sixth channel 106K and the seventh channel 107K) of the rotatable disk 122K and the channels (the first channel 101K, the second channel 102K, the third channel 103K, the fourth channel 104K, the fifth channel 105K and the eighth channel 108K) of the fixed disk 121K. Preferably, the second channel 102K and the third channel 103K are both provided at the inner side of the first channel 101K, the fourth channel 104K and the fifth channel 105K are both provided at the inner side of the eighth channel 108K, and the second channel 102K is provided at the inner side of the third channel 103K, the fourth channel 104K is divided at the inner side of the fifth channel 105K. Alternatively, the second channel 102K and the third channel 103K are both provided at the inner side of the first channel 101K, the fourth channel 104K and the fifth channel 105K are both provided at the inner side of the eighth channel 108K, and the third channel 103K is provided at the inner side of the second channel 102K, the fifth channel 105K is divided at the inner side of the fourth channel 104K. Preferably, the first channel 101K, the second channel 102K, the third channel 103K, the fourth channel 104K, the fifth channel 105K and the eighth channel 108K are all arc-shaped, and the sixth channel 106K and the seventh channel 107K are both arc-shaped. More preferably, the first channel 101K, the second channel 102K, the third channel 103K, the fourth channel 104K, the fifth channel 105K and the eighth channel 108K all are extended arcuately around the center of the first fluid control surface 1210K of the fixed disk 121K of the plane valve 10K, the sixth channel 106K and the seventh channel 107K both are extended arcuately around the center of the second fluid control surface 1220K of the rotatable disk 122K. Most preferably, the first channel 101K, the second channel 102K, the third channel 103K, the fourth channel 104K, the fifth channel 105K and the eighth channel 108K all are extended arcuately around the inner portion 12101K of the first fluid control surface 121 0K of the fixed disk 121K of the plane valve 10K, the sixth channel 106K and the seventh channel 107K both are extended arcuately around the inner region 12201K of the second fluid control surface 1220K of the rotatable disk 122K, and the fourth channel 104K and the fifth channel 105K correspond to the same central angle, the second channel 102K and the third channel 103K correspond to the same central angle, so as to easily realize the stepless control of the plane valve 10K to the flow rate of water. Alternatively, the first fluid control surface 1210K is circular, the second channel 102K, the third channel 103K, the fourth channel 104K and the fifth channel 105K are extended along the tangential direction of the first fluid control surface 1210K. More preferably, the sixth channel 106K and the seventh channel 107K are provided at two opposite positions of the rotatable disk 122K. More preferably, the central angle corresponding to the sixth channel 106K and the central angle corresponding to the first channel 101K are equal in size, the central angle corresponding to the seventh channel 107K and the central angle corresponding to the fourth channel 104K are equal in size, and/or the central angle corresponding to the sixth channel 106K and the central angle corresponding to the eighth channel 108K are equal in size, the central angle corresponding to the seventh channel 107K and the central angle corresponding to the second channel 102K are equal in size, so as to easily realize the stepless control of the plane valve 10K to the flow rate of water. Most preferably, the central angles corresponding to the first channel 101K, the second channel 102K, the third channel 103K, the fourth channel 104K, the fifth channel 105K, the sixth channel 106K, the seventh channel 107K and the eighth channel 108K are equal in size.

It should be understood that the distribution of the first channel 101K, the second channel 102K, the third channel 103K, the fourth channel 104K, the fifth channel 105K and the eighth channel 108K of the plane valve 10K of the water purifier 2 according to the first embodiment of the present invention on the first fluid control surface 1210K of the fixed disk 121K of the plane valve 10K, makes when the rotatable disk 122K of the plane valve 10K of the water purifier 2 rotates relative to the fixed disk 121K until the plane valve 10K is switched from the standby working position to the first purifying working position (or switched from the first purifying working position to the standby working position), or switched from the standby working position to the second purifying working position (or switched from the second purifying working position to the standby working position), the rotatable disk 122K of the plane valve 10K also can rotate relative to the fixed disk 121K to realize the stable communication of the flow channels even if the working position is not completely switched (or during the switching process). The main reason is that when the plane valve 10K is switched from the standby working position to the first purifying working position or switched from the first purifying working position to the standby working position, during the switching process, the sixth channel 106K of the plane valve 10K always only stably communicates with the first channel 101K, the seventh channel 107K of the plane valve 10K always only stably communicates with the fourth channel 104K and the fifth channel 105K; when the plane valve 10K is switched from the standby working position to the second purifying working position or switched from the second purifying working position to the standby working position, during the switching process, the sixth channel 106K of the plane valve 10K always only stably communicates with the eighth channel 108K, the seventh channel 107K of the plane valve 10K always only stably communicates with the second channel 102K and the third channel 103K. the sixth channel 106K of the plane valve 10K always only stably communicates with the first channel 101K, the seventh channel 107K of the plane valve 10K always only stably communicates with the fourth channel 104K and the fifth channel 105K, and the sixth channel 106K of the plane valve 10K always only stably communicates with the eighth channel 108K, the seventh channel 107K of the plane valve 10K always only stably communicates with the second channel 102K and the third channel 103K, which ensures that no mixed flow will occur when the plane valve 10K is switched from the standby working position to the first purifying working position or switched from the first purifying working position to the standby working position, and switched from the standby working position to the second purifying working position or switched from the second purifying working position to the standby working position, so as to ensure the stepless control of the flow rate of the water flowing through the plane valve 10K, during the working position switching process.

As shown in FIG.11A to FIG.12F, it is worth noting that when the users need to switch the water purifier 2 according to the first embodiment of the present invention from the back-flushing working state to the second purifying working state, only need to anticlockwise rotate the rotatable disk 122K of the plane valve 10K for one equal division angle, so that the first region 2001K of the second fluid control surface 1220K of the rotatable disk 122K directly faces the third portion 1203K of the first fluid control surface 1210K of the fixed disk 121K; when the users need to switch the water purifier 2 according to the first embodiment of the present invention from the second purifying working state to the standby working state, only need to anticlockwise rotate the rotatable disk 122K of the plane valve 10K again for one equal division angle, so that the first region 2001K of the second fluid control surface 1220K of the rotatable disk 122K directly faces the second portion 1202K of the first fluid control surface 1210K of the fixed disk 121K; when the users need to switch the water purifier 2 according to the first embodiment of the present invention from the standby working state to the first purifying working state, only need to anticlockwise rotate the rotatable disk 122K of the plane valve 10K again for one equal division angle, so that the first region 2001K of the second fluid control surface 1220K of the rotatable disk 122K directly faces the first portion 1201K of the first fluid control surface 1210K of the fixed disk 121K. In other words, the structure of the plane valve 10K of the water purifier 2 of the present invention enables the four working states to be continuously distributed which are the back-flushing working state, the second purifying working state, the standby working state and the first purifying working state of the water purifier 2, so that the complete switching between adjacent working states of the back-flushing working state, the second purifying working state, the standby working state and the first purifying working state of the water purifier 2 of the present invention can be realized only by rotating the rotatable disk 122K of the plane valve 10K for one equal division angle. The switching mode between the four working states of the water purifier 2 determined by the structure of the plane valve 10K of the water purifier 2 of the present invention will make the switching between the four working states of the water purifier 2 of the present invention more in line with the usage habits of the users and not easily cause an error in working state switching due to the different rotation angles when the users switch the working states. It should be understood that since the extending portion 12102K and the edge portion 12103K of the first fluid control surface 1210K of the plane valve 10K of the water purifier 2 according to the first embodiment of the present invention are both divided into four equal divisions, and the extending region 12202K and the edge region 12203K of the second fluid control surface 1220K of the rotatable disk 122K of the plane valve 10K are both divided into four equal divisions, accordingly, each time the water purifier 2 of the present invention realizes one working state switching, the rotatable disk 122K of the plane valve 10K rotates 90 degrees. in other words, one equal division angle of the rotatable disk 122K and the fixed disk 121K of the plane valve 10K is 90 degrees. Alternatively, the extending portion 12102K and the edge portion 12103K of the first fluid control surface 121 0K are equally divided anticlockwise into the first portion 1201K, the second portion 1202K, the third portion 1203K and the fourth portion 1204K, the extending region 12202K and the edge region 12203K of the second fluid control surface 1220K of the rotatable disk 122K of the plane valve 10K are equally divided anticlockwise into the first region 2001K, the second region 2002K, the third region 2003K and the fourth region 2004K. At this time, the structure of the plane valve 10K of the water purifier 2 of the present invention enables the four working states to be continuously distributed which are the first purifying working state, the standby working state, the second purifying working state and the back-flushing working state, so that the complete switching between adjacent working states of the first purifying working state, the standby working state, the second purifying working state and the back-flushing working state of the water purifier 2 of the present invention can be realized only by rotating the rotatable disk 122K of the plane valve 10K for one equal division angle. In addition, as mentioned above, when switching the water purifier 2 according to the first embodiment of the present invention from the standby working state to the first purifying working state (or the second purifying working state), the stepless control of the flow rate of the water inlet and outlet of the water purifier 2 of the present invention can be realized by adjusting the degree of overlap between the channels (the sixth channel 106K and the seventh channel 107K) of the rotatable disk 122K and the channels (the first channel 101K, the second channel 102K, the third channel 103K, the fourth channel 104K, the fifth channel 105K and the eighth channel 108K) of the fixed disk 121K. However, when the water purifier 2 of the present invention is switched from the standby working state to the first purifying working state (or the second purifying working state), the switching of the states can also be realized by rotating the rotatable disk 122K for one equal division angle to make the sixth channel 106K of the rotatable disk 122K directly facing the first channel 101K (or the eighth channel 108K) of the fixed disk 121K, the seventh channel 107K directly facing the fourth channel 104K and the fifth channel 105K (or the second channel 102K and the third channel 103K). At this time, the flow rate of the water inlet and outlet of the water purifier 2 of the present invention is the largest. It should be understood that the water purifier 2 can also be quickly switched from the first purifying working state to the standby working state (or switched from the second purifying working state to the standby working state) by rotating one equal division angle.

As shown in FIG.9A to FIG.9F and FIG.11A to FIG.11D, according to the first embodiment of the present invention, the present invention further provides a valve disk assembly for a plane valve of a water purifier, which comprises a fixed disk 121K and a rotatable disk 122K, wherein the fixed disk 121K has a first fluid control surface 1210K, the rotatable disk 122K has a second fluid control surface 1220K, wherein the rotatable disk 122K and the fixed disk 121K are both provided inside the valve cavity 110K, wherein the second fluid control surface 1220K of the rotatable disk 122K is provided at the first fluid control surface 1210K of the fixed disk 121K, and the rotatable disk 122K is provided to be capable of rotating relative to the fixed disk 121K, wherein the plane valve 10K has a first channel 101K, a second channel 102K, a third channel 103K, a fourth channel 104K, a fifth channel 105K, a sixth channel 106K and a seventh channel 107K, wherein the first channel 101K, the second channel 102K, the third channel 103K, the fourth channel 104K and the fifth channel 105K are provided at the fixed disk 121K respectively and are extended from the first fluid control surface 1210K of the fixed disk 121K respectively; the sixth channel 106K and the seventh channel 107K are provided at the rotatable disk 122K respectively and are extended from the second fluid control surface 1220K of the rotatable disk 122K respectively, wherein the first channel 101K is communicated with the first opening 1101K, the second channel 102K is communicated with the second opening 1102K, the third channel 103K is communicated with the third opening 1103K, the fourth channel 104K is communicated with the fourth opening 1104K, the fifth channel 105K is communicated with the fifth opening 1105K, the sixth channel 106K is communicated with the raw water inlet 1106K. Preferably, the raw water inlet 1106K and the sixth channel 106K are communicated with the valve cavity 110K respectively, so that the sixth channel 106K is communicated with the raw water inlet 1106K. More preferably, the seventh channel 107K of the rotatable disk 122K is a communicating blind hole. The plane valve 10K is further provided with an eighth channel 108K, wherein the eighth channel 108K is provided at the fixed disk 121K and is extended from the first fluid control surface 1210K of the fixed disk 121K, wherein the eighth channel 108K is communicated with the first opening 1101K. The plane valve 10K is further provided with a ninth channel 109K, a tenth channel 1010K and an eleventh channel 1011K, wherein the ninth channel 109K, the tenth channel 1010K and the eleventh channel 1011K are provided at the fixed disk 121K respectively and are extended from the first fluid control surface 1210K of the fixed disk 121K respectively, wherein the ninth channel 109K is communicated with the draining opening 1109K, the tenth channel 1010K is communicated with the second opening 1102K, the eleventh channel 1011K is communicated with the first opening 1101K.

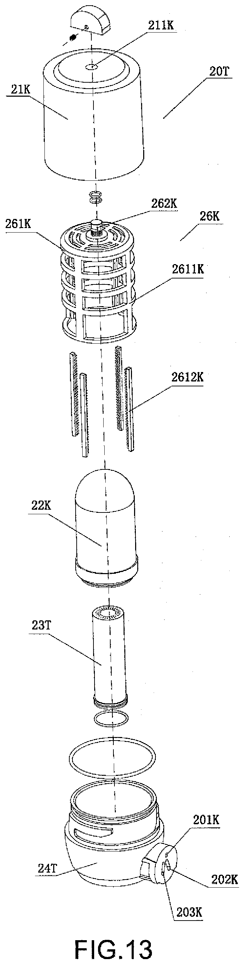

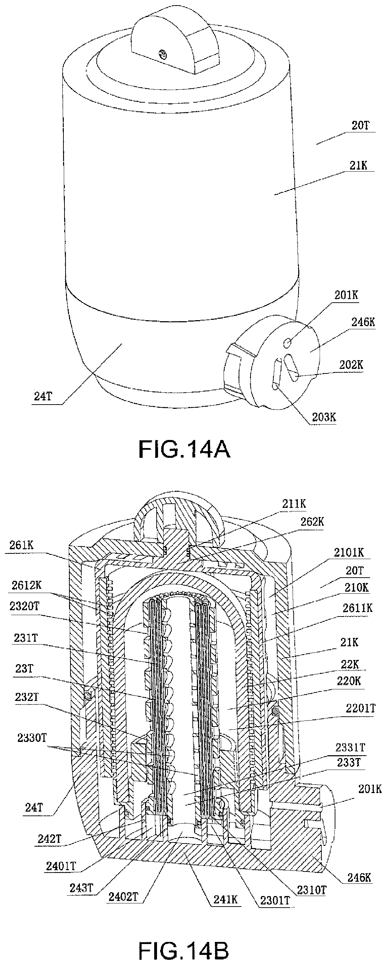

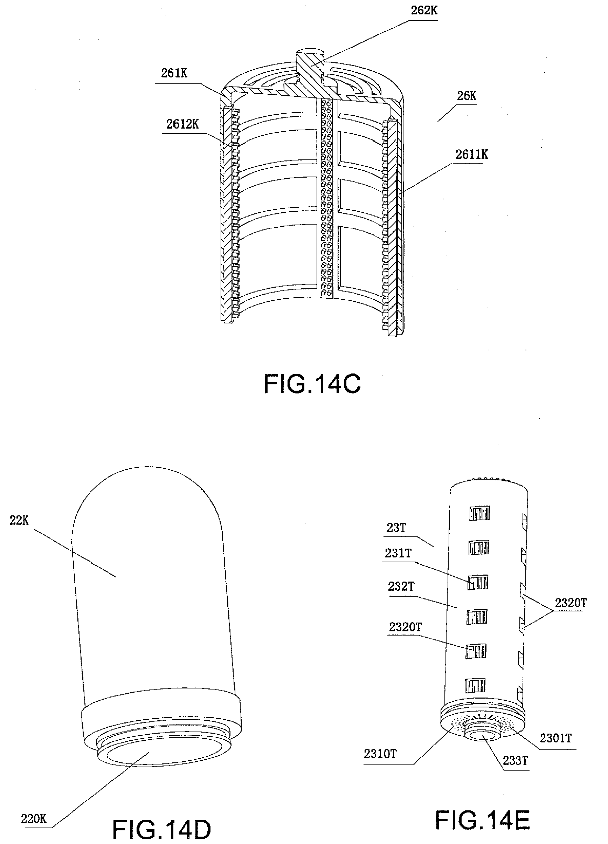

Referring to FIG.13 to FIG.15D, an alternative embodiment of the filtering device 20K of the water purifier 2 according to the first embodiment of the present invention is illustrated, wherein the filtering device 20T comprises a outer casing 21K, a primary filter 22K and a secondary filter 23T, wherein the outer casing 21K defines a first accommodation cavity 210K, wherein the primary filter 22K and the secondary filter 23T are all provided inside the first accommodation cavity 210K of the outer casing 21K, and the outer casing 21K and the primary filter 22K define a raw water channel 2101K therebetween, the primary filter 22K and the secondary filter 23T define a purified water channel 2201T therebetween, the secondary filter 23T has a purified water outlet 2301T. As shown in FIG.13 to FIG.15D, further, the primary filter 22K of the filtering device 20T of the water purifier 2 according to the first embodiment of the present invention defines a second accommodation cavity 220K, and the secondary filter 23T is provided inside the second accommodation cavity 220K of the primary filter 22K (accordingly, the purified water channel 2201T can be regarded as a part of the second accommodation cavity 220K). Accordingly, since the secondary filter 23T is provided inside the second accommodation cavity 220K of the primary filter 22K, after the raw water flows into the raw water channel 2101K under the action of water pressure and is treated by the primary filter 22K, the purified water generated by the primary filter 22K can flow to the secondary filter 23T under the action of water pressure and be treated by the secondary filter 23T, and the cleaner secondary purified water is obtained, wherein the secondary purified water flows out through the purified water outlet 2301T under the action of water pressure, so as to be provided.

As shown in FIG.13 to FIG.15D, the secondary filter 23T of the filtering device 20T of the water purifier 2 according to the first embodiment of the present invention comprises a plurality of ultrafiltration membrane filaments 231T and a flow collecting tube 233T, wherein the ultrafiltration membrane filaments 231T and the flow collecting tube 233T are all provided inside the second accommodation cavity 220K of the primary filter 22K, and the ultrafiltration membrane filaments 231T are provided to surround the flow collecting tube 233T, wherein the flow collecting tube 233T has at least one water collecting hole 2330T and a flow collecting channel 2331T, wherein the flow collecting channel 2331T is provided to communicate with the water collecting hole 2330T and the second communicating opening 202K of the filtering device 20T respectively, so that the purified water generated by the primary filter 22K can flow to the ultrafiltration membrane filaments 231T through the purified water channel 2201T under the action of water pressure, and flows to the flow collecting tube 233T through the gap between the ultrafiltration membrane filaments 231T, and is collected by the water collecting hole 2330T of the flow collecting tube 233T and flows to the second communicating opening 202K of the filtering device 20T through the flow collecting channel 2331T. It should be understood that when the purified water generated by the primary filter 22K flows to the flow collecting tube 233T through the purified water channel 2201T and the gap between the ultrafiltration membrane filaments 231T, the purified water generated by the primary filter 22K has a flushing action for the ultrafiltration membrane filaments 231T of the secondary filter 23T, so that the ultrafiltration membrane filaments 231T of the secondary filter 23T has a better filtering effect and the service life of the secondary filter 23T is prolonged. Further, when back-flushing the primary filter 22K of the filtering device 20T, the raw water flows from the second communicating opening 202K into the purified water channel 2201T through the flow collecting channel 2331T of the flow collecting tube 233T and the water collecting hole 2330T of the flow collecting tube 233T, and back-flushes the primary filter 22K, the generated waste water flows to the first communicating opening 201K through the raw water channel 2101K. Further, each ultrafiltration membrane filament 231T of the secondary filter 23T defines a membrane filament channel 2310T, wherein the membrane filament channels 2310T of the ultrafiltration membrane filaments 231T of the secondary filter 23T are all communicated with the purified water outlet 2301T of the secondary filter 23T.

As shown in FIG.13 to FIG.15D, the filtering device 20T of the water purifier 2 according to the first embodiment of the present invention further comprises a base 24T, wherein the secondary filter 23T is provided at the base 24T, and the base 24T defines a first water cavity 2401T and a second water cavity 2402T, wherein the first water cavity 2401T of the base 24T is communicated with the purified water outlet 2301T of the secondary filter 23T and the third communicating opening 203K of the filtering device 20T respectively, the second water cavity 2402T is communicated with the flow collecting channel 2331T of the flow collecting tube 233T of the secondary filter 23T and the second communicating opening 202K of the filtering device 20T respectively. In other words, the membrane filament channel 2310T of the ultrafiltration membrane filament 231T of the secondary filter 23T is communicated with the third communicating opening 203K of the filtering device 20T through the purified water outlet 2301T of the secondary filter 23T and the first water cavity 2401T of the base 24T, so that the secondary purified water generated by the secondary filter 23T can flow out through the third communicating opening 203K; the flow collecting channel 2331T of the flow collecting tube 233T of the secondary filter 23T is communicated with the second communicating opening 202K of the filtering device 20T through the second water cavity 2402T of the base 24T, so that the purified water generated by the primary filter 22K can flow out through the second communicating opening 202K. It should be understood that when back-flushing the primary filter 22K of the filtering device 20T, the raw water flows into the filtering device 20T through the second communicating opening 202K of the filtering device 20T, and flows into the purified water channel 2201T of the filtering device 20T through the second water cavity 2402T of the base 24T, and the flow collecting channel 2331T and the water collecting hole 2330T of the flow collecting tube 233T. Accordingly, the secondary filter 23T of the filtering device 20T is an external pressure type ultrafiltration filter. Preferably, the second communicating opening 202K and the third communicating opening 203K are both provided at the base 24T. More preferably, the flow collecting tube 233T and the secondary filter 23T are water-sealedly provided at the base 24T respectively, and the secondary filter 23T and the base 24T define the first water cavity 2401T therebetween, the flow collecting tube 233T and the base 24T define the second water cavity 2402T therebetween. Alternatively, the primary filter 22K is water-sealedly provided at the outer casing 21K, the secondary filter 23T is water-sealedly provided at the base 24T.

As shown in FIG.13 to FIG.15D, the base 24T of the filtering device 20T of the water purifier 2 according to the first embodiment of the present invention comprises a bottom portion 241K, a first spacing portion 242T and a second spacing portion 243T, wherein the first spacing portion 242T and the second spacing portion 243T are both provided at the bottom portion 241K and are extended from the bottom portion 241K, wherein the first water cavity 2401T is provided between the first spacing portion 242T and the second spacing portion 243T, the second water cavity 2402T is defined by the embracement of the second spacing portion 243T. More preferably, the first spacing portion 242T and the second spacing portion 243T are both ring-shaped, and the first spacing portion 242T is provided at the outer side of the second spacing portion 243T. Accordingly, the second spacing portion 243T is provided between the first water cavity 2401T and the second water cavity 2402T, so as to separate the first water cavity 2401T and the second water cavity 2402T with each other.

As shown in FIG.13 to FIG.15D, the purified water channel 2201T of the filtering device 20T of the water purifier 2 according to the first embodiment of the present invention, the water collecting hole 2330T, the flow collecting channel 2331T, the second water cavity 2402T of the base 24K and the second communicating opening 202K of the filtering device 20T define a primary purified water route, the membrane filament channel 2310T of the ultrafiltration membrane filament 231T of the secondary filter 23T, the purified water outlet 2301T of the secondary filter 23T, the first water cavity 2401T of the base 24T and the third communicating opening 203K of the filtering device 20T define a secondary purified water route. It should be understood that the primary purified water route and the secondary purified water route are separated from each other, so as to prevent the water inside the primary purified water route and the secondary purified water route from mixing, in other words, the primary purified water route and the secondary purified water route are separated from each other, so as to prevent the purified water generated by the primary filter 22K from being mixed into the purified water generated by the secondary filter 23T.

As shown in FIG.13 to FIG.15D, the secondary filter 23T of the filtering device 20T of the water purifier 2 according to the first embodiment of the present invention further comprises a shell 232T, wherein the ultrafiltration membrane filaments 231T of the secondary filter 23T are provided inside the shell 232T, and the shell 232T has at least one water inlet 2320T, wherein the inner space and the outer space of the shell 232T are communicated by the water inlet 2320T of the shell 232T, so that when the water purifier 2 of the present invention is under the first purifying working state, the purified water generated by the primary filter 22K flows to the ultrafiltration membrane filament 231T through the water inlet 2320T of the shell 232T under the action of water pressure. Therefore, the water inlet 2320T of the shell 232T of the secondary filter 23T can be regard as a part of the purified water channel 2201T of the filtering device 20T.

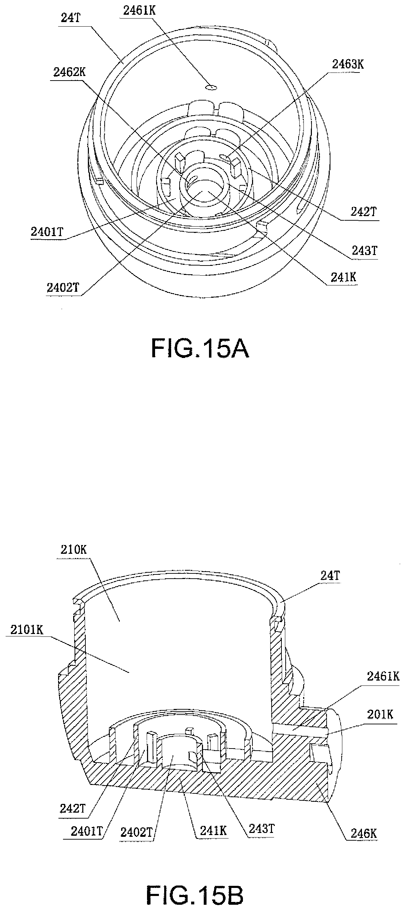

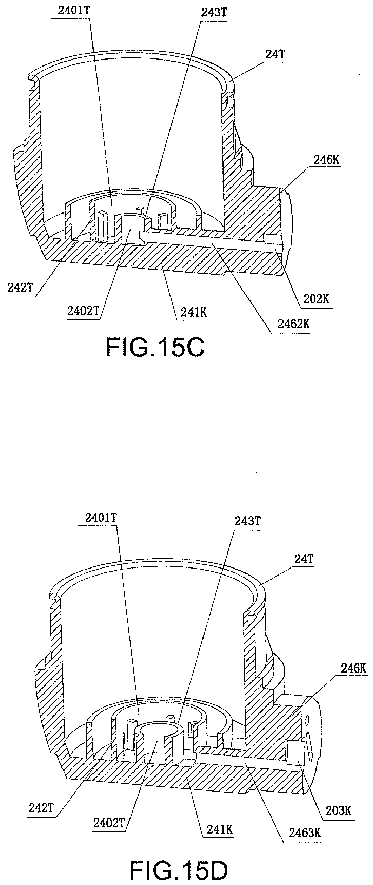

As shown in FIG.13 to FIG.15D, accordingly, when the filtering device 20T of the water purifier 2 according to the first embodiment of the present invention is used to treat the raw water, the users can control the raw water flowing to the first communicating opening 201K of the filtering device 20T through the control valve 10K, and the raw water flows to the raw water channel 2101K of the filtering device 20T under the action of water pressure, then the purified water generated by the treatment of the primary filter 22K flows to the purified water channel 2201T under the action of water pressure, at this time, if the purified water inside the purified water channel 2201T can flow freely through the second communicating opening 202K of the filtering device 20T under the control of the control valve 10K, and the purified water generated by the secondary filter 23T cannot flow freely to the third communicating opening 203K, the purified water generated by the primary filter 22K will flow out and be provided under the action of water pressure through the second communicating opening 202K. Accordingly, at this time, the water purifier 2 according to the first embodiment of the present invention is under a second purifying working state, the purified water generated by the primary filter 22K will flow through the water collecting hole 2330T of the flow collecting tube 233T, the flow collecting channel 2331T, the second water cavity 2402T and the second communicating opening 202K in sequence, and be provided. On the other hand, if the purified water inside the purified water channel 2201T cannot flow freely through the second communicating opening 202K of the filtering device 20T under the control of the control valve 10K, and the purified water generated by the secondary filter 23T can flow freely to the third communicating opening 203K, the purified water generated by the primary filter 22K will be further purified by the secondary filter 23T under the action of water pressure, and the purified water generated by the secondary filter 23T will flow out through the membrane filament channel 2310T, and then flows out and is provided through the purified water outlet 2301T of the secondary filter 23T, the first water cavity 2401T and the third communicating opening 203K. Accordingly, at this time, the water purifier 2 according to the first embodiment of the present invention is under a first purifying working state. As shown in FIG.13 and FIG.15D, further, when the control valve 10K of the water purifier 2 according to the first embodiment of the present invention controls the raw water to back-flush the primary filter 22K of the filtering device 20T, the users can control the raw water flowing to the second communicating opening 202K of the filtering device 20T through the control valve 10K, and the raw water flows to the purified water channel 2201T of the filtering device 20T under the action of water pressure, at this time, under the control of the control valve 10K, the purified water generated by the secondary filter 23T cannot flow freely to the third communicating opening 203K, the raw water inside the purified water channel 2201T back-flushes the primary filter 22K under the action of water pressure, the generated waste water flows to the first communicating opening 201K of the filtering device 20T through the raw water channel 2101K under the action of water pressure, and flows out through the first communicating opening 201K under the control of the control valve 10K. Accordingly, the water purifier 2 according to the first embodiment of the present invention is under a back-flushing working state at this time, that is, the raw water flows into the purified water channel 2201T through the second communicating opening 202K, the second water cavity 2402T, the flow collecting channel 2331T and the water collecting hole 2330T, and back-flushes the primary filter 22K, the generated waste water flows to the first communicating opening 201K through the raw water channel 2101K.

As shown in FIG.13 to FIG.15D, further, the water purifier 2 according to the first embodiment of the present invention has a standby working state, wherein when the water purifier 2 of the present invention is under the standby working state, the users can control the raw water not to flow to the filtering device 20T through the control valve 10K.

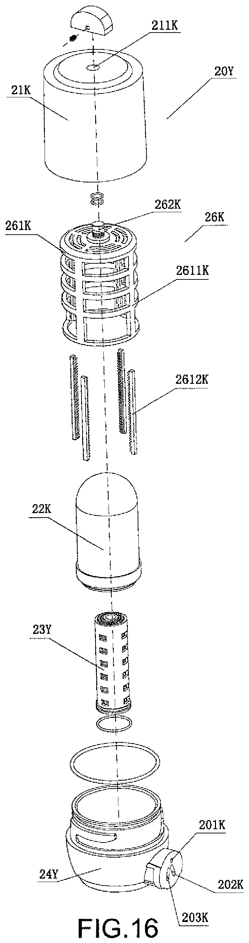

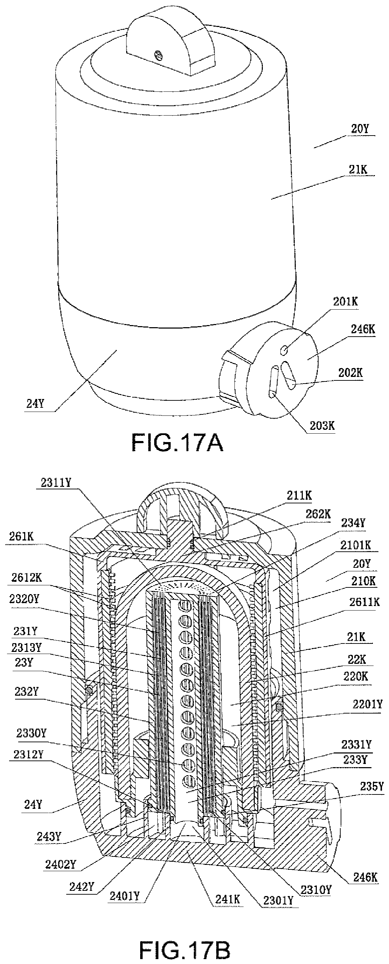

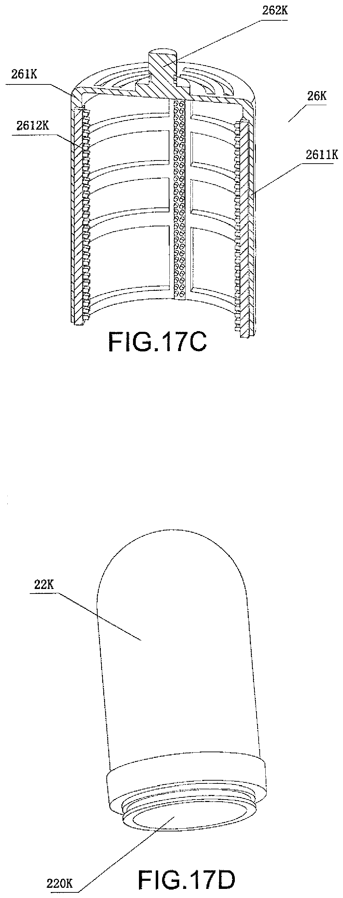

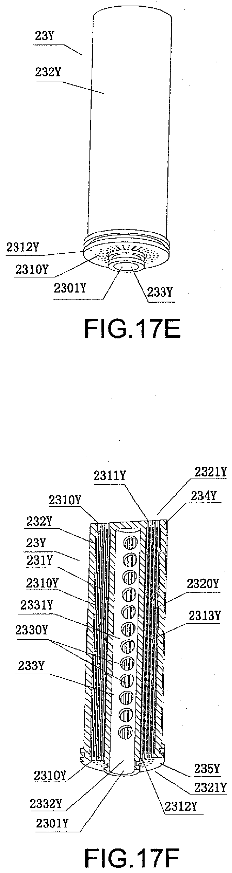

Referring to FIG.16 to FIG.18D, an another alternative embodiment of the filtering device 20K of the water purifier 2 according to the first embodiment of the present invention is shown, wherein the filtering device 20Y comprises a outer casing 21K, a primary filter 22K and a secondary filter 23Y, wherein the outer casing 21K defines a first accommodation cavity 210K, wherein the primary filter 22K and the secondary filter 23Y are all provided inside the first accommodation cavity 210K of the outer casing 21K, and the outer casing 21K and the primary filter 22K define a raw water channel 2101K therebetween, the primary filter 22K and the secondary filter 23Y define a purified water channel 2201Y therebetween, the secondary filter 23Y has a purified water outlet 2301Y. As shown in FIG.16 to FIG.18D, further, the primary filter 22K of the filtering device 20Y of the water purifier 2 according to the first embodiment of the present invention defines a second accommodation cavity 220K, and the secondary filter 23Y is provided inside the second accommodation cavity 220K of the primary filter 22K (accordingly, the purified water channel 2201Y can be regarded as a part of the second accommodation cavity 220K). Accordingly, since the secondary filter 23Y is provided inside the second accommodation cavity 220K of the primary filter 22K, after the raw water flows into the raw water channel 2101K under the action of water pressure and is treated by the primary filter 22K, the purified water generated by the primary filter 22K can flow to the secondary filter 23Y under the action of water pressure and be treated by the secondary filter 23Y, and the cleaner secondary purified water is obtained, wherein the secondary purified water flows out through the purified water outlet 2301Y under the action of water pressure, so as to be provided.

As shown in FIG.16 to FIG.18D, the secondary filter 23Y of the filtering device 20Y of the water purifier 2 according to the first embodiment of the present invention comprises a plurality of ultrafiltration membrane filaments 231Y and a flow collecting tube 233Y, wherein the ultrafiltration membrane filaments 231Y of the secondary filter 23Y and the flow collecting tube 233Y are all provided inside the second accommodation cavity 220K of the primary filter 22K, and the ultrafiltration membrane filaments 231Y are provided to surround the flow collecting tube 233Y, wherein each ultrafiltration membrane filament 231Y defines a membrane filament channel 2310Y, the flow collecting tube 233Y has at least one water collecting hole 2330Y and a flow collecting channel 2331Y, wherein the two ends of the membrane filament channel 2310Y of the ultrafiltration membrane filament 231Y communicate with the purified water channel 2201Y and the second communicating opening 202K respectively, the flow collecting channel 2331Y is provided to communicate with the water collecting hole 2330Y and the purified water outlet 2301Y of the secondary filter 23Y respectively, so that the purified water generated by the primary filter 22K can flow to the ultrafiltration membrane filament 231Y through the purified water channel 2201Y under the action of water pressure, and flows to the second communicating opening 202K of the filtering device 20Y through the membrane filament channel 2310Y of the ultrafiltration membrane filament 231Y. Accordingly, the purified water outlet 2301Y of the secondary filter 23Y defines the water outlet of the flow collecting channel 2331Y. It should be understood that when the second communicating opening 202K of the filtering device 20Y is blocked, the purified water generated by the primary filter 22K flows into the membrane filament channel 2310Y of the ultrafiltration membrane filament 231Y of the secondary filter 23Y, and under the action of water pressure, the ultrafiltration membrane filament 231Y of the secondary filter 23Y further filters the purified water generated by the primary filter 22K and generates the secondary purified water, and the purified water generated by the secondary filter 23Y flows to the flow collecting tube 233Y through the gap between the ultrafiltration membrane filaments 231Y, and flows into the flow collecting channel 2331Y of the flow collecting tube 233Y through the water collecting hole 2330Y of the flow collecting tube 233Y, and then flows out through the purified water outlet 2301Y of the secondary filter 23Y and the third communicating opening 203K. In addition, when the purified water generated by the primary filter 22K flows to the second communicating opening 202K of the filtering device 20Y through the membrane filament channel 2310Y of the ultrafiltration membrane filament 231Y of the secondary filter 23Y, the purified water generated by the primary filter 22K has a flushing action for the ultrafiltration membrane filaments 231Y of the secondary filter 23T, so that the ultrafiltration membrane filaments 231Y of the secondary filter 23Y has a better filtering effect and the service life of the secondary filter 23Y is prolonged. Further, when back-flushing the primary filter 22K of the filtering device 20Y, the raw water flows from the second communicating opening 202K into the purified water channel 2201Y through the ultrafiltration membrane filament 231Y of the secondary filter 23Y, the raw water back-flushes the primary filter 22K under the action of water pressure, and the generated waste water flows to the first communicating opening 201K through the raw water channel 2101K.

As shown in FIG.16 to FIG.18D, the ultrafiltration membrane filament 231Y of the secondary filter 23Y of the filtering device 20Y of the water purifier 2 according to the first embodiment of the present invention comprises a first end 2311Y, a second end 2312Y and an ultrafiltration portion 2313Y extended between the first end 2311Y and the second end 2312Y, wherein the first end 2311Y of the ultrafiltration membrane filament 231Y of the secondary filter 23Y is provided to face the primary filter 22K, and the second end 2312Y of the ultrafiltration membrane filament 231Y of the secondary filter 23Y is provided to face the base 24Y of the filtering device 20Y. It should be understood that the first end 2311Y of the ultrafiltration membrane filament 231Y is communicated with the purified water channel 2201Y, and the second end 2312Y of the ultrafiltration membrane filament 231Y is communicated with the second communicating opening 202K.

As shown in FIG.16 to FIG.18D, the secondary filter 23Y of the filtering device 20Y of the water purifier 2 according to the first embodiment of the present invention further comprises a shell 232K, a first sealing portion 234Y and a second sealing portion 235Y, wherein the shell 232K defines a purified water cavity 2320Y and two openings 2321Y communicated with the purified water cavity 2320Y respectively, the flow collecting tube 233Y further comprises an opening portion 2332Y extended from the flow collecting channel 2331Y, wherein the purified water outlet 2301Y is provided at the opening portion 2332Y, wherein the first sealing portion 234Y and the second sealing portion 235Y are respectively and sealedly provided at the two openings 2321Y of the shell 232Y, the first end 2311Y of the ultrafiltration membrane filament 231Y is sealedly provided at the first sealing portion 234Y, the second end 2312Y is sealedly provided at the second sealing portion 235Y, the ultrafiltration portion 2313Y is provided inside the purified water cavity 2320Y of the shell 232Y, the water collecting hole 2330Y and the flow collecting channel 2331Y of the flow collecting tube 233Y are provided inside the purified water cavity 2320Y, the opening portion 2332Y of the flow collecting tube 233Y is provided at the second sealing portion 235Y, so that the purified water generated by the primary filter 22K can flow into the membrane filament channel 2310Y of the ultrafiltration membrane filament 231Y through the first end 2311Y of the ultrafiltration membrane filament 231Y, after filtered by the ultrafiltration portion 2313Y of the ultrafiltration membrane filament 231Y, the purified water is generated and flows into the purified water cavity 2320Y, and then, under the action of water pressure, it is collected by the water collecting hole 2330Y of the flow collecting tube 233Y and flows to the third communicating opening 203K through the flow collecting channel 2331Y, the opening portion 2332Y of the flow collecting tube 233Y and the purified water outlet 2301Y. In other words, the two sealing portion 234Y, 235Y of the secondary filter 23Y are respectively and sealedly provided at two opening ends of the shell 232Y, two ends of the ultrafiltration membrane filament 231Y are respectively and sealedly provided at the sealing portions 234Y, 235Y of the secondary filter 23Y, so as to define the purified water cavity 2320Y accommodating the ultrafiltration portion 2313Y of the ultrafiltration membrane filament 231Y, the water collecting hole 2330Y and the flow collecting channel 2331K of the flow collecting tube 233Y inside it by the embracement of the shell 232Y of the secondary filter 23Y and the sealing portions 234Y, 235Y, so that the purified water generated by the primary filter 22K can flow into the membrane filament channel 2310Y of the ultrafiltration membrane filament 231Y through the first end 2311Y of the ultrafiltration membrane filament 231Y, after filtered by the ultrafiltration portion 2313Y of the ultrafiltration membrane filament 231Y, the purified water is generated and flows into the purified water cavity 2320Y, and then, under the action of water pressure, it is collected by the water collecting hole 2330Y of the flow collecting tube 233Y and flows to the third communicating opening 203K through the flow collecting channel 2331Y, the opening portion 2332Y of the flow collecting tube 233Y and the purified water outlet 2301Y. Further, when back-flushing the primary filter 22K of the filtering device 20Y, the raw water flows from the second communicating opening 202K of the secondary filter 20Y into membrane filament channel 2310Y of the ultrafiltration membrane filament 231Y through the second end 2312Y of the ultrafiltration membrane filament 231Y of the secondary filter 23Y, and flows into the purified water channel 2201Y through the first end 2311Y of the ultrafiltration membrane filament 231Y, the raw water back-flushes the primary filter 22K under the action of water pressure, and the generated waste water flows to the first communicating opening 201K through the raw water channel 2101K. It should be understood that since the two sealing portion 234Y, 235Y of the secondary filter 23Y are respectively and sealedly provided at two opening ends of the shell 232Y, and two ends of the ultrafiltration membrane filament 231Y are respectively and sealedly provided at the sealing portions 234Y, 235Y of the secondary filter 23Y, the primary purified water generated by the primary filter 22K inside the second accommodation cavity 220K of the primary filter 22K cannot flow into the purified water cavity 2320Y of the secondary filter 23Y. Accordingly, the two sealing portions 234Y, 235Y of the secondary filter 23Y are water-sealedly sealed with the shell 232Y, the ultrafiltration membrane filament 231 is water-sealedly sealed with the sealing portions 234Y, 235Y of the secondary filter 23Y.

As shown in FIG.16 to FIG.18D, the filtering device 20Y of the water purifier 2 according to the first embodiment of the present invention further comprises a base 24Y, wherein the secondary filter 23Y is provided at the base 24Y, and the base 24Y defines a first water cavity 2401Y and a second water cavity 2402Y, wherein the first water cavity 2401Y of the base 24Y is communicated with the purified water outlet 2301Y of the secondary filter 23Y and the third communicating opening 203K of the filtering device 20Y respectively, the second water cavity 2402Y is communicated with the membrane filament channel 2310Y of the ultrafiltration membrane filament 231Y of the secondary filter 23Y and the second communicating opening 202K of the filtering device 20Y respectively. In other words, the membrane filament channel 231 0Y of the ultrafiltration membrane filament 231Y of the secondary filter 23Y is communicated with the second communicating opening 202K of the filtering device 20Y through the second water cavity 2402Y of the base 24Y, so that the purified water generated by the primary filter 22K can flow out through the second communicating opening 202K, the flow collecting channel 2331Y of the flow collecting tube 233Y of the secondary filter 23Y is communicated with the third communicating opening 203K of the filtering device 20Y through the purified water outlet 2301Y of the secondary filter 23Y and the first water cavity 2401Y of the base 24Y, so that the secondary purified water generated by the secondary filter 23Y can flow out through the third communicating opening 203K. It should be understood that when back-flushing the primary filter 22K of the filtering device 20Y, the raw water flows from the second communicating opening 202K of the secondary filter 20Y into membrane filament channel 2310Y through the second water cavity 2402Y of the base 24Y and the second end 2312Y of the ultrafiltration membrane filament 231Y of the secondary filter 23Y, and flows into the purified water channel 2201Y through the first end 2311Y of the ultrafiltration membrane filament 231Y, the raw water back-flushes the primary filter 22K under the action of water pressure, and the generated waste water flows to the first communicating opening 201K through the raw water channel 2101K. Accordingly, the secondary filter 23Y is an internal pressure type filter. Preferably, the second communicating opening 202K and the third communicating opening 203K are both provided at the base 24Y. More preferably, the flow collecting tube 233Y and the secondary filter 23Y are water-sealedly provided at the base 24Y respectively, and the secondary filter 23Y and the base 24Y define the second water cavity 2402Y therebetween, the flow collecting tube 233Y and the base 24Y define the first water cavity 2401Y therebetween.

As shown in FIG.16 to FIG.18D, the base 24Y of the filtering device 20Y of the water purifier 2 according to the first embodiment of the present invention comprises a bottom portion 241K, a first spacing portion 242Y and a second spacing portion 243Y, wherein the first spacing portion 242Y and the second spacing portion 243Y are both provided at the bottom portion 241K and are extended from the bottom portion 241K, wherein the second water cavity 2402Y is provided between the first spacing portion 242Y and the second spacing portion 243Y, the first water cavity 2401Y is defined by the embracement of the first spacing portion 242Y. More preferably, the first spacing portion 242Y and the second spacing portion 243Y are both ring-shaped, and the second spacing portion 243Y is provided at the outer side of the first spacing portion 242Y. Accordingly, the first spacing portion 242Y is provided between the first water cavity 2401Y and the second water cavity 2402Y, so as to separate the first water cavity 2401Y and the second water cavity 2402Y with each other.

As shown in FIG.16 to FIG.18D, the purified water channel 2201Y of the filtering device 20Y of the water purifier 2 according to the first embodiment of the present invention, the membrane filament channel 2310Y, the second water cavity 2402Y of the base 24K and the second communicating opening 202K of the filtering device 20Y define a primary purified water route, the water collecting hole 2330Y of the secondary filter 23Y, the flow collecting channel 2331Y, the purified water outlet 2301Y of the secondary filter 23Y, the first water cavity 2401Y of the base 24Y and the third communicating opening 203K of the filtering device 20Y define a secondary purified water route. It should be understood that the primary purified water route and the secondary purified water route are separated from each other, so as to prevent the water inside the primary purified water route and the secondary purified water route from mixing, in other words, the primary purified water route and the secondary purified water route are separated from each other, so as to prevent the purified water generated by the primary filter 22K from being mixed into the purified water generated by the secondary filter 23Y.

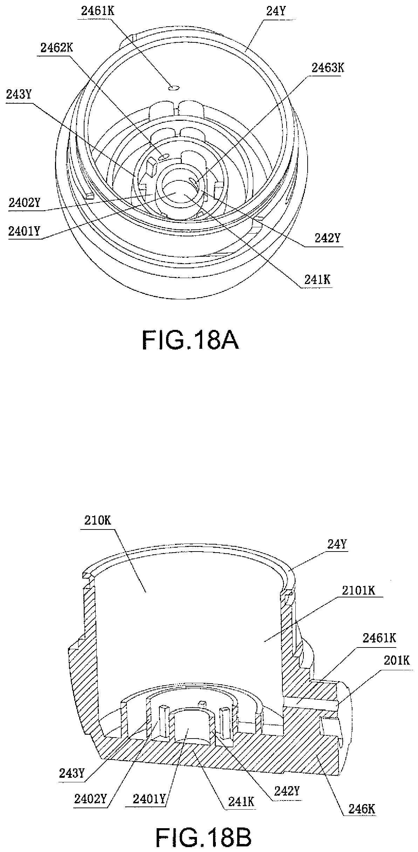

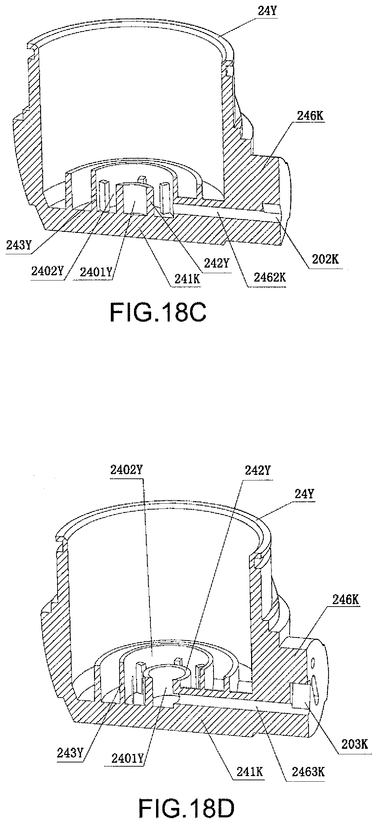

As shown in FIG.16 to FIG.18D, accordingly, when the filtering device 20Y of the water purifier 2 according to the first embodiment of the present invention is used to treat the raw water, the users can control the raw water flowing to the first communicating opening 201K of the filtering device 20Y through the control valve 10K, and the raw water flows to the raw water channel 2101K of the filtering device 20Y under the action of water pressure, then the purified water generated by the treatment of the primary filter 22K flows to the purified water channel 2201Y under the action of water pressure, at this time, if the purified water inside the purified water channel 2201Y can flow freely through the second communicating opening 202K of the filtering device 20Y under the control of the control valve 10K, and the purified water generated by the secondary filter 23Y cannot flow freely to the third communicating opening 203K, the purified water generated by the primary filter 22K will flow in through the first end 2311Y of the ultrafiltration membrane filament 231Y under the action of water pressure, and flows out through the second end 2312Y of the ultrafiltration membrane filament 231Y, an then flows out and is provided through the second communicating opening 202K. Accordingly, at this time, the water purifier 2 according to the first embodiment of the present invention is under a second purifying working state, the purified water generated by the primary filter 22K will flow through the purified water channel 2201Y, the membrane filament channel 2310Y of the ultrafiltration membrane filament 231Y, the second water cavity 2402Y and the second communicating opening 202K in sequence, and be provided. On the other hand, if the purified water inside the purified water channel 2201Y cannot flow freely through the second communicating opening 202K of the filtering device 20Y under the control of the control valve 10K, and the purified water generated by the secondary filter 23Y can flow freely to the third communicating opening 203K, the purified water generated by the primary filter 22K will flow in through the first end 2311Y of the ultrafiltration membrane filament 231Y under the action of water pressure, and is collected by the water collecting hole 2330Y and the flow collecting channel 2331Y of the flow collecting tube 233Y after ultrafiltration treated by the ultrafiltration membrane filament 231Y, and then flows out and is provided through the purified water outlet 2301Y of the secondary filter 23Y, the first water cavity 2401Y and the third communicating opening 203K. Accordingly, at this time, the water purifier 2 according to the first embodiment of the present invention is under a first purifying working state. As shown in FIG.16 and FIG.18D, further, when the control valve 10K of the water purifier 2 according to the first embodiment of the present invention controls the raw water to back-flush the primary filter 22K of the filtering device 20Y, the users can control the raw water flowing to the second communicating opening 202K of the filtering device 20Y through the control valve 10K, and flowing into the purified water channel 2201Y through the second water cavity 2402Y and the membrane filament channel 2310Y of the ultrafiltration membrane filament 231Y, at this time, under the control of the control valve 10K, the purified water generated by the secondary filter 23Y cannot flow freely to the third communicating opening 203K, the raw water inside the purified water channel 2201Y back-flushes the primary filter 22K under the action of water pressure, the generated waste water flows to the first communicating opening 201K of the filtering device 20Y through the raw water channel 2101K under the action of water pressure, and flows out through the first communicating opening 201K under the control of the control valve 10K. Accordingly, the water purifier 2 according to the first embodiment of the present invention is under a back-flushing working state at this time.

As shown in FIG.16 to FIG.18D, further, the water purifier 2 according to the first embodiment of the present invention has a standby working state, wherein when the water purifier 2 of the present invention is under the standby working state, the users can control the raw water not to flow to the filtering device 20Y through the control valve 10K.

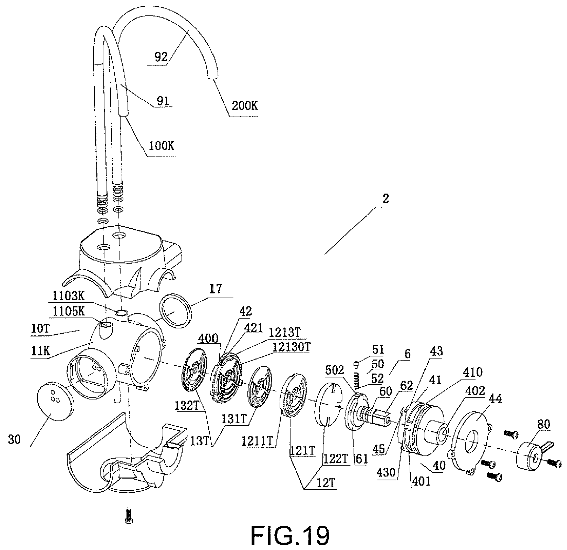

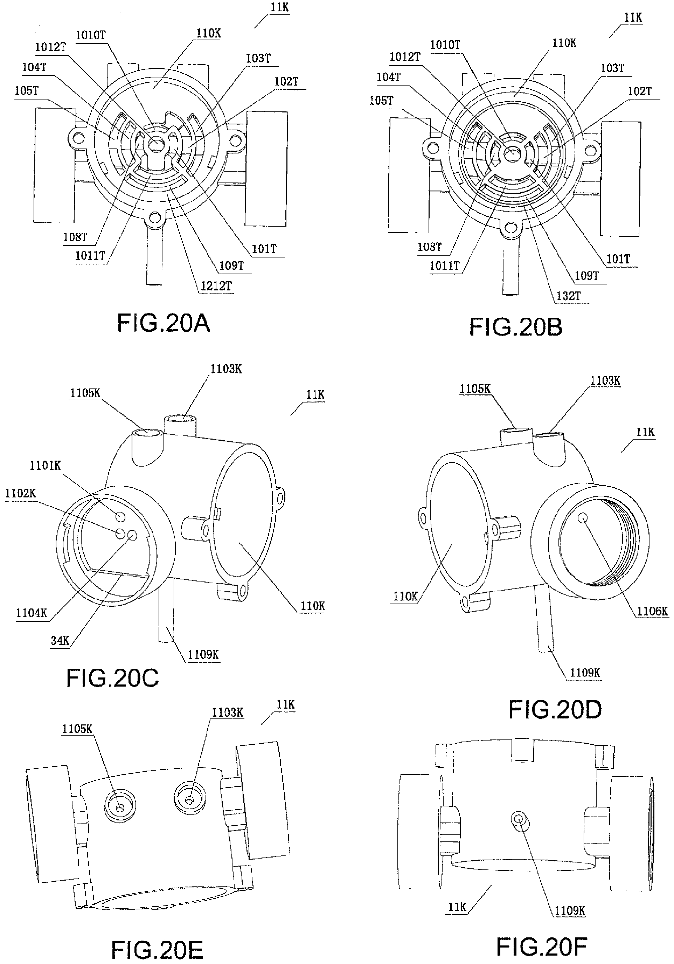

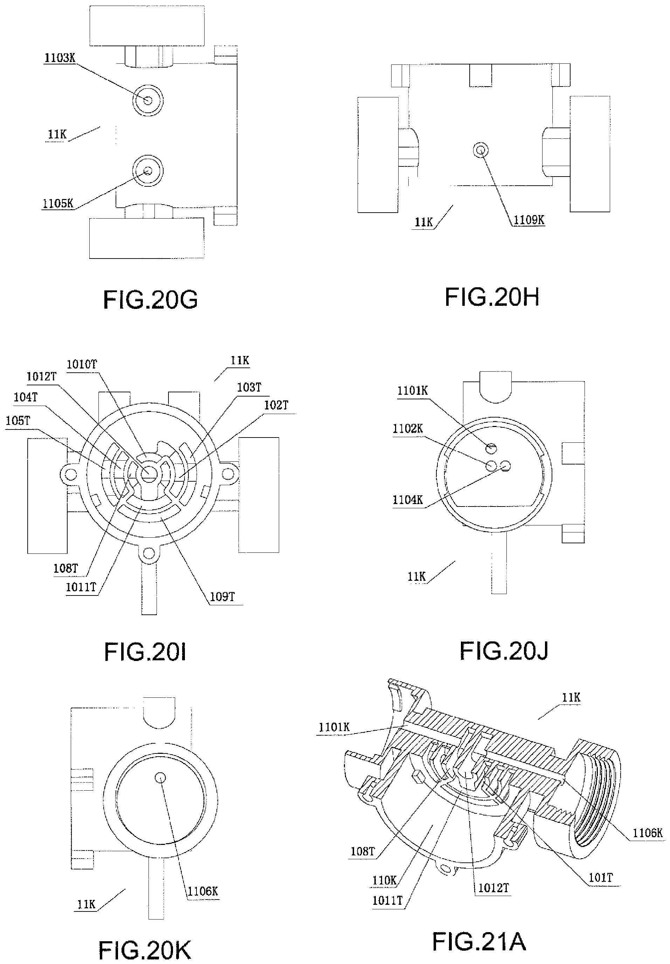

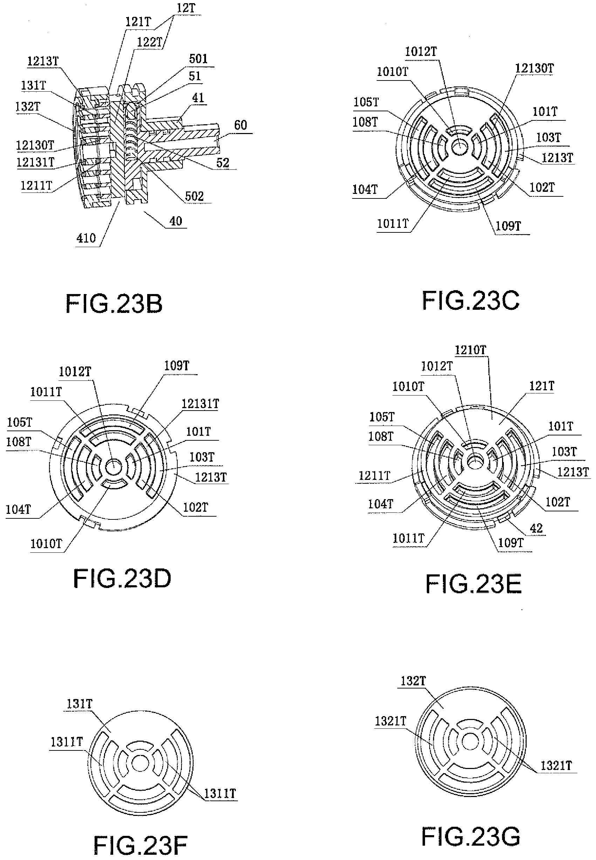

Referring to FIG.19 to FIG.27F, an alternative embodiment of the control valve 10K of the water purifier 2 according to the first embodiment of the present invention is shown, wherein the control valve 10T comprises a valve body 11K and a valve core 12T, wherein the valve body 11K defines a valve cavity 110K, a first opening 1101K, a second opening 1102K, a third opening 1103K, a fourth opening 1104K, a fifth opening 1105K, a raw water inlet 1106K and a draining opening 1109K, wherein the valve core 12T is provided inside the valve cavity 110K, wherein the first opening 1101K of the valve body 11K is adapted to be communicated with the first communicating opening 201K of the filtering device 20K, the second opening 1102K of the valve body 11K is adapted to be communicated with the second communicating opening 202K of the filtering device 20K, the fourth opening 1104K of the valve body 11K is adapted to be communicated with the third communicating opening 203K of the filtering device 20K, the fifth opening 1105K of the valve body 11K is adapted to be communicated with a first water outlet 100K, the third opening 1103K of the valve body 11K is adapted to be communicated with a second water outlet 200K, the raw water inlet 1106K of the valve body 11K is adapted to be communicated with the raw water source.

As shown in FIG.19 to FIG.21F and FIG.25A, the control valve 10T of the water purifier 2 according to the first embodiment of the present invention has a first purifying working position, wherein when the control valve 10T is under the first purifying working position, the valve core 12T of the control valve 10T defines a first communicating passage 1001T and a second communicating passage 1002T, wherein the first communicating passage 1001T is communicated with the first opening 1101K of the valve body 11K and the raw water inlet 1106K respectively, the second communicating passage 1002T is communicated with the fourth opening 1104K of the valve body 11K and the fifth opening 1105K respectively. Further, when the control valve 10T is under the first purifying working position, the second opening 1102K of the valve body 11K is not communicated with the third opening 1103K. In other words, when the control valve 10T is under the first purifying working position, the second opening 1102K of the valve body 11K cannot communicate with the third opening 1103K. Accordingly, when the control valve 10T is under the first purifying working position, under the action of water pressure, the raw water or the tap water flows from the raw water inlet 1106K of the valve body 11K of the control valve 10T, and flows to the first opening 1101K of the valve body 11K through the first communicating passage 1001T, so as to further flow to the raw water channel 2101K of the filtering device 20K through the first communicating opening 201K of the filtering device 20K, after the raw water flowing into the raw water channel 2101K is filtered by the primary filter 22K, the generated purified water flows into the purified water channel 2201K. Further, when the control valve 10T is under the first purifying working position, the second opening 1102K of the valve body 11K cannot communicate with the third opening 1103K, so that the purified water inside the purified water channel 2201K cannot flow freely through the second communicating opening 202K of the filtering device 20K under the control the control valve 10T. Therefore, the purified water generated by the primary filter 22K is further purified and treated by the secondary filter 23K, the purified water generated by the secondary filter 23K flows out from the third communicating opening 203K through the purified water outlet 2301K, and flows through the fourth opening 1104K, the second communicating passage 1002T and the fifth opening 1105K in sequence, so that the purified water generated by the secondary filter 23K can be provided through the first water outlet 100K communicated with the fifth opening 1105K. Preferably, the secondary filter 23K is an ultrafiltration filter. Accordingly, the purified water generated by the secondary filter 23K can be directly drunk. It should be understood that when the control valve 10T of the water purifier 2 according to the first embodiment of the present invention is controlled under the first purifying working position, the water purifier 2 of the present invention is controlled under its first purifying working state.

As shown in FIG.19 to FIG.21F and FIG.25B, the control valve 10T of the water purifier 2 according to the first embodiment of the present invention is further provided with a second purifying working position, wherein when the control valve 10T is under the second purifying working position, the valve core 12T of the control valve 10T defines a third communicating passage 1003T and a fourth communicating passage 1004T, wherein the third communicating passage 1003T is communicated with the first opening 1101K of the valve body 11K and the raw water inlet 1106K respectively, the fourth communicating passage 1004T is communicated with the second opening 1102K of the valve body 11K and the third opening 1103K respectively. Further, when the control valve 10T is under the second purifying working position, the fourth opening 1104K of the valve body 11K is not communicated with the fifth opening 1105K. In other words, when the control valve 10T is under the second purifying working position, the fourth opening 1104K of the valve body 11K cannot communicate with the fifth opening 1105K. Accordingly, when the control valve 10T is under the second purifying working position, under the action of water pressure, the raw water or the tap water flows from the raw water inlet 1106K of the valve body 11K of the control valve 10T, and flows to the first opening 1101K of the valve body 11K through the third communicating passage 1003T, and further flows to the raw water channel 2101K of the filtering device 20K through the first communicating opening 201K of the filtering device 20K, after the raw water flowing into the raw water channel 2101K is filtered by the primary filter 22K, the generated purified water flows into the purified water channel 2201K. At this time, since the second opening 1102K of the valve body 11K is communicated with the third opening 1103K through the fourth communicating passage 1004T, therefore, the purified water generated by the primary filter 22K flows out through the second communicating opening 202K after flowing into the purified water channel 2201K, and flows through the second opening 1102K, the fourth communicating passage 1004T and the third opening 1103K in sequence, so that the purified water generated by the primary filter 22K can be provided through the second water outlet 200K communicated with the third opening 1103K. It should be understood that when the control valve 10T of the water purifier 2 according to the first embodiment of the present invention is controlled under the second purifying working position, the water purifier 2 of the present invention is controlled under its second purifying working state.

As shown in FIG.19 to FIG.21F, and FIG.25C, the control valve 10T of the water purifier 2 according to the first embodiment of the present invention is further provided with a standby working position, wherein when the water purifier 2 of the present invention is under the standby working state, the control valve 10T controls the raw water not to flow to the filtering device 20K and does not provide the raw water or the purified water to the users. Further, when the control valve 10T is under the standby working position, the raw water inlet 1106K is not communicated with the first opening 1101K, the second opening 1102K, the third opening 1103K, the fourth opening 1104K and the fifth opening 1105K. It should be understood that when the control valve 10T of the water purifier 2 according to the first embodiment of the present invention is controlled under the standby working position, the water purifier 2 of the present invention is controlled under its standby working state.

As shown in FIG.19 to FIG.21F, and FIG.25D, the control valve 10T of the water purifier 2 according to the first embodiment of the present invention is further provided with a back-flushing working position, wherein when the control valve 10T is under the back-flushing working position, the valve core 12T of the control valve 10T defines a fifth communicating passage 1005T and a sixth communicating passage 1006T, wherein the fifth communicating passage 1005T is communicated with the second opening 1102K of the valve body 11K and the raw water inlet 1106K respectively, the sixth communicating passage 1006T is communicated with the first opening 1101K of the valve body 11K and the draining opening 1109K respectively. Accordingly, when the control valve 10T is under back-flushing working position, under the action of water pressure, the raw water or the tap water flows from the raw water inlet 1106K of the valve body 11K of the control valve 10T, and flows to the second opening 1102K of the valve body 11K through the fifth communicating passage 1005T, and further flows into the filtering device 20K through the second communicating opening 202K of the filtering device 20K, the raw water flows into the primary filter 22K through the purified water channel 2201K of the filtering device 20K under the action of water pressure, after back-flushing the primary filter 22K, the generated waste water flows into the raw water channel 2101K. At this time, since the first opening 1101K of the valve body 11K is communicated with the draining opening 1109K through the sixth communicating passage 1006T, therefore, the waste water generated by using the raw water to back-flush the primary filter 22K flows out through the first communicating opening 201K after flowing into the raw water channel 2101K, and flows through the first opening 1101K, the sixth communicating passage 1006T and the draining opening 1109K in sequence, so that the waste water generated by using the raw water to back-flush the primary filter 22K can flow out through the draining opening 1109K. It should be understood that when the control valve 10T of the water purifier 2 according to the first embodiment of the present invention is controlled under the back-flushing working position, the water purifier 2 of the present invention is controlled under its back-flushing working state.

As shown in FIG.19 to FIG.27F, the control valve 10T of the water purifier 2 according to the first embodiment of the present invention is a plane valve, wherein the valve core 12T of the plane valve 10T further comprises a fixed disk 121T and a rotatable disk 122T, wherein the fixed disk 121T has a first fluid control surface 1210T, the rotatable disk 122T has a second fluid control surface 1220T, wherein the rotatable disk 122T and the fixed disk 121T are both provided inside the valve cavity 110K, wherein the second fluid control surface 1220T of the rotatable disk 122T is provided at the first fluid control surface 1210T of the fixed disk 121T, and the rotatable disk 122T is provided to be capable of rotating relative to the fixed disk 121T.

As shown in FIG.19 to FIG.27F, the plane valve 10T of the water purifier 2 according to the first embodiment of the present invention has a first channel 101T, a second channel 102T, a third channel 103T, a fourth channel 104T, a fifth channel 105T, a sixth channel 106T and a seventh channel 107T and a raw water inlet channel 1012T, wherein the first channel 101T, the second channel 102T, the third channel 103T, the fourth channel 104T, the fifth channel 105T and the raw water inlet channel 1012T are provided at the fixed disk 121T respectively and are extended from the first fluid control surface 1210T of the fixed disk 121T respectively; the sixth channel 106T and the seventh channel 107T are provided at the rotatable disk 122T respectively and are extended from the second fluid control surface 1220T of the rotatable disk 122T respectively, wherein the first channel 101T is communicated with the first opening 1101K, the second channel 102T is communicated with the second opening 1102K, the third channel 103T is communicated with the third opening 1103K, the fourth channel 104T is communicated with the fourth opening 110K, the fifth channel 105T is communicated with the fifth opening 1105K, the raw water inlet channel 1012T is communicated with the sixth channel 106T and the raw water inlet 1106K respectively. More preferably, the sixth channel 106T and the seventh channel 107K of the rotatable disk 122T are preferably communicating blind holes.

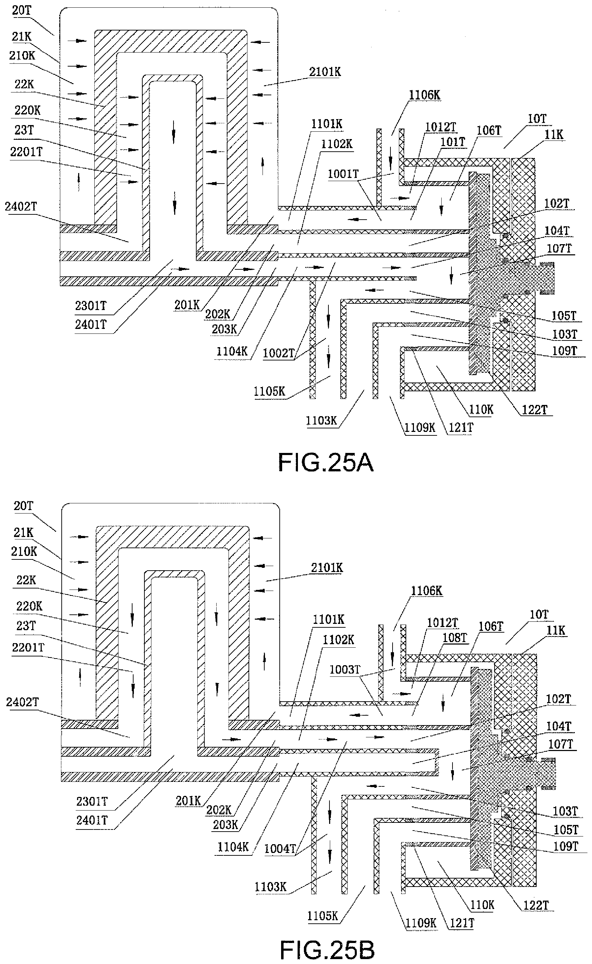

As shown in FIG.25A and FIG.27A to FIG.27B, the rotatable disk 122T of the plane valve 10T of the water purifier 2 according to the first embodiment of the present invention is capable of rotating relative to the fixed disk 121T, so that the plane valve 10T has a first purifying working position, wherein when the plane valve 10T of the water purifier 2 according to the first embodiment of the present invention is under the first purifying working position, the sixth channel 106T of the plane valve 10T is communicated with the raw water inlet channel 1012T and the first channel 101T respectively, so as to define the first communicating passage 1001T communicated with the raw water inlet 1106K and the first opening 1101K respectively, the seventh channel 107T is communicated with the fourth channel 104T and the fifth channel 105T respectively, so as to define the second communicating passage 1002T communicated with the fourth opening 1104K and the fifth opening 1105K respectively; As shown in FIG.27, when the plane valve 10T is under the first purifying working position, the second channel 102T and the third channel 103T of the plane valve 10T are blocked (or closed) by the rotatable disk 122T respectively. Accordingly, the primary purified water generated by the primary filter 22K will flow to the secondary filter 23K under the action of water pressure, and be provided through the fourth opening 1104K, the second communicating passage 1002T and the fifth opening 1105K after being further purified and treated by the secondary filter 23K.

As shown in FIG.25B and FIG.27C to FIG.27D, the plane valve 10T of the water purifier 2 according to the first embodiment of the present invention is further provided with an eighth channel 108T, wherein the eighth channel 108T is provided at the fixed disk 121T and is extended from the first fluid control surface 1210T of the fixed disk 121T, wherein the eighth channel 108T is communicated with the first opening 1101K. The plane valve 10T of the water purifier 2 according to the first embodiment of the present invention has a second purifying working position, wherein when the plane valve 10T is under the second purifying working position, the sixth channel 106T of the plane valve 10T is communicated with the raw water inlet channel 1012T and the eighth channel 108T respectively, so as to define the third communicating passage 1003T communicated with the raw water inlet 1106K and the first opening 1101K respectively, the seventh channel 107T is communicated with the second channel 102T and the third channel 103T respectively, so as to define the fourth communicating passage 1004T communicated with the second opening 1102K and the third opening 1103K respectively. When the plane valve 10T of the water purifier 2 according to the first embodiment of the present invention is under the second purifying working position, the fourth channel 104T and the fifth channel 105T of the plane valve 10T are blocked (or closed) by the rotatable disk 122T respectively, so that the water inside the fourth channel 104T cannot flow freely. Accordingly, the primary purified water generated by the primary filter 22K will flow to the second opening 1102K under the action of water pressure, and be provided through the fourth communicating passage 1004T and the third opening 1103K.

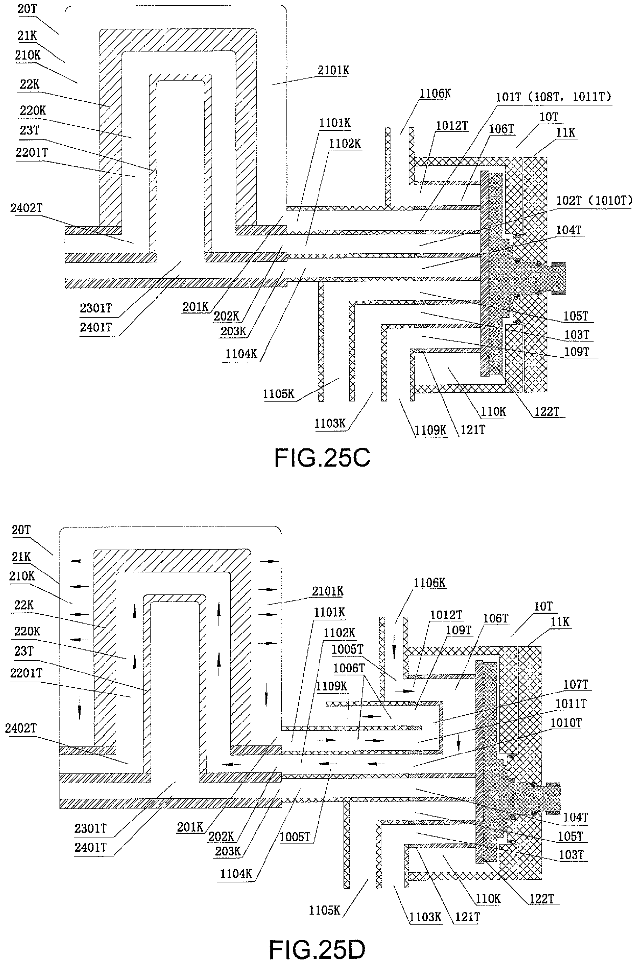

As shown in FIG.25C to FIG.27E, the plane valve 10T of the water purifier 2 according to the first embodiment of the present invention is further provided with a standby working position, wherein when the plane valve 10T is under the standby working position, the sixth channel 106T of the plane valve 10T is only communicated with the raw water inlet channel 1012T, the seventh channel 107T is blocked by the first fluid control surface 1210T of the fixed disk 121T The sixth channel 106T of the plane valve 10T is only communicated with the raw water inlet channel 1012T, which causes the raw water to flow to the sixth channel 106T only through the raw water inlet 1106K, the seventh channel 107T is blocked by the first fluid control surface 1210T of the fixed disk 121T, which further cuts off the flow of water flowing through the plane valve 10T. Further, when the plane valve 10T is under the standby working position, the first channel 101T, the second channel 102T, the third channel 103T, the fourth channel 104T, the fifth channel 105T and the eighth channel 108T of the fixed disk 121T are blocked (or closed) by the rotatable disk 122T respectively. That is, when the plane valve 10T of the water purifier 2 according to the first embodiment of the present invention is under the standby working position, the plane valve 10T is capable of preventing the raw water from flowing through the plane valve 10T, so that the plane valve 10T can control the raw water not to flow to the filtering device 20K and does not provide the raw water or the purified water to the users.

As shown in FIG.25D to FIG.27F, the plane valve 10T of the water purifier 2 according to the first embodiment of the present invention is further provided with a ninth channel 109T, a tenth channel 1010T and an eleventh channel 1011T, wherein the ninth channel 109T, the tenth channel 1010T and the eleventh channel 1011T are provided at the fixed disk 121T respectively and are extended from the first fluid control surface 1210K of the fixed disk 121T respectively, wherein the ninth channel 109T is communicated with the draining opening 1109K, the tenth channel 1010T is communicated with the second opening 1102K, the eleventh channel 1011T is communicated with the first opening 1101K. The plane valve 10T of the water purifier 2 according to the first embodiment of the present invention has a back-flushing working position, wherein when the plane valve 10T is under the back-flushing working position, the sixth channel 106T of the plane valve 10T is communicated with the raw water inlet channel 1012T and the tenth channel 1010T respectively, so as to define the fifth communicating passage 1005T communicated with the raw water inlet 1106K and the second opening 1102K respectively, the seventh channel 107T is communicated with the ninth channel 109T and the eleventh channel 1011T respectively, so as to define the sixth communicating passage 1006T communicated with the first opening 1101K and the draining opening 1109K respectively. As shown in FIG.27F, when the plane valve 10T of the water purifier 2 according to the first embodiment of the present invention is under the standby working position, the first channel 101T, the second channel 102T, the third channel 103T, the fourth channel 104T, the fifth channel 105T and the eighth channel 108T of the plane valve 10T are blocked (or closed) by the rotatable disk 122T respectively.

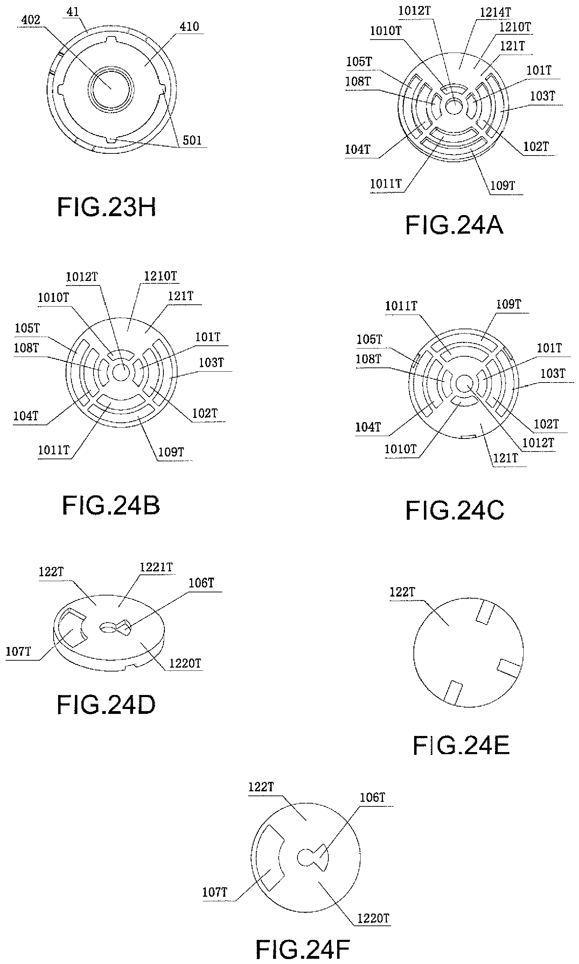

As shown in FIG.24A to FIG.24F and FIG.26A to FIG.11D, the first fluid control surface 1210T of the fixed disk 121T of the plane valve 10T of the water purifier 2 according to the first embodiment of the present invention defines an inner portion 12101T, an extending portion 12102T extended outward from the inner portion 12101T and an edge portion 12103T extended outward from the extending portion 12102T, wherein the second channel 102T, the third channel 103T, the fourth channel 104T, the fifth channel 105T, the ninth channel 109T and the eleventh channel 1011T are extended from the edge portion 12103T of the first fluid control surface 1210T of the fixed disk 121K, the first channel 101T, the eighth channel 108T and the tenth channel 1010T are extended from the extending portion 12102T of the first fluid control surface 1210T of the fixed disk 121T, the raw water inlet channel 1012T is extended from the inner portion 12101T of the first fluid control surface 1210T of the fixed disk 121T, the second fluid control surface 1220T of the rotatable disk 122T of the plane valve 10T defines an inner region 12201T, an extending region 12202T extended outward from the inner region 12201T and an edge region 12203T extended outward from the extending region 12202T, wherein the sixth channel 106T is extended from the inner region 12201T and the extending region 12202T of the second fluid control surface 1220T, the seventh channel 107T is extended from the edge region 12203T of the second fluid control surface 1220T of the rotatable disk 122T. Further, when the second fluid control surface 1220T of the rotatable disk 122T is provided at the first fluid control surface 1210T of the fixed disk 121T, the inner portion 12101T of the first fluid control surface 1210T of the fixed disk 121T is directly facing the inner region 12201T of the second fluid control surface 1220T, the extending portion 12102T of the first fluid control surface 1210T of the fixed disk 121T is directly facing the extending region 12202T of the second fluid control surface 1220T, the edge portion 12103T of the first fluid control surface 1210T of the fixed disk 121T is directly facing the edge region 12203T of the second fluid control surface 1220T of the rotatable disk 122T. Preferably, the outer diameter of the rotatable disk 122T is the same as the outer diameter of the fixed disk 121T.

As shown in FIG.26A to FIG.26D, the first channel 101T, the second channel 102T, the third channel 103T, the fourth channel 104T, the fifth channel 105T, the eighth channel 108T, the ninth channel 109T, the tenth channel 1010T and the eleventh channel 1011T of the plane valve 10T of the water purifier 2 according to the first embodiment of the present invention are spacedly arranged y at the first fluid control surface 1210T of the fixed disk 121T; the sixth channel 106T and the seventh channel 107T of the plane valve 10T are spacedly provided at the second fluid control surface 1220T of the rotatable disk 122T.

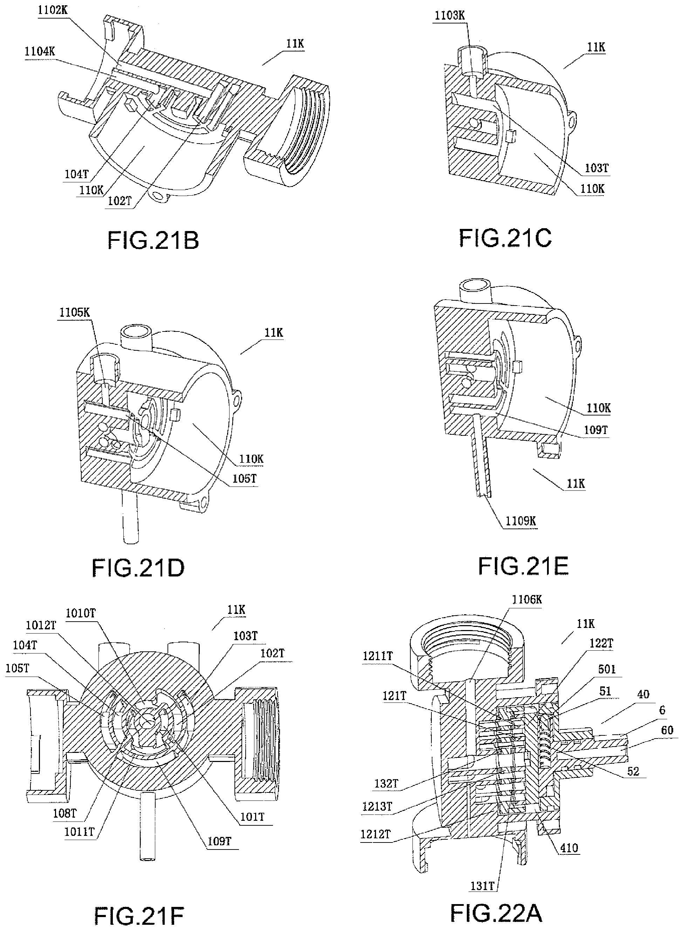

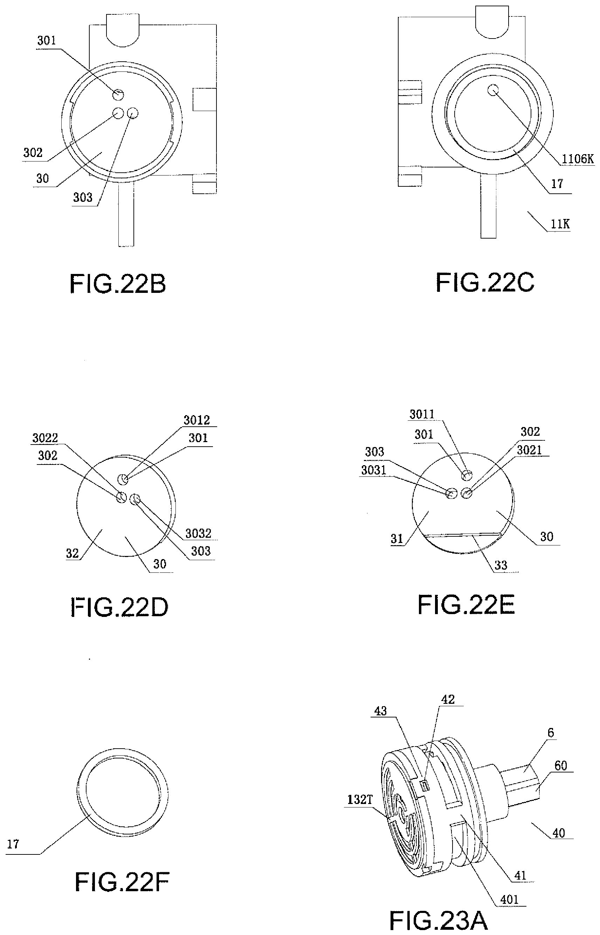

As shown in FIG.22A and FIG.23A to FIG.24F, the fixed disk 121T of the valve core 12T of the plane valve 10K of the water purifier 2 according to the first embodiment of the present invention comprises an upper end portion 1211T, a lower end portion 1212T and a fixing portion 1213T provided between the upper end portion 1211T and the lower end portion 1212T, wherein the upper end portion 1211T defines the first fluid control surface 1210T of the fixed disk 121T, and the lower end portion 1212T is provided inside the valve cavity 110K of the valve body 11K. Preferably, the lower end portion 1212T of the fixed disk 121T of the valve core 12T of the plane valve 10T of the water purifier 2 of the present invention is integrally provided at the inner wall of the valve body 11K of the plane valve 10T.

As shown in FIG.22A and FIG.23A to FIG.24F, the plane valve 10T of the water purifier 2 according to the first embodiment of the present invention further comprises a sealing assembly 13T, wherein the sealing assembly 13T has a first seal 131T, wherein the first seal 131T is provided between the upper end portion 1211T and the fixing portion 1213T of the fixed disk 121T Further, the first seal 131T has a plurality of first sealing strips 1311T, the fixing portion 1213T of the fixed disk 121T has a plurality of first sealing grooves 12130T, wherein the first sealing grooves 12130T are provided to respectively surround the first channel 101T, the second channel 102T, the third channel 103T, the fourth channel 104T, the fifth channel 105T, the eighth channel 108T, the ninth channel 109T, the tenth channel 1010T, the eleventh channel 1011T and the raw water inlet channel 1012T of the fixed disk 121T, the first sealing strips 1311T of the first seal 131T are provided according to the first sealing grooves 12130T of the fixing portion 1213T, so that the first sealing strips 1311T of the first seal 131T can be engaged with the first sealing grooves 12130T of the fixing portion 1213T and realizes the sealing between the upper end portion 1211T and the fixing portion 1213T of the fixed disk 121T. It should be understood that the first sealing grooves 12130T are defined at one side of the fixing portion 1213T facing the upper end portion 1211T. Further, the sealing assembly 13T has a second seal 132T, wherein the second seal 132T is provided between the fixing portion 1213T and the lower end portion 1212T of the fixed disk 121T. Further, the second seal 132T has a plurality of second sealing strips 1321T, the fixing portion 1213T of the fixed disk 121T has a plurality of second sealing grooves 12131T, wherein the second sealing grooves 12131T are provided to respectively surround the first channel 101T, the second channel 102T, the third channel 103T, the fourth channel 104T, the fifth channel 105T, the eighth channel 108T, the ninth channel 109T, the tenth channel 1010T, the eleventh channel 1011T and the raw water inlet channel 1012T of the fixed disk 121T, the second sealing strips 1321T of the second seal 132T are provided according to the second sealing grooves 12131T of the fixing portion 1213T, so that the second sealing strips 1321T of the second seal 132T can be engaged with the second sealing grooves 12131T of the fixing portion 1213T and realizes the sealing between the lower end portion 1212T and the fixing portion 1213T of the fixed disk 121T. It should be understood that the second sealing grooves 12131T are defined at one side of the fixing portion 1213T facing the lower end portion 1212T.

As shown in FIG.22A and FIG.23A to FIG.24F, the accommodation chamber 410 of the fixing holder 41 of the fixing device 40 of the water purifier 2 according to the first embodiment of the present invention is provided to be adapted to accommodate the upper end portion 1211T of the fixed disk 121T and the rotatable disk 122T inside it. As shown in FIG.22A and FIG.23A to FIG.24F, further, the upper end portion 1211T of the fixed disk 121T is adapted to be detachably clamped at the fixing portion 1213T of the fixed disk 121T, the fixing portion 1213T of the fixed disk 121T is adapted to be detachably clamped at the lower end portion 1212T of the fixed disk 121T, so that the upper end portion 1211T of the fixed disk 121T cannot rotate relative to the fixing portion 1213T, the fixing portion 1213T of the fixed disk 121T cannot rotate relative to the lower end portion 1212T.

As shown in FIG.24A to FIG.27F, the first fluid control surface 1210T of the fixed disk 121T of the plane valve 10T of the water purifier 2 according to the first embodiment of the present invention has an inner portion 12101T, an extending portion 12102T extended outward from the inner portion 12101T and an edge portion 12103T extended outward from the extending portion 12102T shown by the dashed line in the drawings, wherein the inner portion 12101T, the extending portion 12102T and the edge portion 12103T are provided at a top end portion 1214T of the fixed disk 121T, and the extending portion 12102T and the edge portion 12103T (or the part other than the inner portion 12101T) of the first fluid control surface 1210T are equally divided into a first portion 1201T, a second portion 1202T, a third portion 1203T and a fourth portion 1204T shown by the dashed line; the second fluid control surface 1220T of the rotatable disk 122T of the plane valve 10T has an inner region 12201T, an extending region 12202T extended outward from the inner region 12201T and an edge region 12203T extended outward from the extending region 12202T shown by the dashed line in the drawings, wherein the inner region 12201T, the extending region 12202T and the extending region 12202T are provided at a bottom end portion 1221T of the rotatable disk 122T, and the extending region 12202T and the edge region 12203T (or the part other than the inner region 12201T) of the second fluid control surface 1220T are equally divided into a first region 2001T, a second region 2002T, a third region 2003T and a fourth region 2004T shown by the dashed line; wherein the first channel 101T is extended downward from the first portion 1201T of the first fluid control surface 1210T of the fixed disk 121T, the second channel 102T is extended downward from the first portion 1201T of the first fluid control surface 1210T of the fixed disk 121T, the third channel 103T is extended downward from the first portion 1201T of the first fluid control surface 1210T of the fixed disk 121T, the fourth channel 104T is extended downward from the third portion 1203T of the first fluid control surface 1210T of the fixed disk 121T, the fifth channel 105T is extended downward from the third portion 1203T of the first fluid control surface 1210T of the fixed disk 121T, the sixth channel 106T is extended upward from the inner region 12201T of the second fluid control surface 1220T of the rotatable disk 122T and the first region 2001T, the seventh channel 107T is extended upward from the third region 2003T of the second fluid control surface 1220T of the rotatable disk 122T, the eighth channel 108T is extended downward from the third portion 1203T of the first fluid control surface 1210T of the fixed disk 121T, the ninth channel 109T is extended downward from the second portion 1202T of the first fluid control surface 1210T of the fixed disk 121T, the tenth channel 1010T is extended downward from the fourth portion 1204T of the first fluid control surface 1210T of the fixed disk 121T, the eleventh channel 1011T is extended downward from the second portion 1202T of the first fluid control surface 1210T of the fixed disk 121T, the raw water inlet channel 1012T is extended downward from the inner portion 12101T of the first fluid control surface 1210T of the fixed disk 121T. As shown in FIG.26A to FIG.26D, preferably, the extending portion 12102T and the edge portion 12103T of the first fluid control surface 1210T are equally divided clockwise into the first portion 1201T, the second portion 1202T, the third portion 1203T and the fourth portion 1204T, the extending region 12202T and the edge region 12203T of the second fluid control surface 1220T of the rotatable disk 122T of the plane valve 10T are equally divided clockwise into the first region 2001T, the second region 2002T, the third region 2003T and the fourth region 2004T In other words, the first fluid control surface 1210T of the fixed disk 121T of the plane valve 10T defines four equal divisions, and the second fluid control surface 1220T of the rotatable disk 122T of the plane valve 10T defines four equal divisions, wherein when the rotatable disk 122T of the plane valve 10T is rotated until the first division (the first region 2001T) of the second fluid control surface 1220T of the rotatable disk 122T directly faces the fourth division (the fourth portion 1204T) of the first fluid control surface 1210T of the fixed disk 121T, the third division (the third region 2003T) of the second fluid control surface 1220T of the rotatable disk 122T of the plane valve 10T directly faces the second division (the second portion 1202T) of the first fluid control surface 1210T of the fixed disk 121T, so that the sixth channel 106T of the plane valve 10T is communicated with the raw water inlet channel 1012T and the tenth channel 1010T respectively, and the seventh channel 107T is communicated with the ninth channel 109T and the eleventh channel 1011T respectively, so as to allow the raw water to flow into the filtering device 20K through the raw water inlet 1106K, the raw water inlet channel 1012T, the sixth channel 106T, the tenth channel 1010T, the second opening 1102K and the second communicating opening 202K. After back-flushing (referring to the flow direction of the water in the primary filter 22K during the back-flushing is opposite to the flow direction of the water in the primary filter 22K during the filtering) the primary filter 22K of the filtering device 20K, the waste water flows out through the first communicating opening 201K of the filtering device 20K, and then flows out through the first opening 1101K, the eleventh channel 1011T, the seventh channel 107T, the ninth channel 109T and the draining opening 1109K, accordingly, the water purifier 2 is under the back-flushing working state at this time. Further, when the rotatable disk 122T of the plane valve 10T is rotated until the first division (the first region 2001T) of the second fluid control surface 1220T of the rotatable disk 122T directly faces the third division (the third portion 1203T) of the first fluid control surface 1210T of the fixed disk 121T, the third division (the third region 2003T) of the second fluid control surface 1220T of the rotatable disk 122T of the plane valve 10T directly faces the first division (the first portion 1201T) of the first fluid control surface 1210T of the fixed disk 121T, so that the sixth channel 106T of the plane valve 10T is communicated with the raw water inlet channel 1012T and the eighth channel 108T respectively, and the seventh channel 107T is communicated with the second channel 102T and the third channel 103T respectively, so as to allow the raw water to flow into the filtering device 20K through the raw water inlet 1106K, the raw water inlet channel 1012T, the sixth channel 106T, the eighth channel 108T, the first opening 1101K and the first communicating opening 201K. After filtered by the primary filter 22K of the filtering device 20K, the purified water flows out through the purified water channel 2201K of the primary filter 22K and the second communicating opening 202K, and then flows out and is provided through the second opening 1102K, the second channel 102T, the seventh channel 107T, the third channel 103T and the third opening 1103K, accordingly, the water purifier 2 is under the second purifying working state at this time. Further, when the rotatable disk 122T of the plane valve 10T is rotated until the first division (the first region 2001T) of the second fluid control surface 1220T of the rotatable disk 122T directly faces the second division (the second portion 1202T) of the first fluid control surface 1210T of the fixed disk 121T, the third division (the third region 2003T) of the second fluid control surface 1220T of the rotatable disk 122T of the plane valve 10T directly faces the fourth division (the fourth portion 1204T) of the first fluid control surface 1210T of the fixed disk 121T, so that the sixth channel 106T of the plane valve 10T is only communicated with the raw water inlet channel 1012T, the seventh channel 107T is blocked by the first fluid control surface 1210T of the fixed disk 121T, the first channel 101T, the second channel 102T, the tenth channel 103T, the fourth channel 104T, the fifth channel 105T, the eighth channel 108T, the ninth channel 109T, the tenth channel 1010T and the eleventh channel 1011T of the fixed disk 121T are blocked by the rotatable disk 122T respectively, the plane valve 10T controls the raw water not to flow to the filtering device 20T and does not provide the raw water or the purified water to the users, accordingly, the water purifier 2 is under the standby working state at this time. Wherein when the rotatable disk 122T of the plane valve 10T is rotated until the first division (the first region 2001T) of the second fluid control surface 1220T of the rotatable disk 122T directly faces the first division (the first portion 1201T) of the first fluid control surface 1210T of the fixed disk 121T, the third division (the third region 2003T) of the second fluid control surface 1220T of the rotatable disk 122T of the plane valve 10T directly faces the third division (the third portion 1203T) of the first fluid control surface 1210T of the fixed disk 121T, so that the sixth channel 106T of the plane valve 10T is communicated with the raw water inlet channel 1012T and the first channel 101T respectively, and the seventh channel 107T is communicated with the fourth channel 104T and the fifth channel 105T respectively, so as to allow the raw water to flow into the filtering device 20K through the raw water inlet 1106K, the raw water inlet channel 1012T, the sixth channel 106T, the first channel 101T, the first opening 1101K and the first communicating opening 201K. After the raw water is filtered by the primary filter 22K of the filtering device 20K, the generated purified water flows into the purified water channel 2201K of the filtering device 20K, and the secondary purified water that the purified water generated by the primary filter 22K further filtered by the secondary filter 23K flows out the third communicating opening 203K through the purified water outlet 2301K, then flows out and is provided through the fourth opening 1104K, the fourth channel 104T, the seventh channel 107T, the fifth channel 105T and the fifth opening 1105K, accordingly, the water purifier 2 is under the first purifying working state at this time.

As shown in FIG.26A to FIG.27F, preferably, the fourth channel 104T and the fifth channel 105T are extended along the first fluid control surface 1210T, and the fourth channel 104T and the fifth channel 105T are extended in the same direction, and the sixth channel 106T corresponds to the seventh channel 107T, so that when the plane valve 10T is switched from the standby working position to the first purifying working position and the rotatable disk 122T of the plane valve 10T is rotated until the sixth channel 106T coincides with the raw water inlet channel 1012T and the first channel 101T, the seventh channel 107T coincides with the fourth channel 104T and the fifth channel 105T at the same time; and when the plane valve 10T is switched from the standby working position to the second purifying working position and the rotatable disk 122T of the plane valve 10T is rotated until the sixth channel 106T coincides with the raw water inlet channel 1012T and the eighth channel 108T, the seventh channel 107T coincides with the second channel 102T and the third channel 103T at the same time. Accordingly, when the plane valve 10T is switched from the standby working position to the first purifying working position (or from the first purifying working position to the standby working position), the users can adjust the degree of overlap between the sixth channel 106T and the first channel 101T to control the flow rate of the raw water to the filtering device 20K. Further, the second channel 102T and the third channel 103T are extended along the first fluid control surface 1210T, and the second channel 102T and the third channel 103T are extended in the same direction, so that when the plane valve 10T is switched from the standby working position to the second purifying working position (or from the second purifying working position to the standby working position), the users can adjust the degree of overlap between the sixth channel 106T and the eighth channel 108T to control the flow rate of the raw water to the filtering device 20K. Accordingly, the fourth channel 104T corresponds to the fifth channel 105T, and the second channel 102T corresponds to the third channel 103T. It should be understood that when the users adjust the degree of overlap between the sixth channel 106T and the first channel 101T, the degree of overlap between the seventh channel 107T and the fourth channel 104T (and the fifth channel 105T) is adjusted accordingly; when the users adjust the degree of overlap between the sixth channel 106T and the eighth channel 108T, the degree of overlap between the seventh channel 107T and the second channel 102T (and the third channel 103T) is adjusted accordingly. Therefore, the users can adjust the water inlet and outlet of the water purifier 2 of the first embodiment of the present invention to realize the stepless flow rate control of the water purifier 2 of the first embodiment of the present invention. In other words, when the plane valve 10T is switched from the standby working position to the first purifying working position or from the standby working position to the second purifying working position, the stepless flow control of the water inlet and outlet of the water purifier 2 can be realized by rotating the rotatable disk 122T around the circle center of the rotatable disk 122T to adjust the degree of overlap between the channels (the sixth channel 106T and the seventh channel 107T) of the rotatable disk 122T and the channels (the first channel 101T, the second channel 102T, the third channel 103T, the fourth channel 104T, the fifth channel 105T and the eighth channel 108T) of the fixed disk 121T. Preferably, the second channel 102T and the third channel 103T are both provided at the outer side of the first channel 101T, the fourth channel 104T and the fifth channel 105T are both provided at the outer side of the eighth channel 108T, and the second channel 102T is provided at the inner side of the third channel 103T, the fourth channel 104T is divided at the inner side of the fifth channel 105T. Alternatively, the second channel 102T and the third channel 103T are both provided at the outer side of the first channel 101T, the fourth channel 104T and the fifth channel 105T are both provided at the outer side of the eighth channel 108T, and the third channel 103T is provided at the inner side of the second channel 102T, the fifth channel 105T is divided at the inner side of the fourth channel 104T. Preferably, the first channel 101T, the second channel 102T, the third channel 103T, the fourth channel 104T, the fifth channel 105T, and the eighth channel 108T are all arc-shaped, and the sixth channel 106T (the part in the extending region 12202T) and the seventh channel 107T are both arc-shaped. More preferably, the first channel 101T, the second channel 102T, the third channel 103T, the fourth channel 104T, the fifth channel 105T and the eighth channel 108T all are extended arcuately around the center of the first fluid control surface 1210T of the fixed disk 121T of the plane valve 10T, the sixth channel 106T (the part in the extending region 12202T) and the seventh channel 107T both are extended arcuately around the center of the second fluid control surface 1220T of the fixed disk 122T. More preferably, the first channel 101T, the second channel 102T, the third channel 103T, the fourth channel 104T, the fifth channel 105T and the eighth channel 108T all are extended arcuately around the inner portion 12101T of the first fluid control surface 1210T of the fixed disk 121T of the plane valve 10T, the sixth channel 106T (the part in the extending region 12202T) and the seventh channel 107T both are extended arcuately around the inner region 12201T of the second fluid control surface 1220T of the fixed disk 122T, and the fourth channel 104T and the fifth channel 105T correspond to the same central angle, the second channel 102T and the third channel 103T correspond to the same central angle, so as to easily realize the stepless control of the plane valve 10T to the flow rate of water. Alternatively, the first fluid control surface 1210T is circular, the second channel 102T, the third channel 103T, the fourth channel 104T and the fifth channel 105T are extended along the tangential direction of the first fluid control surface 1210T. More preferably, the sixth channel 106T and the seventh channel 107T are provided at two opposite positions of the rotatable disk 122T. More preferably, the central angle corresponding to the sixth channel 106T (the part in the extending region 12202T) and the central angle corresponding to the first channel 101T are equal in size, the central angle corresponding to the seventh channel 107T and the central angle corresponding to the fourth channel 104T are equal in size, and/or the central angle corresponding to the sixth channel 106T (the part in the extending region 12202T) and the central angle corresponding to the eighth channel 108T are equal in size, the central angle corresponding to the seventh channel 107T and the central angle corresponding to the second channel 102T are equal in size, so as to easily realize the stepless control of the plane valve 10T to the flow rate of water. Most preferably, the central angles corresponding to the first channel 101T, the second channel 102T, the third channel 103T, the fourth channel 104T, the fifth channel 105T, the sixth channel 106T (the part in the extending region 12202T), the seventh channel 107T and the eighth channel 108T are equal in size.

It should be understood that the distribution of the first channel 101T, the second channel 102T, the third channel 103T, the fourth channel 104T, the fifth channel 105T and the eighth channel 108T of the plane valve 10T of the water purifier 2 according to the first embodiment of the present invention on the first fluid control surface 1210T of the fixed disk 121T of the plane valve 10T, makes when the rotatable disk 122T of the plane valve 10T of the water purifier 2 rotates relative to the fixed disk 121T until the plane valve 10T is switched from the standby working position to the first purifying working position (or switched from the first purifying working position to the standby working position), or switched from the standby working position to the second purifying working position (or switched from the second purifying working position to the standby working position), the rotatable disk 122T of the plane valve 10T also can rotate relative to the fixed disk 121T to realize the stable communication of the flow channels even if the working position is not completely switched (or during the switching process). The main reason is that when the plane valve 10T is switched from the standby working position to the first purifying working position or switched from the first purifying working position to the standby working position, during the switching process, the sixth channel 106T of the plane valve 10T always only stably communicates with the raw water inlet channel 1012T and the first channel 101T respectively, the seventh channel 107T of the plane valve 10T always only stably communicates with the fourth channel 104T and the fifth channel 105T respectively; when the plane valve 10T is switched from the standby working position to the second purifying working position or switched from the second purifying working position to the standby working position, during the switching process, the sixth channel 106T of the plane valve 10T always only stably communicates with the raw water inlet channel 1012T and the eighth channel 108T respectively, the seventh channel 107T of the plane valve 10T always only stably communicates with the second channel 102T and the third channel 103T respectively. The sixth channel 106T of the plane valve 10T always only stably communicates with the raw water inlet channel 1012T and the first channel 101T respectively, the seventh channel 107T of the plane valve 10T always only stably communicates with the fourth channel 104T and the fifth channel 105T respectively, and the sixth channel 106T of the plane valve 10T always only stably communicates with the raw water inlet channel 1012T and the eighth channel 108T respectively, the seventh channel 107T of the plane valve 10T always only stably communicates with the second channel 102T and the third channel 103T respectively, which ensures that no mixed flow will occur when the plane valve 10T is switched from the standby working position to the first purifying working position or switched from the first purifying working position to the standby working position, and switched from the standby working position to the second purifying working position or switched from the second purifying working position to the standby working position, so as to ensure the stepless control of the flow rate of the water flowing through the plane valve 10T, during the working position switching process.

As shown in FIG.26A to FIG.27F, it is worth noting that when the users need to switch the water purifier 2 according to the first embodiment of the present invention from the back-flushing working state to the second purifying working state, only need to anticlockwise rotate the rotatable disk 122T of the plane valve 10T for one equal division angle, so that the first region 2001T of the second fluid control surface 1220T of the rotatable disk 122T directly faces the third portion 1203T of the first fluid control surface 1210T of the fixed disk 121T; when the users need to switch the water purifier 2 according to the first embodiment of the present invention from the second purifying working state to the standby working state, only need to anticlockwise rotate the rotatable disk 122T of the plane valve 10T again for one equal division angle, so that the first region 2001T of the second fluid control surface 1220T of the rotatable disk 122T directly faces the second portion 1202T of the first fluid control surface 1210T of the fixed disk 121T; when the users need to switch the water purifier 2 according to the first embodiment of the present invention from the standby working state to the first purifying working state, only need to anticlockwise rotate the rotatable disk 122T of the plane valve 10T again for one equal division angle, so that the first region 2001T of the second fluid control surface 1220T of the rotatable disk 122T directly faces the first portion 1201T of the first fluid control surface 1210T of the fixed disk 121T. In other words, the structure of the plane valve 10T of the water purifier 2 of the present invention enables the four working states to be continuously distributed which are the back-flushing working state, the second purifying working state, the standby working state and the first purifying working state of the water purifier 2, so that the switching between adjacent working states of the back-flushing working state, the second purifying working state, the standby working state and the first purifying working state of the water purifier 2 of the present invention can be realized only by rotating the rotatable disk 122T of the plane valve 10T for one equal division angle. The switching mode between the four working states of the water purifier 2 determined by the structure of the plane valve 10T of the water purifier 2 of the present invention will make the switching between the four working states of the water purifier 2 of the present invention more in line with the usage habits of the users and not easily cause an error in working state switching due to the different rotation angles when the users switch the working states. It should be understood that since the extending portion 12102T and the edge portion 12103T of the first fluid control surface 1210T of the plane valve 10T of the water purifier 2 according to the first embodiment of the present invention are both divided into four equal divisions, and the extending region 12202T and the edge region 12203T of the second fluid control surface 1220T of the rotatable disk 122T of the plane valve 10T are both divided into four equal divisions, accordingly, each time the water purifier 2 of the present invention realizes one working state switching, the rotatable disk 122T of the plane valve 10T rotates 90 degrees. in other words, one equal division angle of the rotatable disk 122T and the fixed disk 121T of the plane valve 10T is 90 degrees. Preferably, the extending portion 12102T and the edge portion 12103T of the first fluid control surface 1210T are equally divided anticlockwise into the first portion 1201T, the second portion 1202T, the third portion 1203T and the fourth portion 1204T, the extending region 12202T and the edge region 12203T of the second fluid control surface 1220T of the rotatable disk 122T of the plane valve 10T are equally divided anticlockwise into the first region 2001T, the second region 2002T, the third region 2003T and the fourth region 2004T. At this time, the structure of the plane valve 10T of the water purifier 2 of the present invention enables the four working states to be continuously distributed which are the first purifying working state, the standby working state, the second purifying working state and the back-flushing working state, so that the complete switching between adjacent working states of the first purifying working state, the standby working state, the second purifying working state and the back-flushing working state of the water purifier 2 of the present invention can be realized only by rotating the rotatable disk 122T of the plane valve 10T for one equal division angle. In addition, as mentioned above, when switching the water purifier 2 according to the first embodiment of the present invention from the standby working state to the first purifying working state (or the second purifying working state), the stepless control of the flow rate of the water inlet and outlet of the water purifier 2 of the present invention can be realized by adjusting the degree of overlap between the channels (the sixth channel 106T and the seventh channel 107T) of the rotatable disk 122T and the channels (the first channel 101T, the second channel 102T, the third channel 103T, the fourth channel 104T, the fifth channel 105T and the eighth channel 108T) of the fixed disk 121T. However, when the water purifier 2 of the present invention is switched from the standby working state to the first purifying working state (or the second purifying working state), the switching of the states can also be realized by rotating the rotatable disk 122T for one equal division angle to make the sixth channel 106T (the division in the extending region 12202T) of the rotatable disk 122T directly facing the first channel 101T (or the eighth channel 108T) of the fixed disk 121T, the seventh channel 107T directly facing the fourth channel 104T and the fifth channel 105T (or the second channel 102T and the third channel 103T). At this time, the flow rate of the water inlet and outlet of the water purifier 2 of the present invention is the largest. It should be understood that the water purifier 2 can also be quickly switched from the first purifying working state to the standby working state (or switched from the second purifying working state to the standby working state) by rotating one equal division angle, the water purifier 2 can also be quickly switched from the standby working state to the first purifying working state (or switched from the standby working state to the second purifying working state) by rotating one equal division angle.

As shown in FIG.24A to FIG.24F and FIG.26A to FIG.27F, according to the first embodiment of the present invention, the present invention further provides a valve disk assembly for a plane valve of a water purifier, which comprises a fixed disk 121T and a rotatable disk 122T, wherein the fixed disk 121T has a first fluid control surface 1210T, the rotatable disk 122T has a second fluid control surface 1220T, wherein the rotatable disk 122T and the fixed disk 121T are both provided inside the valve cavity 110K, wherein the second fluid control surface 1220T of the rotatable disk 122T is provided at the first fluid control surface 1210T of the fixed disk 121T, and the rotatable disk 122T is provided to be capable of rotating relative to the fixed disk 121T, wherein the plane valve 10T has a first channel 101T, a second channel 102T, a third channel 103T, a fourth channel 104T, a fifth channel 105T, a sixth channel 106T, a seventh channel 107T and a raw water inlet channel 1012T, wherein the first channel 101T, the second channel 102T, the third channel 103T, the fourth channel 104T, the fifth channel 105T and the raw water inlet channel 1012T are provided at the fixed disk 121T respectively and are extended from the first fluid control surface 1210T of the fixed disk 121T respectively; the sixth channel 106T and the seventh channel 107T are provided at the rotatable disk 122T respectively and are extended from the second fluid control surface 1220T of the rotatable disk 122T respectively, wherein the first channel 101T is communicated with the first opening 1101K, the second channel 102T is communicated with the second opening 1102K, the third channel 103T is communicated with the third opening 1103K, the fourth channel 104T is communicated with the fourth opening 1104K, the fifth channel 105T is communicated with the fifth opening 1105K, the sixth channel 106T is communicated with the raw water inlet channel 1012T, the raw water inlet channel 1012T is communicated with the raw water inlet 1106K. More preferably, the sixth channel 106T and the seventh channel 107K of the rotatable disk 122T are communicating blind holes. The plane valve 10T is further provided with an eighth channel 108T, wherein the eighth channel 108T is provided at the fixed disk 121T and is extended from the first fluid control surface 1210T of the fixed disk 121T, wherein the eighth channel 108T is communicated with the first opening 1101K. The plane valve 10T is further provided with a ninth channel 109T, a tenth channel 1010T and an eleventh channel 1011T, wherein the ninth channel 109T, the tenth channel 1010T and the eleventh channel 1011T are provided at the fixed disk 121T respectively and are extended from the first fluid control surface 1210T of the fixed disk 121T respectively, wherein the ninth channel 109T is communicated with the draining opening 1109K, the tenth channel 1010T is communicated with the second opening 1102K, the eleventh channel 1011T is communicated with the first opening 1101K.

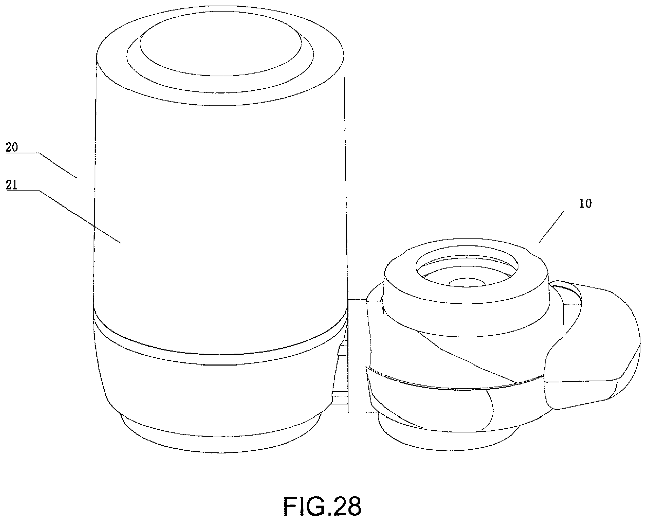

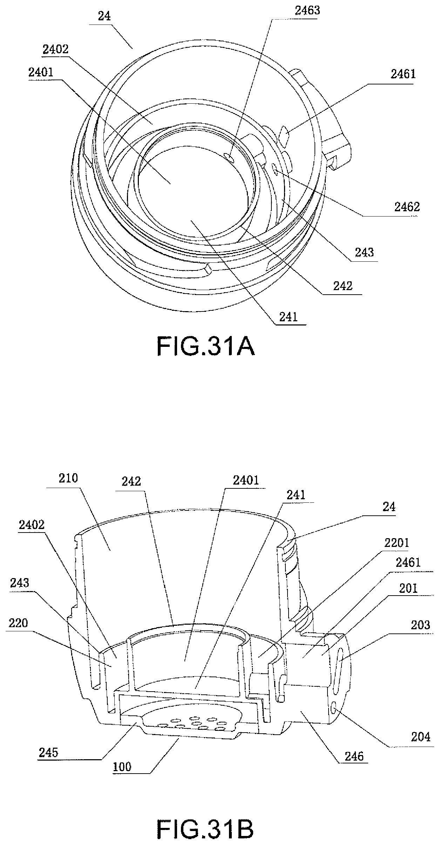

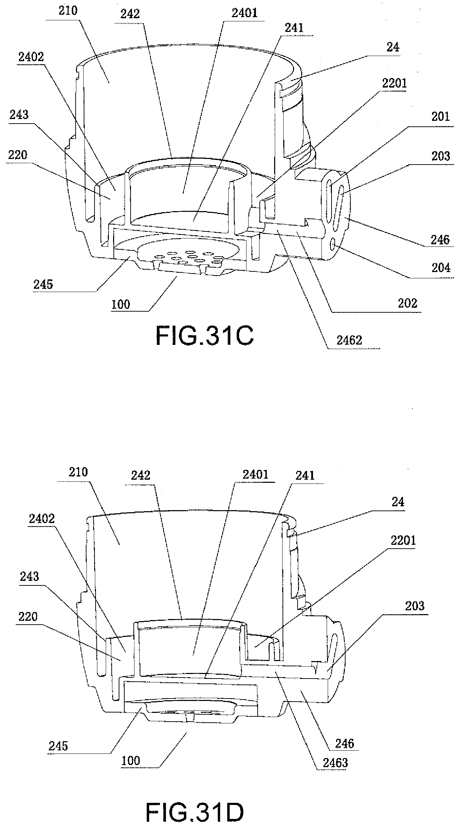

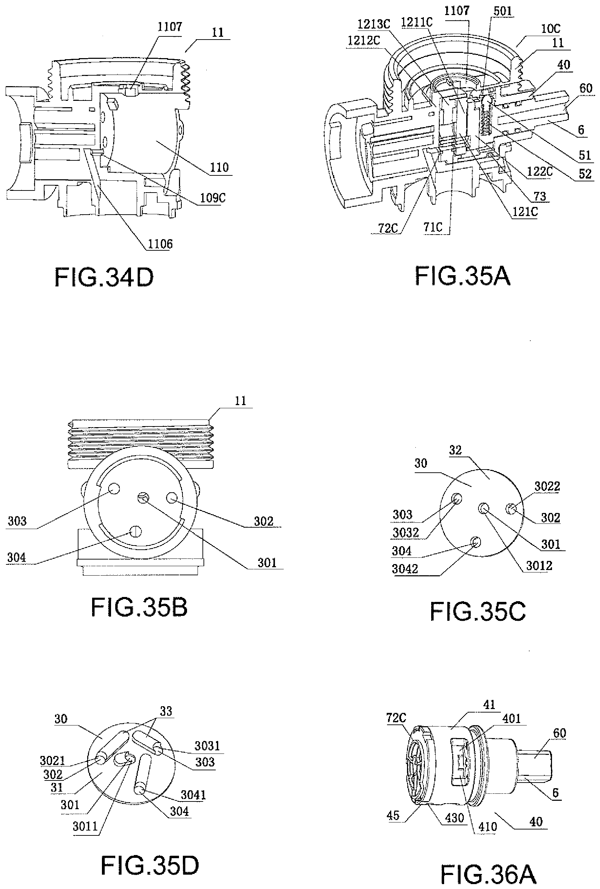

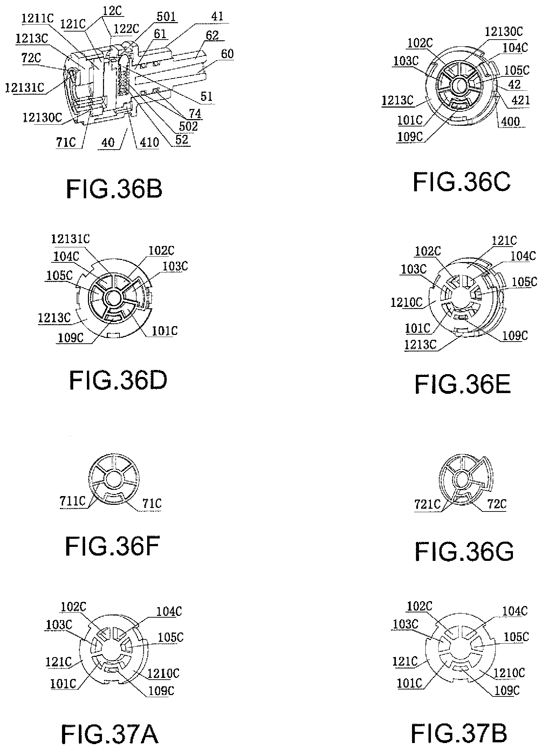

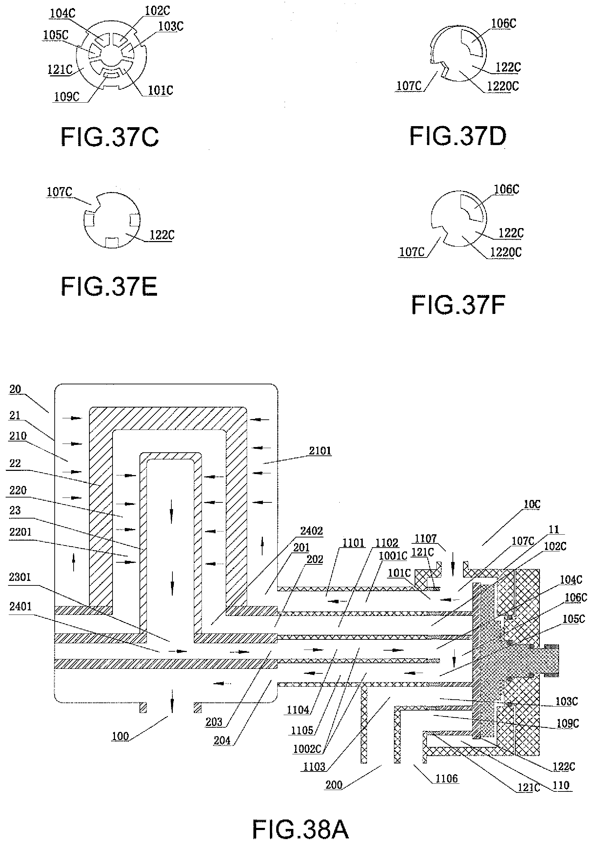

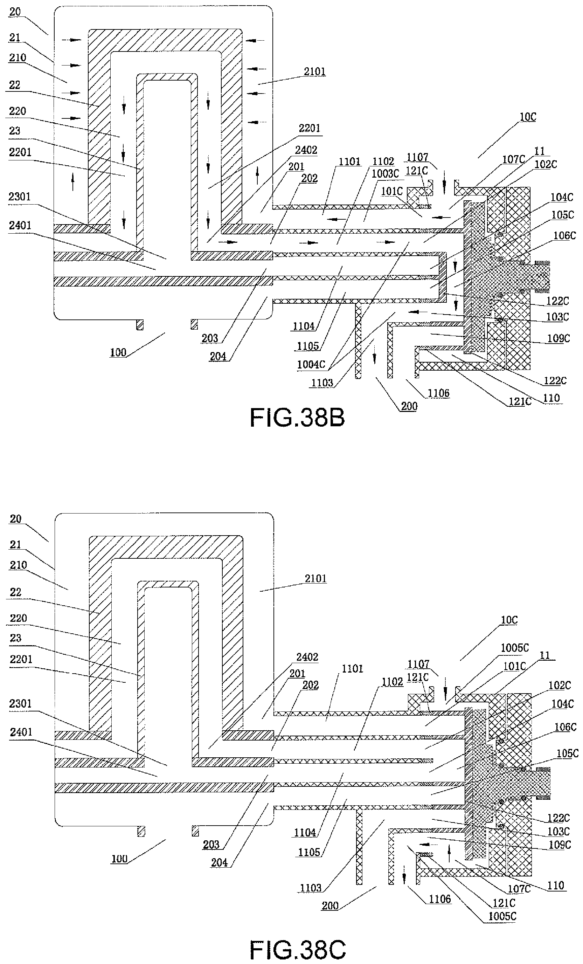

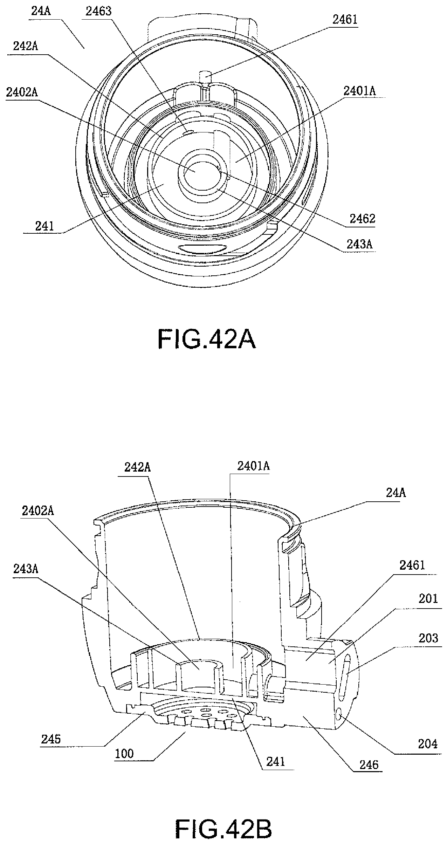

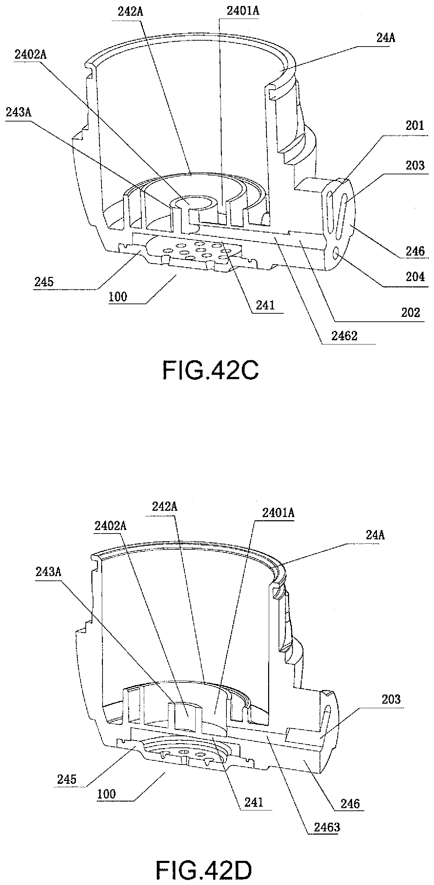

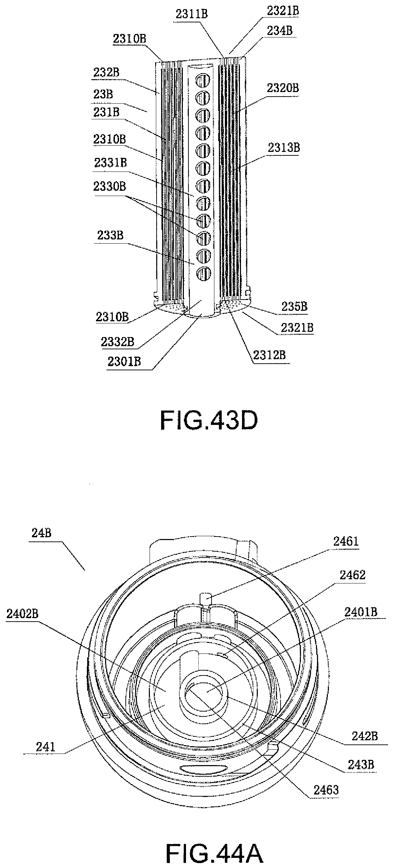

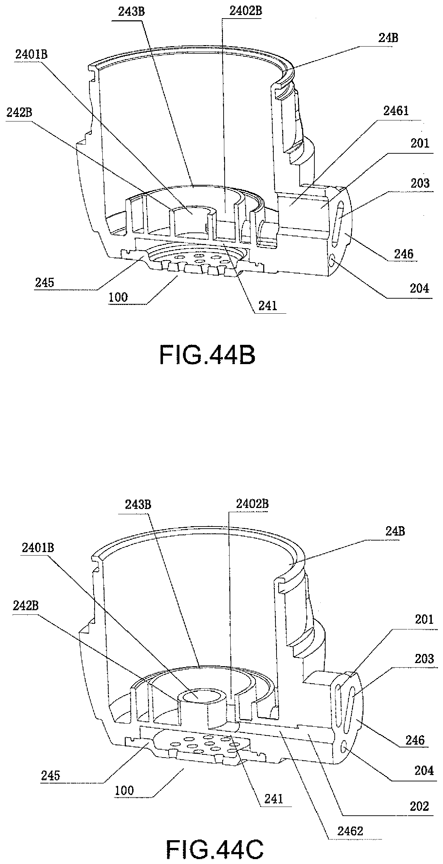

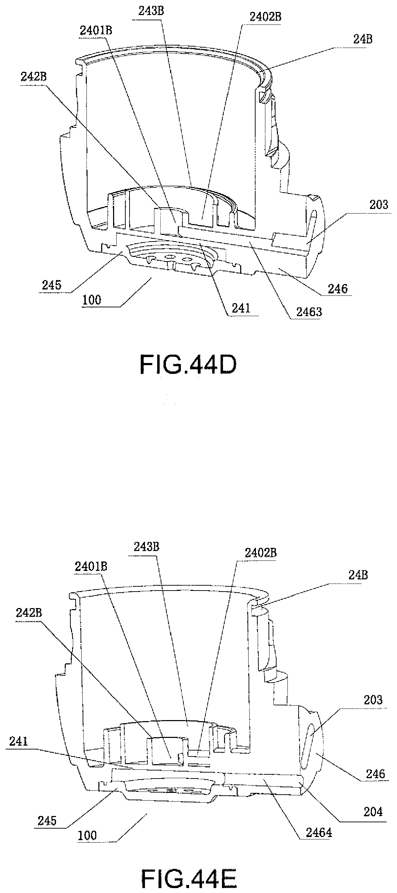

As shown in FIG.28 to FlG.44E, a water purifier 2 of a second embodiment of the present invention is illustrated, wherein the water purifier 2 of the present invention comprises a control valve 10 and a filtering device 20, wherein the control valve 10 is provided for controlling the flow of water, such as controlling the supply of raw water (or tap water) to the filtering device 20 and controlling the supply of the purified water generated or produced by treating the raw water by the filtering device 20.

As shown in FIG.28 to FIG.40C, the filtering device 20 of the water purifier 2 according to the second embodiment of the present invention comprises a outer casing 21, a primary filter 22 and a secondary filter 23, wherein the outer casing 21 defines a first accommodation cavity 210, the primary filter 22 defines a second accommodation cavity 220, wherein the primary filter 22 is provided inside the first accommodation cavity 210 of the outer casing 21, the secondary filter 23 is provided inside the second accommodation cavity 220 of the primary filter 22, and the outer casing 21 and the primary filter 22 define a raw water channel 2101 therebetween, the primary filter 22 and the secondary filter 23 define a purified water channel 2201 (the purified water channel 2201 can be regard as a part of the second accommodation cavity 220) therebetween, the secondary filter 23 has a purified water outlet 2301. Accordingly, since the secondary filter 23 is provided inside the second accommodation cavity 220 of the primary filter 22, after the raw water flows into the raw water channel 2101 under the action of water pressure and is treated by the primary filter 22, the purified water generated by the primary filter 22 can flow to the secondary filter 23 under the action of water pressure and be treated by the secondary filter 23, and the cleaner secondary purified water is obtained, wherein the secondary purified water flows out through the purified water outlet 2301 under the action of water pressure, so as to be provided. Preferably, the primary filter 22 is a ceramic filter, and the secondary filter 23 is an external pressure type ultrafiltration filter, wherein the ultrafiltration membrane filaments 231 of the secondary filter 23 are provided inside the second accommodation cavity 220 of the primary filter 22, so that the purified water channel 2201 is defined between the ultrafiltration membrane filaments 231 of the secondary filter 23 and the primary filter 22. Therefore, the purified water generated by the primary filter 22 can be further ultrafiltered by the secondary filter 23 under the action of water pressure, so as to obtain cleaner purified water (or ultrafiltration filtered water). It should be understood that the primary filter may also be a filter made of other materials, or a composite filter made of multiple materials, for example, a composite filter composed of any two or more materials of ceramic, carbon fiber, PP cotton and activated carbon particles.

As shown in FIG.28 to FIG.40C, the filtering device 20 of the water purifier 2 according to the second embodiment of the present invention has a first communicating opening 201, a second communicating opening 202 and a third communicating opening 203, wherein the first communicating opening 201 of the filtering device 20 is communicated with the raw water channel 2101 of the filtering device 20, so that the control valve 10 can supply the raw water to the filtering device 20 through the first communicating opening 201, the second communicating opening 202 of the filtering device 20 is communicated with the purified water channel 2201, so that the purified water generated by treating the raw water by the primary filter 22 can flow to a second water outlet 200 of the water purifier 2 of the present invention under the control of the control valve 10 and be provided to the users, the third communicating opening 203 of the filtering device 20 is communicated with the purified water outlet 2301 of the secondary filter 23, so that the purified water generated by the secondary filter 23 can flow out through the third communicating opening 203, and be provided to the users through a first water outlet 100 of the water purifier 2 of the present invention under the control of the control valve 10. Preferably, the secondary filter 23 of the filtering device 20 of the water purifier 2 of the present invention is an external pressure type ultrafiltration filter. Accordingly, each ultrafiltration membrane filament 231 of the secondary filter 23 defines a membrane filament channel 2310, and the membrane filament channels 2310 of the ultrafiltration membrane filaments 231 are all communicated with the purified water outlet 2301 of the secondary filter 23, so that the purified water generated by each ultrafiltration membrane filament 231 of the secondary filter 23 can flow to the third communicating opening 203 of the filtering device 20 under the action of water pressure.

As shown in FIG.28 to FIG.40C, accordingly, when the filtering device 20 of the water purifier 2 according to the second embodiment of the present invention is used to treat the raw water, the users can control the raw water flowing to the first communicating opening 201 of the filtering device 20 through the control valve 10, and the raw water flows to the raw water channel 2101 of the filtering device 20 under the action of water pressure, then the purified water generated by the treatment of the primary filter 22 flows to the purified water channel 2201 under the action of water pressure, at this time, if the purified water inside the purified water channel 2201 can flow freely through the second communicating opening 202 of the filtering device 20 under the control of the control valve 10, and the purified water generated by the secondary filter 23 cannot flow freely to the third communicating opening 203, the purified water generated by the primary filter 22 will flow out and be provided under the action of water pressure through the second communicating opening 202. Accordingly, the water purifier 2 according to the second embodiment of the present invention is under a filtering working state at this time. On the other hand, if the purified water inside the purified water channel 2201 cannot flow freely through the second communicating opening 202 of the filtering device 20 under the control of the control valve 10, and the purified water generated by the secondary filter 23 can flow freely to the third communicating opening 203, the purified water generated by the primary filter 22 will be further purified by the secondary filter 23 under the action of water pressure, and the purified water generated by the secondary filter 23 will flow out and be provided through the third communicating opening 203. Accordingly, the water purifier 2 according to the second embodiment of the present invention is under an ultrafiltration filtering working state at this time. As shown in FIG.28 to FIG.40C, further, the water purifier 2 according to the second embodiment of the present invention has a raw water supplying working state, wherein when the water purifier 2 of the present invention is under the raw water supplying working state, the user can control the raw water to flow directly to a raw water outlet and to be provided through the control valve 10, instead of flowing through the filtering device 20 and being purified by it.

Significantly, if the secondary filter 23 of the filtering device 20 of the water purifier 2 of the present invention is the external pressure type ultrafiltration filter, and the purified water generated by the primary filter 22 is able to flow out freely through the second communicating opening 202 of the filtering device 20, when the purified water generated by the primary filter 22 flows out through the second communicating opening 202 of the filtering device 20, the purified water generated by the primary filter 22 will flow through the ultrafiltration membrane filaments 231 of the secondary filter 23, so that the ultrafiltration membrane filaments 231 of the secondary filter 23 are flushed by the purified water generated by the primary filter 22. In other words, at this time, the filtering device 20 of the water purifier 2 of the present invention allows the purified water generated by the primary filter 22 to be provided, at the same time, the purified water generated by the primary filter 22 is further used to flush the ultrafiltration membrane filaments 231 of the secondary filter 23. Those skilled in the art know that the faucet purifier directly installed on the faucet has a small size due to the restriction of the using space where it is located in. When the faucet purifier adopts the ultrafiltration filter, especially the ultrafiltration filter with ultrafiltration membrane filaments as the main filter elements, the ultrafiltration filter is easily to stink and can no longer be used due to the accumulation of tap water impurities attached to the surface of its ultrafiltration membrane filaments, such as microorganisms, etc. The filtering device 20 of the water purifier 2 of the present invention allows the purified water generated by the primary filter 22 to be provided, at the same time, the purified water generated by the primary filter 22 is further used to flush the surfaces of the ultrafiltration membrane filaments 231 of the secondary filter 23, so as to prevent impurities such as microorganisms in the tap water from accumulating on the secondary filter 23 and prevent it from being unusable because of stinking. In other words, the water purifier 2 of the present invention uses the ingenious structural design of its filtering device 20 to solve the issue that when the traditional faucet purifier uses the ultrafiltration filter (or ultrafiltration membrane filaments) to filter water, it is easy to cause impurities to accumulate and cannot be discharged in time and cause stinking, so that the ultrafiltration membrane filaments 231 of the secondary filter 23 have a better filtering effect and the service life of the secondary filter 23 is prolonged. More importantly, because of the small size of the tap water purifier, with the structure of the traditional tap water purifier, when it uses the ultrafiltration filter to treat the raw water such as tap water, it will block in a short time. The water purifier 2 of the present invention uses the purified water generated by the primary filter 22 to flush the ultrafiltration membrane filaments 231 of the secondary filter 23, which significantly improves the issue that the impurities accumulate and cannot be discharged in time when the traditional faucet water purifier uses the ultrafiltration filter (or ultrafiltration membrane filaments) to filter water, so that it is possible for the faucet purifier to use the ultrafiltration filter to filter the water. The greater significance of the water purifier 2 of the present invention is that it may enable the consumers to get rid of the large and expensive traditional desktop water purifier. In addition, since the primary filter 22 of the water purifier 2 of the present invention is preferably a ceramic filter, although the purified water generated by its filtration is not suitable for direct drinking, the raw water is also preliminarily filtered and purified, and can be used for washing vegetables, washing face or mouth and so on.

As shown in FIG.2B to FIG.40C, the filtering device 20 of the water purifier 2 according to the second embodiment of the present invention further comprises a base 24, wherein the secondary filter 23 is provided at the base 24, and the base 24 defines a first water cavity 2401, wherein the first water cavity 2401 of the base 24 is communicated with the third communicating opening 203 of the filtering device 20 and the purified water outlet 2301 of the secondary filter 23 respectively. In other words, the membrane filament channel 2310 of the ultrafiltration membrane filament 231 of the secondary filter 23 is communicated with the third communicating opening 203 of the filtering device 20 through the purified water outlet 2301 of the secondary filter 23 and the first water cavity 2401 of the base 24, so that the secondary purified water generated by the secondary filter 23 can flow out through the third communicating opening 203. Preferably, the third communicating opening 203 is provided at the base 24. More preferably, the secondary filter 23 is water-sealedly provided at the base 24, and the secondary filter 23 and the base 24 define the first water cavity 2401 therebetween.

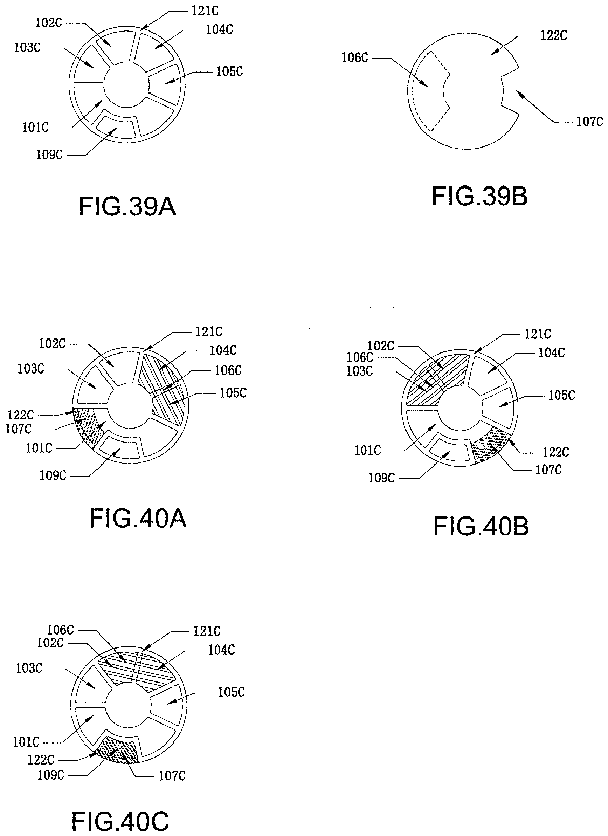

As shown in FIG.28 to F1G.40C, the primary filter 22 of the filtering device 20 of the water purifier 2 according to the second embodiment of the present invention is provided at the base 24, and the base 24 further defines a second water cavity 2402, wherein the second water cavity 2402 of the base 24 is communicated with the second communicating opening 202 of the filtering device 20 and the purified water channel 2201 respectively. In other words, the purified water channel 2201 of the filtering device 20 is communicated with the second communicating opening 202 of the filtering device 20 through the second water cavity 2402 of the base 24, so that the purified water generated by the primary filter 22 can flow out through the second communicating opening 202. Preferably, the second communicating opening 202 is provided at the base 24.

As shown in FIG.28 to F1G.40C, the primary filter 22 of the filtering device 20 of the water purifier 2 according to the second embodiment of the present invention is water-sealedly provided at the base 24, so as to prevent the raw water inside the raw water channel 2101 from flowing to the purified water channel 2201. More preferably, the primary filter 22 is detachably provided at the base 24, so that the primary filter 22 can be replaced. Alternatively, the primary filter 22 is water-sealedly provided at the outer casing 21, so that the raw water can only flow inside the raw water channel 2101. Alternatively, the primary filter 22 is detachably provided at the outer casing 21. Alternatively, the primary filter 22 is integrally provided at the base 24. Alternatively, the primary filter 22 is integrally provided at the outer casing 21.

As shown in FIG.28 to FIG.40C, the secondary filter 23 of the filtering device 20 of the water purifier 2 according to the second embodiment of the present invention further comprises a shell 232, wherein the ultrafiltration membrane filaments 231 of the secondary filter 23 are provided inside the shell 232, and the shell 232 has at least one water inlet 2320, wherein the inner space and the outer space of the shell 232 are communicated by the water inlet 2320 of the shell 232, so that when the water purifier 2 of the present invention is under the ultrafiltration filtering working state, the purified water generated by the primary filter 22 flows to the ultrafiltration membrane filament 231 through the water inlet 2320 of the shell 232 under the action of water pressure. Therefore, the water inlet 2320 of the shell 232 of the secondary filter 23 can be regard as a part of the purified water channel 2201 of the filtering device 20.

As shown in FIG.28 to FIG.40C, the base 24 of the filtering device 20 of the water purifier 2 according to the second embodiment of the present invention comprises a bottom portion 241 and a first spacing portion 242, wherein the first spacing portion 242 is provided at the bottom portion 241 and is extended from the bottom portion 241, wherein the first spacing portion 242 is provided between the first water cavity 2401 and the second water cavity 2402, so as to separate the first water cavity 2401 and the second water cavity 2402 from each other. Preferably, the base 24 further comprises a second spacing portion 243 provided at the bottom portion 241 and extended from the bottom portion 241, wherein the second water cavity 2402 is provided between the first spacing portion 242 and the second spacing portion 243, and the first water cavity 2401 is defined by the embracement of the first spacing portion 242. More preferably, the first spacing portion 242 and the second spacing portion 243 are both ring-shaped, and the second spacing portion 243 is provided at the outer side of the first spacing portion 242.

As shown in FIG.28 to FIG.40C, the first communicating opening 201 of the filtering device 20 of the water purifier 2 according to the second embodiment of the present invention is preferably provided at the base 24. Alternatively, the first communicating opening 201 of the filtering device 20 is provided at the outer casing 21. As shown in FIG.28 to FIG.40C, the outer casing 21 of the filtering device 20 of the water purifier 2 according to the second embodiment of the present invention is preferably provided at the edge of the base 24. Preferably, the outer casing 21 is integrated with the base 24.

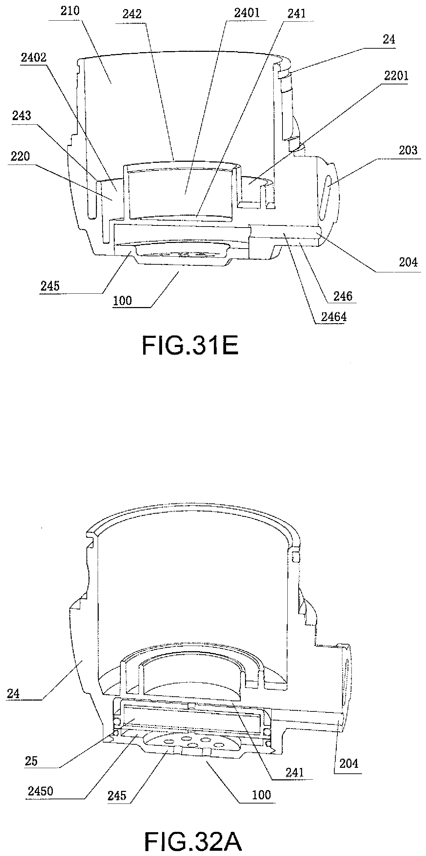

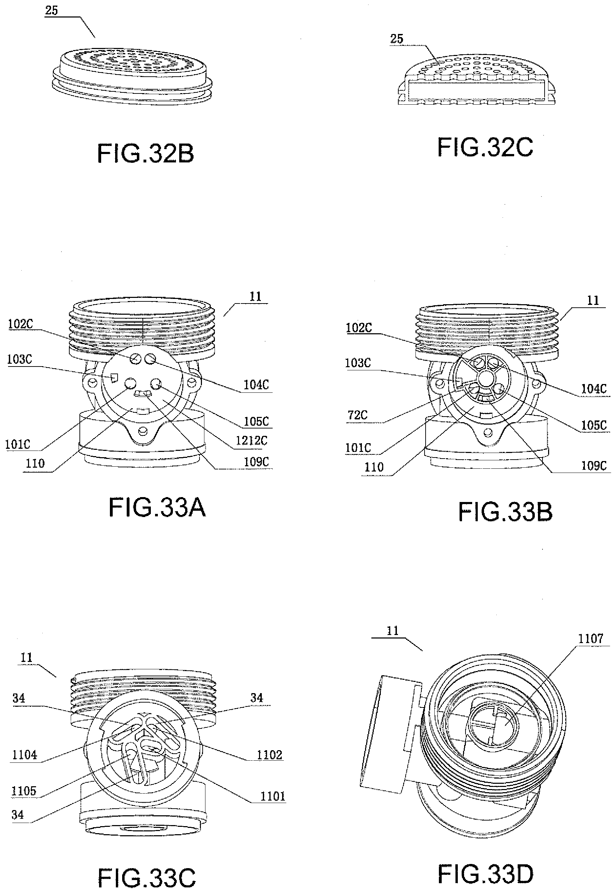

As shown in FIG.32A to FIG.32C, the base 24 of the filtering device 20 of the water purifier 2 according to the second embodiment of the present invention further comprises a water supplying portion 245, wherein the water supplying portion 245 is extended from the bottom portion 241, wherein the water supplying portion 245 defines the first water outlet 100.

As shown in FIG.32A to FIG.32C, further, the filtering device 20 of the water purifier 2 according to the second embodiment of the present invention further comprises an terminal filter 25, wherein the bottom portion 241 and the water supplying portion 245 of the base 24 define a purifying cavity 2450 therebetween, wherein the terminal filter 25 is provided inside the purifying cavity 2450, wherein the purifying cavity 2450 is provided communicating with a fifth opening 1105 of the control valve 10 and the first water outlet 100 respectively, so that the terminal filter 25 can further filter the purified water generated by the secondary filter 23 before it is provided to the users through the first water outlet 100. In other words, the terminal filter 25 is provided upstream of the first water outlet 100 and downstream of the fifth opening 1105 of the control valve 10 to further filter the purified water generated by the secondary filter 23, and then provides it to the users for using. Those skilled in the art will appreciate that the terminal filter 25 may also be made of carbon fiber or other filter materials to improve the taste of water. Preferably, the water supplying portion 245 is detachably provided at the bottom portion 241 of the base 24, the terminal filter 25 is detachably provided at the purifying cavity 2450, so that the terminal filter 25 can be replaced. More preferably, the water supplying portion 245 is detachably screwed to the bottom portion 241 of the base 24. Alternatively, the water supplying portion 245 is detachably clamped to the bottom portion 241 of the base 24.

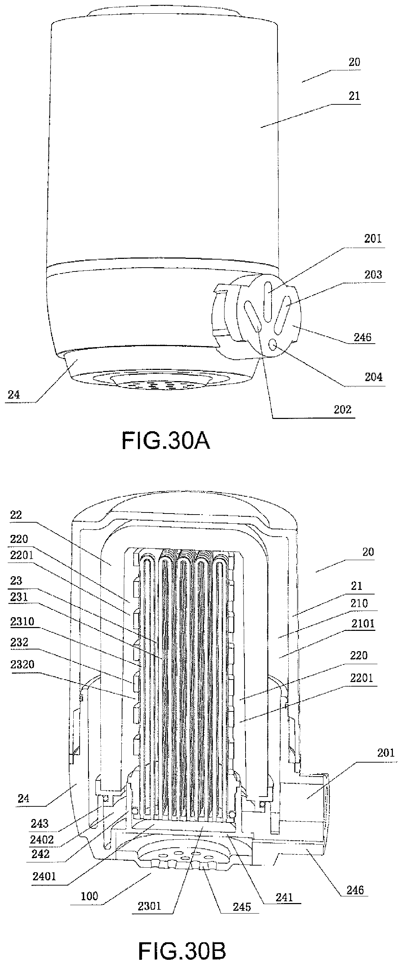

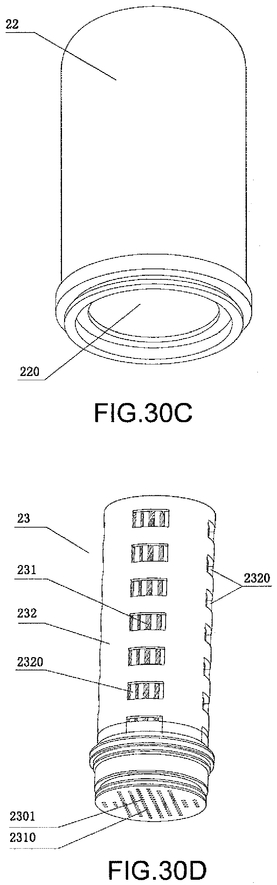

As shown in FIG.30A to FIG.31E, the base 24 of the water purifier 2 according to the second embodiment of the present invention is further provided with a communicating portion 246, wherein the communicating portion 246 has a first communicating channel 2461, a second communicating channel 2462 and a third communicating channel 2463, wherein the first communicating channel 2461 is provided to be communicated with the first communicating opening 201 and the raw water channel 2101 respectively, the second communicating channel 2462 is provided to be communicated with the second communicating opening 202 and the second water cavity 2402 respectively, the third communicating channel 2463 is provided to be communicated with the third communicating opening 203 and the first water cavity 2401 respectively. Further, the communicating portion 246 has a purified water supplying channel 2464, wherein the purified water supplying channel 2464 is provided communicating with the fifth opening 1105 and the first water outlet 100 respectively, so that the purified water generated by the secondary filter 23 of the filtering device 20 of the water purifier 2 of the present invention can flow out through the fifth opening 1105 of the control valve 10, and flows to the first water outlet 100 through the purified water supplying channel 2464. Preferably, the first communicating channel 2461 is provided between the first communicating opening 201 and the raw water channel 2101, the second communicating channel 2462 is provided between the second communicating opening 202 and the second water cavity 2402, the third communicating channel 2463 is provided between the third communicating opening 203 and the first water cavity 2401, the purified water supplying channel 2464 is provided between the fifth opening 1105 and the first water outlet 100. More preferably, the purified water supplying channel 2464 is provided communicating with the fifth opening 1105 and the purifying cavity 2450 respectively, so that the purified water supplying channel 2464 is capable of communicating with the first water outlet 100 through the purifying cavity 2450. Preferably, the first water outlet 100 comprises a plurality of water outlet holes.

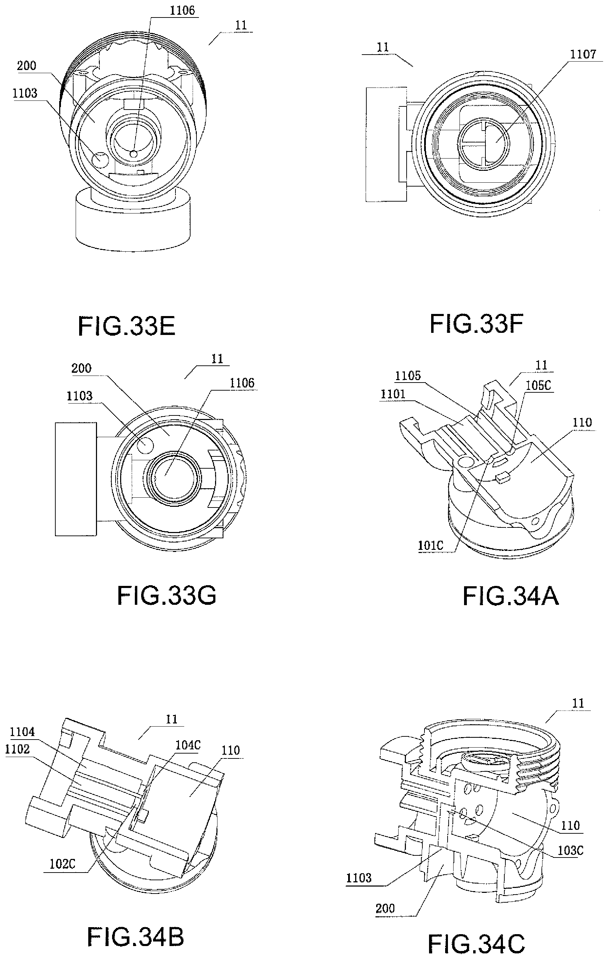

Referring to FIG.33A to FIG.40C, an alternative embodiment of the control valve 10 of the water purifier 2 according to the second embodiment of the present invention is shown, wherein the control valve 10C is a plane valve, wherein the plane valve 10C comprises a valve body 11 and a valve core 12C, wherein the valve body 11 defines a valve cavity 110, a first opening 1101, a second opening 1102, a third opening 1103, a fourth opening 1104, a fifth opening 1105 and a raw water inlet 1107, wherein the first opening 1101 of the valve body 11 is adapted to be communicated with the first communicating opening 201 of the filtering device 20, the second opening 1102 of the valve body 11 is adapted to be communicated with the second communicating opening 202 of the filtering device 20, the fourth opening 1104 of the valve body 11 is adapted to be communicated with the third communicating opening 203 of the filtering device 20, the fifth opening 1105 of the valve body 11 is adapted to be communicated with a first water outlet 100, the third opening 1103 of the valve body 11 is adapted to be communicated with a second water outlet 200, the raw water inlet 1107 of the valve body 11 is adapted to be communicated with the raw water source, the valve core 12C is provided inside the valve cavity 110.

As shown in FIG.33A to FIG.40C, the valve core 12C of the plane valve 10C of the present invention further comprises a fixed disk 121C and a rotatable disk 122C, wherein the fixed disk 121C has a first fluid control surface 1210C, the rotatable disk 122C has a second fluid control surface 1220C, wherein the rotatable disk 122C and the fixed disk 121C are both provided inside the valve cavity 110, wherein the second fluid control surface 1220C of the rotatable disk 122C is provided at the first fluid control surface 1210C of the fixed disk 121C, and the rotatable disk 122C is provided to be capable of rotating relative to the fixed disk 121C.

As shown in FIG.33A to FIG.40C, further, the plane valve 10C of the water purifier 2 according to the second embodiment of the present invention has a first channel 101C, a second channel 102C, a third channel 103C, a fourth channel 104C, a fifth channel 105C, a sixth channel 106C and a seventh channel 107C, wherein the first channel 101C, the second channel 102C, the third channel 103C, the fourth channel 104C and the fifth channel 105C are provided at the fixed disk 121C respectively and are extended from the first fluid control surface 1210C of the fixed disk 121C respectively; the sixth channel 106C and the seventh channel 107C are provided at the rotatable disk 122C respectively and are extended from the second fluid control surface 1220C of the rotatable disk 122C respectively, wherein the first channel 101C is communicated with the first opening 1101, the second channel 102C is communicated with the second opening 1102, the third channel 103C is communicated with the third opening 1103, the fourth channel 104C is communicated with the fourth opening 1104, the fifth channel 105C is communicated with the fifth opening 1105, the seventh channel 107C is communicated with the raw water inlet 1107. Preferably, the seventh channel 107C is communicated with the valve cavity 110 of the valve body 11, the raw water inlet 1107 of the valve body 11 is communicated with the valve cavity 110 of the valve body 11, so that the raw water inlet 1107 is communicated with the seventh channel 107C through the valve cavity 110 of the valve body 11, and the raw water can be provided to the seventh channel 107C through the raw water inlet 1107 and the valve cavity 110 of the valve body 11. It should be understood that the sixth channel 106C of the rotatable disk 122C is preferably a communicating blind hole.

As shown in FIG.33A to FIG.40C, the first channel 101C, the third channel 103C, the second channel 102C, the fourth channel 104C and the fifth channel 105C of the plane valve 10C of the water purifier 2 according to the second embodiment of the present invention are provided clockwise at the first fluid control surface 1210C of the fixed disk 121C in this order. Alternatively, the first channel 101C, the third channel 103C, the second channel 102C, the fourth channel 104C and the fifth channel 105C of the plane valve 10C are provided anticlockwise at the first fluid control surface 1210C of the fixed disk 121C in this order. Preferably, the first channel 101C, the third channel 103C, the second channel 102C, the fourth channel 104C and the fifth channel 105C of the plane valve 10C are spacedly provided at the first fluid control surface 1210C of the fixed disk 121C.

As shown in FIG.33A to FIG.40C, the rotatable disk 122C of the plane valve 10C of the water purifier 2 according to the second embodiment of the present invention is capable of rotating relative to the fixed disk 121C, so that the plane valve 10C has a first working position and a second working position, wherein when the plane valve 10C is under the first working position, the seventh channel 107C of the plane valve 10C is communicated with the first channel 101C, so as to define a first communicating passage 1001C communicating with the raw water inlet 1107 and the first opening 1101 respectively, the sixth channel 106C is communicated with the fourth channel 104C and the fifth channel 105C respectively, so as to define a second communicating passage 1002C communicating with the fourth opening 1104 and the fifth opening 1105 respectively; when the plane valve 10C is under the second working position, the seventh channel 107C of the plane valve 10C is communicated with the first channel 101C, so as to define a third communicating passage 1003C communicating with the raw water inlet 1107 and the first opening 1101 respectively, the sixth channel 106C is communicated with the second channel 102C and the third channel 103C respectively, so as to define a fourth communicating passage 1004C communicating with the second opening 1102 and the third opening 1103 respectively. As shown in FIG.33A to FIG.40C, when the plane valve 10C of the water purifier 2 according to the second embodiment of the present invention is under the first working position, the second channel 102C and the third channel 103C of the plane valve 10C are blocked (or closed) by the rotatable disk 122C respectively, so that the water inside the second channel 102C cannot flow freely. Accordingly, the primary purified water generated by the primary filter 22 will flow to the secondary filter 23 under the action of water pressure, and be provided through the fourth opening 1104, the second communicating passage 1002C and the fifth opening 1105 after being further purified and treated by the secondary filter 23. Accordingly, when the plane valve 10C of the water purifier 2 of the present invention is under the first working position, the water purifier 2 of the present invention is under its ultrafiltration filtering working state.

As shown in FIG.33A to FIG.40C, when the plane valve 10C of the water purifier 2 according to the second embodiment of the present invention is under the second working position, the fourth channel 104C and the fifth channel 105C of the plane valve 10C are blocked (or closed) by the rotatable disk 122C respectively, so that the water inside the fourth channel 104C cannot flow freely. Accordingly, the primary purified water generated by the primary filter 22 will flow to the second opening 1102 under the action of water pressure, and be provided through the fourth communicating passage 1004C and the third opening 1103. Accordingly, when the plane valve 10C of the water purifier 2 of the present invention is under the second working position, the water purifier 2 of the present invention is under its filtering working state. Further, when the plane valve 10C of the water purifier 2 according to the second embodiment of the present invention is under the first working position, the first communicating passage 1001C defined by the valve core 12C of the plane valve 10C is communicated with the raw water inlet 1107 of the plane valve 10C and the first opening 1101, when the plane valve 10C of the water purifier 2 according to the second embodiment of the present invention is under the second working position, the third communicating passage 1003C defined by the valve core 12C of the plane valve 10C is also communicated with the raw water inlet 1107 of the plane valve 10C and the first opening 1101, and the first communicating passage 1001C and the third communicating passage 1003C are both defined by the communicating of the seventh channel 107C and the first channel 101C. Therefore, the first communicating passage 1001C and the third communicating passage 1003C can be regard as the same communicating passage.

As shown in FIG.33A to FIG.40C, the valve body 11 of the plane valve 10C of the water purifier 2 according to the second embodiment of the present invention further defines a sixth opening 1106, the plane valve 10C is further provided with a raw water supplying channel 109C, wherein the raw water supplying channel 109C is provided at the fixed disk 121C and is extended from the first fluid control surface 1210C of the fixed disk 121C, the raw water supplying channel 109C is communicated with the sixth opening 1106, wherein the plane valve 10C is further provided with a third working position, wherein when the plane valve 10C is under the third working position, the seventh channel 107C of the plane valve 10C is communicated with the raw water supplying channel 109C, so as to define the fifth communicating passage 1005C communicating with the raw water inlet 1107 and the sixth opening 1106 respectively.

As shown in FIG.33A to FIG.40C, when the plane valve 10C of the water purifier 2 according to the second embodiment of the present invention is under the third working position, the seventh channel 107C of the plane valve 10C is only communicated with the raw water supplying channel 109C. At this time, the raw water flows in through the raw water inlet 1107 and further flows out through the sixth opening 1106 after flowing through the seventh channel 107C and the raw water supplying channel 109C. Preferably, the first channel 101C is provided between the third channel 103C and the fifth channel 105C, and the raw water supplying channel 109C is provided at the outer side of the first channel 101C. More preferably, the raw water supplying channel 109C and the first channel 101C are provided between the third channel 103C and the fifth channel 105C.

As shown in FIG.33A to FIG.40C, the fixed disk 121C of the valve core 12C of the plane valve 10C of the water purifier 2 according to the second embodiment of the present invention comprises an upper end portion 1211C, a lower end portion 1212C and a fixing portion 1213C provided between the upper end portion 1211C and the lower end portion 1212C, wherein the upper end portion 1211C defines the first fluid control surface 1210C of the fixed disk 121C, and the lower end portion 1212C is provided inside the valve cavity 110 of the valve body 11. Preferably, the lower end portion 1212C of the fixed disk 121C of the valve core 12C of the plane valve 10C of the water purifier 2 of the present invention is integrally provided at the inner wall of the valve body 11 of the plane valve 10C.

As shown in FIG.33A to FIG.40C, the plane valve 10C of the water purifier 2 according to the second embodiment of the present invention further comprises a fixing device 40, wherein the fixing device 40 comprises a fixing holder 41, a first clamping connector 42 and a second clamping connector 43, wherein the fixing holder 41 of the fixing device 40 has at least one accommodation chamber 410 and at least one water inlet opening 401, wherein the water inlet opening 401 is communicated with the raw water inlet 1107 of the valve body 11 and the accommodation chamber 410 respectively, wherein the first clamping connector 42 is provided at the fixing portion 1213C of the fixed disk 121C, the second clamping connector 43 is provided at the fixing holder 41, wherein the first clamping connector 42 and the second clamping connector 43 are provided to be adapted to be clamped together, so that the fixing portion 1213C of the fixed disk 121C can be fixed at the fixing holder 41 through the first clamping connector 42 and the second clamping connector 43. Further, the water inlet opening 401 of the fixing holder 41 and the raw water inlet 1107 are both communicated with the valve cavity 110 of the valve body 11, so that the accommodation chamber 410 of the fixing holder 41 is communicated with the raw water inlet 1107 of the valve body 11 through the water inlet opening 401 and the valve cavity 110 of the valve body 11, and the raw water can flow into the accommodation chamber 410 of the fixing holder 41 through the raw water inlet 1107 of the valve body 11. As shown in FIG.33A to FIG.40C, the accommodation chamber 410 of the fixing holder 41 of the fixing device 40 of the water purifier 2 according to the second embodiment of the present invention is provided to be adapted to accommodate the upper end portion 1211C of the fixed disk 121C and the rotatable disk 122C inside it, the seventh channel 107C of the plane valve 10C is provided to communicate with the accommodation chamber 410 of the fixing holder 41, so that raw water can be provided to the seventh channel 107C of the plane valve 10C through the water inlet opening 401 and the accommodation chamber 410 of the fixing holder 41. In other words, the seventh channel 107C of the plane valve 10C is communicated with the raw water inlet 1107 of the valve body 11 through the accommodation chamber 410 of the fixing holder 41, the water inlet opening 401 and the valve cavity 110 of the valve body 11. As shown in FIG.33A to FIG.40C, further, the upper end portion 1211C of the fixed disk 121C is adapted to be detachably clamped at the fixing portion 1213C of the fixed disk 121C, the fixing portion 1213C of the fixed disk 121C is adapted to be detachably clamped at the lower end portion 1212C of the fixed disk 121C, so that the upper end portion 1211C of the fixed disk 121C cannot rotate relative to the fixing portion 1213C, the fixing portion 1213C of the fixed disk 121C cannot rotate relative to the lower end portion 1212C.

It should be understood that the upper end portion 1211C of the fixed disk 121C of the valve core 12C of the plane valve 10C of the water purifier 2 of the present invention is detachably clamped at the fixing portion 1213C of the fixed disk 121C, the fixing portion 1213C of the fixed disk 121C is detachably clamped at the lower end portion 1212C of the fixed disk 121C, and the upper end portion 1211C of the fixed disk 121C and the rotatable disk 122C are accommodated inside the accommodation chamber 410 of the fixing holder 41, so that the upper end portion 1211C and the fixing portion 1213C of the fixed disk 121C and the rotatable disk 122C can be integrated together through the fixing holder 41, the first clamping connector 42 and the second clamping connector 43 of the fixing device 40. Especially, since the upper end portion 1211C of the fixed disk 121C defines the first fluid control surface 1210C of the fixed disk 121C, and the upper end portion 1211C of the fixed disk 121C is detachably clamped at the fixing portion 1213C of the fixed disk 121C, so that the upper end portion 1211C can be manufactured separately and the side surface of the upper end portion 1211C facing the rotatable disk 122C can be easily processed, such as being polished smooth, to form the first fluid control surface 1210C. However, if the fixed disk 121C of the valve core 12C of the plane valve 10C of the water purifier 2 of the present invention is fixedly provided at the valve body 11, or the fixed disk 121C of the valve core 12C of the plane valve 10C is integrated with the valve body 11, the side surface of the upper end portion 1211C of the fixed disk 121C of the valve core 12C of the plane valve 10C is difficult to be processed and define the first fluid control surface 1210C.

As shown in FIG.33A to FIG.40C, the first clamping connector 42 of the fixing device 40 of the water purifier 2 according to the second embodiment of the present invention comprises a plurality of hooks 421 provided at the side wall of the fixing portion 1213C of the fixed disk 121C, the second clamping connector 43 has a plurality of clamping concave grooves 430, wherein the hooks 421 of the first clamping connector 42 are adapted to engage with the clamping concave grooves 430 of the second clamping connector 43 together, so that the first clamping connector 42 is clamped with the second clamping connector 43. Alternatively, the first clamping connector 42 has a plurality of clamping concave grooves 430 provided at the side wall of the fixing portion 1213C of the fixed disk 121C, the second clamping connector 43 has a plurality of hooks 421 provided at the fixing holder 41, wherein the hooks 421 of the second clamping connector 43 are adapted to engage with the clamping concave grooves 430 of the first clamping connector 42 together. In other words, the hooks 421 of the fixing device 40 are provided at the fixing holder 41, and the clamping concave grooves 430 are provided at the side wall of the fixing portion 1213C of the fixed disk 121C. Further, the fixing device 40 has a plurality of guiding grooves 400 and a plurality of guiding members 45, wherein the guiding grooves 400 are provided at the side wall of the fixing portion 1213C of the fixed disk 121C respectively, the guiding members 45 are provided at the second clamping connector 43 and are extended from the second clamping connector 43, wherein the guiding members 45 are provided directly facing the clamping concave grooves 430 respectively, and the width of the guiding member 45 is not greater than the width of the guiding groove 400, so that the first clamping connector 42 and the second clamping connector 43 can be clamped together under the guidance of the guiding grooves 400 and the guiding members 45.

As shown in FIG.33A to FIG.40C, the plane valve 10C of the water purifier 2 according to the second embodiment of the present invention further comprises a driving assembly 6, wherein the driving assembly 6 is provided for driving the rotatable disk 122C of the plane valve 10C to rotate relative to the fixed disk 121C. As shown in FIG.33A to FIG.40C, illustratively, the driving assembly 6 comprises a valve rod 60, the fixing holder 41 further comprises an operation opening 402, wherein the operation opening 402 is communicated with the accommodation chamber 410 of the fixing holder 41, wherein the valve rod 60 has a driving end 61 and an operating end 62 extended from the driving end 61, wherein the driving end 61 of the valve rod 60 is provided inside the accommodation chamber 410 of the fixing holder 41, the operating end 62 of the valve rod 60 is extended from the driving end 61 and crosses out the accommodation chamber 410 of the fixing holder 41 through the operation opening 402 of the fixing holder 41. Accordingly, when the operating end 62 of the valve rod 60 is operated to rotate, the driving end 61 is driven to rotate and further drives the rotatable disk 122C to rotate, so that the plane valve 10C is controlled to under the corresponding working position. Accordingly, the upper end portion 1211C and the fixing portion 1213C of the fixed disk 121C, the rotatable disk 122C and the valve rod 60 can be integrated together through the fixing holder 41, the first clamping connector 42 and the second clamping connector 43 of the fixing device 40, so as to reduce the manufacturing difficulty of the fixed disk 121C, and reduce the difficulty of assembling the upper end portion 1211C and the fixing portion 1213C of the fixed disk 121C, the rotatable disk 122C and the valve rod 60 into the valve cavity 110 of the valve body 11. It should be understood that the way of integrating the upper end portion 1211C and the fixing portion 1213C of the fixed disk 121C, the rotatable disk 122C and the valve rod 60 together through the fixing holder 41, the first clamping connector 42 and the second clamping connector 43 of the fixing device 40 also makes the upper end portion 1211C and the fixing portion 1213C of the fixed disk 121C, the rotatable disk 122C and the valve rod 60 more convenient for the automated assembly and production of the plane valve 10C. Further, the outer diameter of the driving end 61 of the valve rod 60 is smaller than the inner diameter of the accommodation chamber 410 of the fixing holder 41 and greater than the inner diameter of the operation opening 402 of the fixing holder 41, the outer diameter of the operating end 62 of the valve rod 60 is smaller than the inner diameter of operation opening 402 of the fixing holder 41, so that the fixing holder 41 can be pressed against the driving end 61 of the valve rod 60 under the action of external force, and the rotatable disk 122C can be pressed against the upper end portion 1211C of the fixed disk 121C under the action of the driving end 61 of the valve rod 60, and the second fluid control surface 1220C of the rotatable disk 122C is provided at the first fluid control surface 1210C of the fixed disk 121C.

It should be understood that the driving assembly 6 can be any mechanism or assembly unit for driving the rotatable disk 122C of the plane valve 10C to rotate relative to the fixed disk 121C. Illustratively, the driving assembly 6 also can be a gear set for driving the rotatable disk 122C of the plane valve 10C to rotate relative to the fixed disk 121C, wherein the gear set comprises a driving gear and driven cogs provided at the side wall of the rotatable disk 122C, the driving gear is engaged with and driven cogs of the rotatable disk 122C, so that the users or the operators can drive the rotatable disk 122C to rotate relative to the fixed disk 121C by rotating the driving gear. Illustratively, the driving assembly 6 also comprises a driving rod provided at the rotatable disk 122C of the plane valve 10C and paralleled with the second fluid control surface 1220C of the rotatable disk 122C. The users can drive the driving rod of the driving assembly 6 to drive the rotatable disk 122C to rotate relative to the fixed disk 121C.

As shown in FIG.33A to FIG.40C, the fixing device 40 of the water purifier 2 according to the second embodiment of the present invention further comprises a fixing member 44, wherein the fixing member 44 is provided pressing against the fixing holder 41, and the fixing member 44 is provided to be adapted to be fixed at the valve body 11 of the plane valve 10C. Accordingly, the fixing holder 41 is held inside the valve cavity 110 of the valve body 11 through the fixing member 44.

As shown in FIG.33A to FIG.40C, the plane valve 10C of the water purifier 2 according to the second embodiment of the present invention further comprises a positioning assembly 50, wherein the positioning assembly 50 has a restricting element 51, a resetting element 52 provided at the restricting element 51, a plurality of restricting grooves 501 provided at the inner wall of the fixing holder 41 and an operation chamber 502 provided at the driving end 61 of the valve rod 60, wherein the restricting element 51 and the resetting element 52 are both provided inside the operation chamber 502, and the resetting element 52 is provided between the restricting element 51 and the driving end 61, so that when the driving end 61 of the valve rod 60 is rotated and the restricting element 51 directly faces the restricting grooves 501, the restricting element 51 will move into the restricting grooves 501 under the action of the resetting force (or elastic force) of the resetting element 52; at this time, when the driving end 61 of the valve rod 60 continues to be rotated to make the fixing holder 41 pressing the restricting element 51 and further to make the restricting element 51 to retract Into the operation chamber 502, the driving end 61 of the valve rod 60 can be easily rotated and the restricting element 51 is kept retracted inside the operation chamber 502 under the pressure of the fixing holder 41. It should be understood that when the driving end 61 of the valve rod 60 is rotated to make the restricting element 51 directly facing the restricting grooves 501 and further to make the restricting element 51 to move into the restricting grooves 501, the plane valve 10C is maintained under a corresponding working position, and the water purifier 2 of the present invention is under a corresponding working state. It should be understood that the resetting element 52 is a resetting spring. Alternatively, the resetting element 52 is a resetting elastic piece. Preferably, the restricting element 51 is provided to be engaged with the restricting grooves 501, so that the restricting element 51 can be stably held inside the restricting grooves 501 when there is no appropriate external force to drive the valve rod 60 to rotate.

As shown in FIG.33A to FIG.40C, the plane valve 10C of the water purifier 2 according to the second embodiment of the present invention further comprises a sealing assembly 70C, wherein the sealing assembly 70C has a first seal 71C, wherein the first seal 71C is provided between the upper end portion 1211C and the fixing portion 1213C of the fixed disk 121C. Further, the first seal 71C has a plurality of first sealing strips 711C, the fixing portion 1213C of the fixed disk 121C has a plurality of first sealing grooves 12130C, wherein the first sealing grooves 12130C are provided to respectively surround the first channel 101C, the second channel 102C, the third channel 103C, the fourth channel 104C, the fifth channel 105C and the raw water supplying channel 109C of the fixed disk 121C, the first sealing strips 711C of the first seal 71C are provided according to the first sealing grooves 12130C of the fixing portion 1213C, so that the first sealing strips 711C of the first seal 71C can be engaged with the first sealing grooves 12130C of the fixing portion 1213C and realizes the sealing between the upper end portion 1211C and the fixing portion 1213C of the fixed disk 121C. It should be understood that the first sealing grooves 12130C are defined at one side of the fixing portion 1213C facing the upper end portion 1211C. Further, the sealing assembly 70C has a second seal 72C, wherein the second seal 72C is provided between the fixing portion 1213C and the lower end portion 1212C of the fixed disk 121C. Further, the second seal 72C has a plurality of second sealing strips 721C, the fixing portion 1213C of the fixed disk 121C has a plurality of second sealing grooves 12131C, wherein the second sealing grooves 12131C are provided to respectively surround the first channel 101C, the second channel 102C, the third channel 103C, the fourth channel 104C, the fifth channel 105C and the raw water supplying channel 109C of the fixed disk 121C, the second sealing strips 721C of the second seal 72C are provided according to the second sealing grooves 12131C of the fixing portion 1213C, so that the second sealing strips 721C of the second seal 72C can be engaged with the second sealing grooves 12131C of the fixing portion 1213C and realizes the sealing between the lower end portion 1212C and the fixing portion 1213C of the fixed disk 121C. It should be understood that the second sealing grooves 12131C are defined at one side of the fixing portion 1213C facing the lower end portion 1212C.

As shown in FIG.33A to FIG.40C, the sealing assembly 70C of the water purifier 2 according to the second embodiment of the present invention further comprises at least one first sealing ring 73, wherein the first sealing ring 73 is provided at the outer surface of the fixing holder 41, so as to realize the sealing between the fixing holder 41 and the inner wall of the valve body 11 and prevent the raw water from flowing out between the fixing holder 41 and the inner wall of the valve body 11. Further, the sealing assembly 70C comprises at least one second sealing ring 74, wherein the second sealing ring 74 is provided between the valve rod 60 and the fixing holder 41, so as to realize the sealing between the valve rod 60 and the inner wall of the fixing holder 41 and prevent the raw water from flowing out between the valve rod 60 and the inner wall of the fixing holder 41.

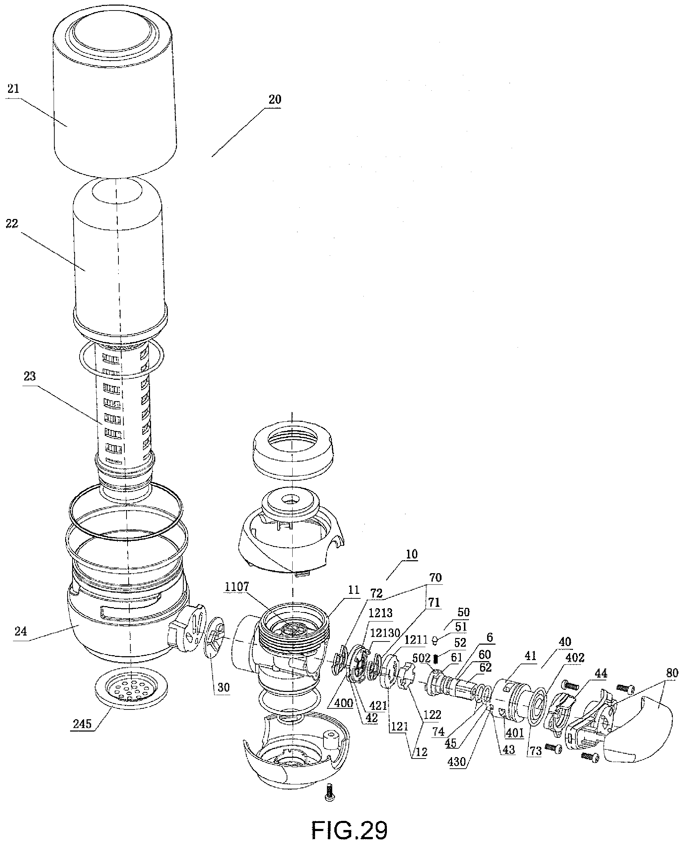

As shown in FlG.29 to FIG.36B, the plane valve 10C of the water purifier 2 according to the second embodiment of the present invention further comprises a rotary knob 80, wherein the rotary knob 80 is provided at the operating end 62 of the valve rod 60, so that the users can rotate the valve rod 60 to rotate the rotatable disk 122C and control the plane valve 10C to be under the corresponding working position.

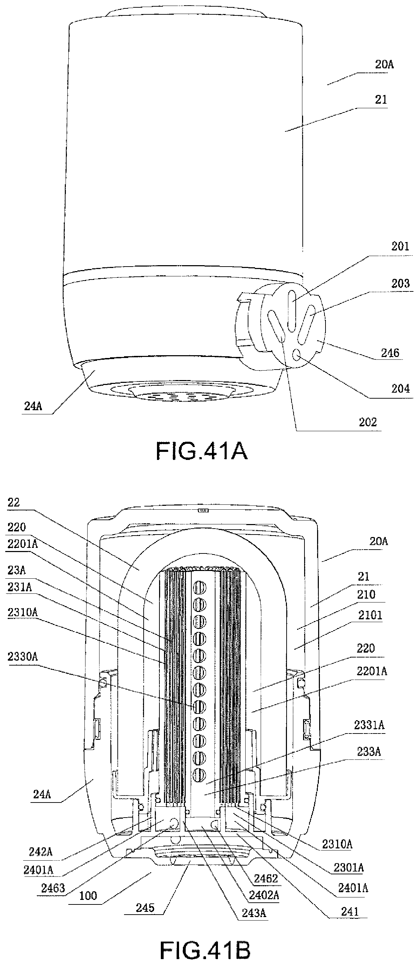

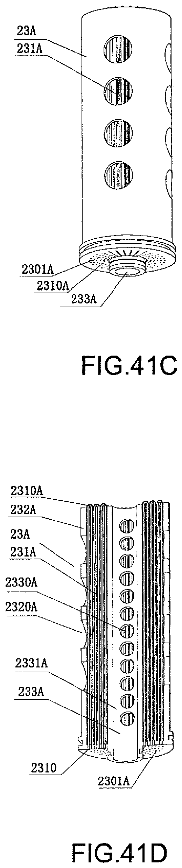

Referring to FIG.41A to FIG.42E, an alternative embodiment of the filtering device 20A of the water purifier 2 according to the second embodiment of the present invention comprises a outer casing 21, a primary filter 22 and a secondary filter 23A, wherein the outer casing 21 defines a first accommodation cavity 210, the primary filter 22 defines a second accommodation cavity 220, wherein the primary filter 22 is provided inside the first accommodation cavity 210 of the outer casing 21, the secondary filter 23A is provided inside the second accommodation cavity 220 of the primary filter 22, and the outer casing 21 and the primary filter 22 define a raw water channel 2101 therebetween, the primary filter 22 and the secondary filter 23A define a purified water channel 2201A (the purified water channel 2201A can be regard as a part of the second accommodation cavity 220) therebetween, the secondary filter 23A has a purified water outlet 2301A. Accordingly, since the secondary filter 23A is provided inside the second accommodation cavity 220 of the primary filter 22, after the raw water flows into the raw water channel 2101 under the action of water pressure and is treated by the primary filter 22, the purified water generated by the primary filter 22 can flow to the secondary filter 23A under the action of water pressure and be treated by the secondary filter 23A, and the cleaner secondary purified water is obtained, wherein the secondary purified water flows out through the purified water outlet 2301A under the action of water pressure, so as to be provided.

As shown in FIG.41A to FIG.42E, the secondary filter 23A of the filtering device 20A of the water purifier 2 according to the second embodiment of the present invention comprises a plurality of ultrafiltration membrane filaments 231A and a flow collecting tube 233A, wherein the ultrafiltration membrane filaments 231A and the flow collecting tube 233A are all provided inside the second accommodation cavity 220 of the primary filter 22, and the ultrafiltration membrane filaments 231A are provided to surround the flow collecting tube 233A, wherein the flow collecting tube 233A has at least one water collecting hole 2330A and a flow collecting channel 2331A, wherein the flow collecting channel 2331A is provided to communicate with the water collecting hole 2330A and the second communicating opening 202 of the filtering device 20A respectively, so that the purified water generated by the primary filter 22 can flow to the ultrafiltration membrane filaments 231A through the purified water channel 2201A under the action of water pressure, and flows to the flow collecting tube 233A through the gap between the ultrafiltration membrane filaments 231A, and is collected by the water collecting hole 2330A of the flow collecting tube 233A and flows to the second communicating opening 202 of the filtering device 20A through the flow collecting channel 2331A. It should be understood that when the purified water generated by the primary filter 22 flows to the flow collecting tube 233A through the purified water channel 2201A and the gap between the ultrafiltration membrane filaments 231A, the purified water generated by the primary filter 22 has a flushing action for the ultrafiltration membrane filaments 231A of the secondary filter 23A, so that the ultrafiltration membrane filaments 231A of the secondary filter 23A has a better filtering effect and the service life of the secondary filter 23A is prolonged. Further, each ultrafiltration membrane filament 231A of the secondary filter 23A defines a membrane filament channel 2310A, wherein the membrane filament channels 2310A of the ultrafiltration membrane filaments 231A of the secondary filter 23A are all communicated with the purified water outlet 2301A of the secondary filter 23A.

As shown in FIG.41A to FIG.42E, the filtering device 20A of the water purifier 2 according to the second embodiment of the present invention further comprises a base 24A, wherein the secondary filter 23A is provided at the base 24A, and the base 24A defines a first water cavity 2401A and a second water cavity 2402A, wherein the first water cavity 2401A of the base 24A is communicated with the purified water outlet 2301A of the secondary filter 23A and the third communicating opening 203 of the filtering device 20A respectively, the second water cavity 2402A is communicated with the flow collecting channel 2331A of the flow collecting tube 233A of the secondary filter 23A and the second communicating opening 202 of the filtering device 20 respectively. In other words, the membrane filament channel 2310A of the ultrafiltration membrane filament 231A of the secondary filter 23A is communicated with the third communicating opening 203 of the filtering device 20A through the purified water outlet 2301A of the secondary filter 23A and the first water cavity 2401A of the base 24A, so that the secondary purified water generated by the secondary filter 23A can flow out through the third communicating opening 203, the flow collecting channel 2331A of the flow collecting tube 233A of the secondary filter 23A is communicated with the second communicating opening 202 of the filtering device 20A through the second water cavity 2402A of the base 24A, so that the purified water generated by the primary filter 22 can flow out through the second communicating opening 202. Accordingly, the secondary filter 23A of the filtering device 20A is an external pressure type ultrafiltration filter. Preferably, the second communicating opening 202 and the third communicating opening 203 are both provided at the base 24A. More preferably, the flow collecting tube 233A and the secondary filter 23A are water-sealedly provided at the base 24A respectively, and the secondary filter 23A and the base 24A define the first water cavity 2401A therebetween, the flow collecting tube 233A and the base 24A define the second water cavity 2402A therebetween. Alternatively, the primary filter 22 is water-sealedly provided at the outer casing 21, the secondary filter 23A is water-sealedly provided at the base 24A.

As shown in FIG.41A to FIG.42E, the base 24A of the filtering device 20A of the water purifier 2 according to the second embodiment of the present invention comprises a bottom portion 241, a first spacing portion 242A and a second spacing portion 243A, wherein the first spacing portion 242A and the second spacing portion 243A are both provided at the bottom portion 241 and are extended from the bottom portion 241, wherein the first water cavity 2401A is provided between the first spacing portion 242A and the second spacing portion 243A, the second water cavity 2402A is defined by the embracement of the second spacing portion 243A. More preferably, the first spacing portion 242A and the second spacing portion 243A are both ring-shaped, and the first spacing portion 242A is provided at the outer side of the second spacing portion 243A. Accordingly, the second spacing portion 243A is provided between the first water cavity 2401A and the second water cavity 2402A, so as to separate the first water cavity 2401A and the second water cavity 2402A with each other.

As shown in FIG.41A to FIG.42E, the purified water channel 2201A of the filtering device 20A of the water purifier 2 according to the second embodiment of the present invention, the water collecting hole 2330A, the flow collecting channel 2331A, the second water cavity 2402A of the base 24A and the second communicating opening 202 of the filtering device 20A define a primary purified water route, the membrane filament channel 2310A of the ultrafiltration membrane filament of the secondary filter 23A, the purified water outlet 2301A of the secondary filter 23A, the first water cavity 2401A of the base 24A and the third communicating opening 203 of the filtering device 20A define a secondary purified water route. It should be understood that the primary purified water route and the secondary purified water route are separated from each other, so as to prevent the water inside the primary purified water route and the secondary purified water route from mixing, in other words, the primary purified water route and the secondary purified water route are separated from each other, so as to prevent the purified water generated by the primary filter 22 from being mixed into the purified water generated by the secondary filter 23A.

As shown in FIG.41A to FIG.42E, the secondary filter 23A of the filtering device 20A of the water purifier 2 according to the second embodiment of the present invention further comprises a shell 232A, wherein the ultrafiltration membrane filaments 231A of the secondary filter 23A are provided inside the shell 232A, and the shell 232A has at least one water inlet 2320A, wherein the inner space and the outer space of the shell 232A are communicated by the water inlet 2320A of the shell 232A, so that when the water purifier 2 of the present invention is under the ultrafiltration filtering working state, the purified water generated by the primary filter 22 flows to the ultrafiltration membrane filament 231A through the water inlet 2320A of the shell 232A under the action of water pressure. Therefore, the water inlet 2320A of the shell 232A of the secondary filter 23A can be regard as a part of the purified water channel 2201A of the filtering device 20A.

As shown in FIG.41A to FIG.42E, accordingly, when the filtering device 20A of the water purifier 2 according to the second embodiment of the present invention is used to treat the raw water, the users can control the raw water flowing to the first communicating opening 201 of the filtering device 20A through the control valve 10, and the raw water flows to the raw water channel 2101 of the filtering device 20A under the action of water pressure, then the purified water generated by the treatment of the primary filter 22 flows to the purified water channel 2201A under the action of water pressure, at this time, if the purified water inside the purified water channel 2201A can flow freely through the second communicating opening 202 of the filtering device 20A under the control of the control valve 10, and the purified water generated by the secondary filter 23A cannot flow freely to the third communicating opening 203, the purified water generated by the primary filter 22 will flow out and be provided under the action of water pressure through the second communicating opening 202. Accordingly, at this time, the water purifier 2 according to the second embodiment of the present invention is under a filtering working state, the purified water generated by the primary filter 22 will flow through the water collecting hole 2330A of the flow collecting tube 233A, the flow collecting channel 2331A, the second water cavity 2402A and the second communicating opening 202 in sequence, and be provided. On the other hand, if the purified water inside the purified water channel 2201A cannot flow freely through the second communicating opening 202 of the filtering device 20A under the control of the control valve 10, and the purified water generated by the secondary filter 23A can flow freely to the third communicating opening 203, the purified water generated by the primary filter 22 will be further purified by the secondary filter 23A under the action of water pressure, and the purified water generated by the secondary filter 23A will flow out through the membrane filament channel 2310A, and then flows out and is provided through the purified water outlet 2301A of the secondary filter 23A, the first water cavity 2401A and the third communicating opening 203. Accordingly, the water purifier 2 according to the second embodiment of the present invention is under an ultrafiltration filtering working state at this time. As shown in FIG.41A to FIG.42E, further, the water purifier 2 according to the second embodiment of the present invention has a raw water supplying working state, wherein when the water purifier 2 of the present invention is under the raw water supplying working state, the user can control the raw water to flow directly to a raw water outlet and to be provided through the control valve 10, instead of flowing through the filtering device 20A and being purified by it.

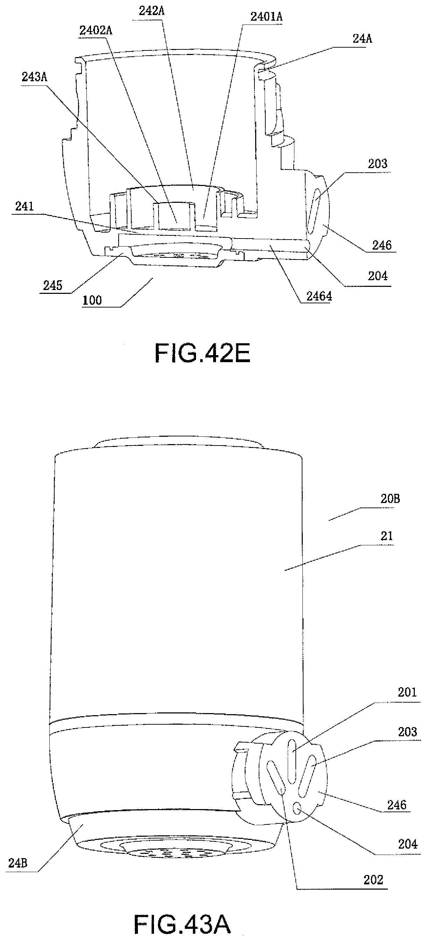

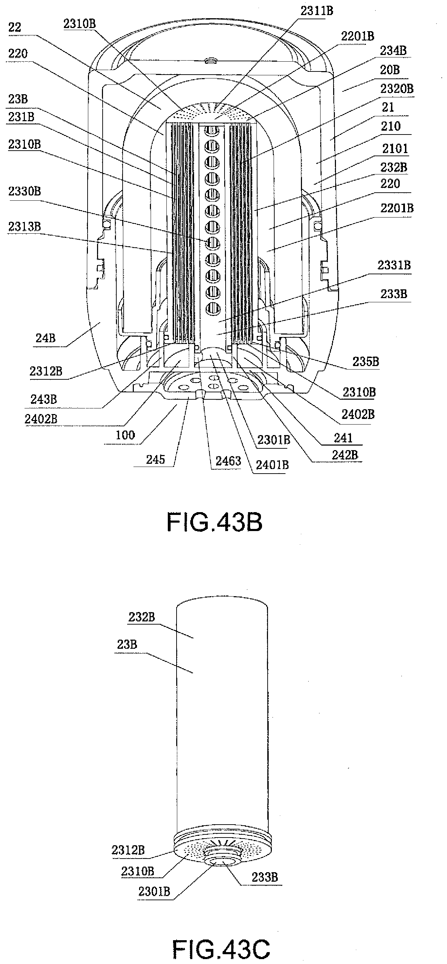

Referring to FIG.43A to FIG.44E, another alternative embodiment of the filtering device 20 of the water purifier 2 according to the second embodiment of the present invention is shown, wherein the filtering device 20B comprises a outer casing 21, a primary filter 22 and a secondary filter 23B, wherein the outer casing 21 defines a first accommodation cavity 210, the primary filter 22 defines a second accommodation cavity 220, wherein the primary filter 22 is provided inside the first accommodation cavity 210 of the outer casing 21, the secondary filter 23B is provided inside the second accommodation cavity 220 of the primary filter 22, and the outer casing 21 and the primary filter 22 define a raw water channel 2101 therebetween, the primary filter 22 and the secondary filter 23B define a purified water channel 2201 B (the purified water channel 2201B can be regard as a part of the second accommodation cavity 220) therebetween, the secondary filter 23B has a purified water outlet 2301B. Accordingly, since the secondary filter 23B is provided inside the second accommodation cavity 220 of the primary filter 22, after the raw water flows into the raw water channel 2101 under the action of water pressure and is treated by the primary filter 22, the purified water generated by the primary filter 22 can flow to the secondary filter 23B under the action of water pressure and be treated by the secondary filter 23B, and the cleaner secondary purified water is obtained, wherein the secondary purified water flows out through the purified water outlet 2301B under the action of water pressure, so as to be provided.

As shown in FIG.43A to FIG.44E, the secondary filter 23B of the filtering device 20B of the water purifier 2 according to the second embodiment of the present invention comprises a plurality of ultrafiltration membrane filaments 231B and a flow collecting tube 233B, wherein the ultrafiltration membrane filaments 231B of the secondary filter 23B and the flow collecting tube 233B are all provided inside the second accommodation cavity 220 of the primary filter 22, and the ultrafiltration membrane filaments 231B are provided to surround the flow collecting tube 233B, wherein each ultrafiltration membrane filament 231B defines a membrane filament channel 2310B, the flow collecting tube 233B has at least one water collecting hole 2330B and a flow collecting channel 2331B, wherein the two ends of the membrane filament channel 2310B of the ultrafiltration membrane filament 231B communicate with the purified water channel 2201B and the second communicating opening 202 respectively, the flow collecting channel 2331B is provided to communicate with the water collecting hole 2330B and the purified water outlet 2301B of the secondary filter 23B respectively, so that the purified water generated by the primary filter 22 can flow to the ultrafiltration membrane filament 231B through the purified water channel 2201B under the action of water pressure, and flows to the second communicating opening 202 of the filtering device 20B through the membrane filament channel 2310B of the ultrafiltration membrane filament 231B. Accordingly, the purified water outlet 2301B of the secondary filter 23B defines the water outlet of the flow collecting channel 2331B. It should be understood that when the second communicating opening 202 of the filtering device 20B is blocked, the purified water generated by the primary filter 22 flows into the membrane filament channel 2310B of the ultrafiltration membrane filament 231B of the secondary filter 23B, and under the action of water pressure, the ultrafiltration membrane filament 231B of the secondary filter 23B further filters the purified water generated by the primary filter 22 and generates the secondary purified water, and the purified water generated by the secondary filter 23B flows to the flow collecting tube 233B through the gap between the ultrafiltration membrane filaments 231B, and flows into the flow collecting channel 2331B of the flow collecting tube 233B through the water collecting hole 2330B of the flow collecting tube 233B, and then flows out through the purified water outlet 2301B of the secondary filter 23B and the third communicating opening 203. In addition, when the purified water generated by the primary filter 22 flows to the second communicating opening 202 of the filtering device 20B through the membrane filament channel 2310B of the ultrafiltration membrane filament 231B of the secondary filter 23B, the purified water generated by the primary filter 22 has a flushing action for the ultrafiltration membrane filaments 231B of the secondary filter 23B, so that the ultrafiltration membrane filaments 231B of the secondary filter 23B has a better filtering effect and the service life of the secondary filter 23B is prolonged.

As shown in FIG.43A to FIG.44E, the ultrafiltration membrane filament 231B of the secondary filter 23B of the filtering device 20B of the water purifier 2 according to the second embodiment of the present invention comprises a first end 2311B, a second end 2312B and an ultrafiltration portion 2313B extended between the first end 2311B and the second end 2312B, wherein the first end 2311B of the ultrafiltration membrane filament 231B of the secondary filter 23B is provided to face the primary filter 22, and the second end 2312B of the ultrafiltration membrane filament 231B of the secondary filter 23B is provided to face the base 24B of the filtering device 20B. It should be understood that the first end 2311B of the ultrafiltration membrane filament 231B is communicated with the purified water channel 2201B, and the second end 2312B of the ultrafiltration membrane filament 231B is communicated with the second communicating opening 202.

As shown in FIG.16 to FIG.44E, the secondary filter 23B of the filtering device 20B of the water purifier 2 according to the first embodiment of the present invention further comprises a shell 232B, a first sealing portion 234B and a second sealing portion 235B, wherein the shell 232B defines a purified water cavity 2320B and two openings 2321B communicated with the purified water cavity 2320B respectively, the flow collecting tube 233B further comprises an opening portion 2332B extended from the flow collecting channel 2331B, wherein the purified water outlet 2301B is provided at the opening portion 2332B, wherein the first sealing portion 234B and the second sealing portion 235B are respectively and sealedly provided at the two openings 2321B of the shell 232B, the first end 2311B of the ultrafiltration membrane filament 231B is sealedly provided at the first sealing portion 234B, the second end 2312B is sealedly provided at the second sealing portion 235B, the ultrafiltration portion 2313B is provided inside the purified water cavity 2320B of the shell 232B, the water collecting hole 2330B and the flow collecting channel 2331B of the flow collecting tube 233B are provided inside the purified water cavity 2320B, the opening portion 2332B of the flow collecting tube 233B is provided at the second sealing portion 235B, so that the purified water generated by the primary filter 22 can flow into the membrane filament channel 2310B of the ultrafiltration membrane filament 231B through the first end 2311B of the ultrafiltration membrane filament 231B, after filtered by the ultrafiltration portion 2313B of the ultrafiltration membrane filament 231B, the purified water is generated and flows into the purified water cavity 2320B, and then, under the action of water pressure, it is collected by the water collecting hole 2330B of the flow collecting tube 233B and flows to the third communicating opening 203 through the flow collecting channel 2331B, the opening portion 2332B of the flow collecting tube 233B and the purified water outlet 2301B. In other words, the two sealing portion 234B, 235B of the secondary filter 23B are respectively and sealedly provided at two opening ends of the shell 232B, two ends of the ultrafiltration membrane filament 231B are respectively and sealedly provided at the sealing portions 234B, 235B of the secondary filter 23B, so as to define the purified water cavity 2320B accommodating the ultrafiltration portion 2313B of the ultrafiltration membrane filament 231B, the water collecting hole 2330B and the flow collecting channel 2331B of the flow collecting tube 233B inside it by the embracement of the shell 232B of the secondary filter 23B and the sealing portions 234B, 235B, so that the purified water generated by the primary filter 22 can flow into the membrane filament channel 2310B of the ultrafiltration membrane filament 231B through the first end 2311B of the ultrafiltration membrane filament 231B, after filtered by the ultrafiltration portion 2313B of the ultrafiltration membrane filament 231B, the purified water is generated and flows into the purified water cavity 2320B, and then, under the action of water pressure, it is collected by the water collecting hole 2330B of the flow collecting tube 233B and flows to the third communicating opening 203 through the flow collecting channel 2331B, the opening portion 2332B of the flow collecting tube 233B and the purified water outlet 2301B. It should be understood that since the two sealing portion 234B, 235B of the secondary filter 23B are respectively and sealedly provided at two opening ends of the shell 232B, and two ends of the ultrafiltration membrane filament 231B are respectively and sealedly provided at the sealing portions 234B, 235B of the secondary filter 23B, the primary purified water generated by the primary filter 22 inside the second accommodation cavity 220 of the primary filter 22 cannot flow into the purified water cavity 2320B of the secondary filter 23B. Accordingly, the two sealing portions 234B, 235B of the secondary filter 23B are water-sealedly sealed with the shell 232B, the ultrafiltration membrane filament 231 is water-sealedly sealed with the sealing portions 234B, 235B of the secondary filter 23B.

As shown in FIG.43A to FIG.44E, the filtering device 20B of the water purifier 2 according to the second embodiment of the present invention further comprises a base 24B, wherein the secondary filter 23B is provided at the base 24B, and the base 24B defines a first water cavity 2401B and a second water cavity 2402B, wherein the first water cavity 2401B of the base 24B is communicated with the purified water outlet 2301B of the secondary filter 23B and the third communicating opening 203 of the filtering device 20B respectively, the second water cavity 2402B is communicated with the membrane filament channel 2310B of the ultrafiltration membrane filament 231B of the secondary filter 23B and the second communicating opening 202 of the filtering device 20B respectively. In other words, the membrane filament channel 2310B of the ultrafiltration membrane filament 231B of the secondary filter 23B is communicated with the second communicating opening 202 of the filtering device 20B through the second water cavity 2402B of the base 24B, so that the purified water generated by the primary filter 22 can flow out through the second communicating opening 202, the flow collecting channel 2331B of the flow collecting tube 233B of the secondary filter 23B is communicated with the third communicating opening 203 of the filtering device 20B through the purified water outlet 2301B of the secondary filter 23B and the first water cavity 2401B of the base 24B, so that the secondary purified water generated by the secondary filter 23B can flow out through the third communicating opening 203. Accordingly, the secondary filter 23B is an internal pressure type filter. Preferably, the second communicating opening 202 and the third communicating opening 203 are both provided at the base 24B. More preferably, the flow collecting tube 233B and the secondary filter 23B are water-sealedly provided at the base 24B respectively, and the secondary filter 23B and the base 24B define the second water cavity 2402B therebetween, the flow collecting tube 233B and the base 24B define the first water cavity 2401B therebetween.

As shown in FIG.43A to FIG.44E, the base 24B of the filtering device 20B of the water purifier 2 according to the second embodiment of the present invention comprises a bottom portion 241, a first spacing portion 242B and a second spacing portion 243B, wherein the first spacing portion 242B and the second spacing portion 243B are both provided at the bottom portion 241 and are extended from the bottom portion 241, wherein the second water cavity 2402B is provided between the first spacing portion 242B and the second spacing portion 243B, the first water cavity 2401B is defined by the embracement of the first spacing portion 242B. More preferably, the first spacing portion 242B and the second spacing portion 243B are both ring-shaped, and the second spacing portion 243B is provided at the outer side of the first spacing portion 242B. Accordingly, the first spacing portion 242B is provided between the first water cavity 2401B and the second water cavity 2402B, so as to separate the first water cavity 2401B and the second water cavity 2402B with each other.

As shown in FIG.43A to FIG.44E, the purified water channel 2201B of the filtering device 20B of the water purifier 2 according to the second embodiment of the present invention, the membrane filament channel 2310B, the second water cavity 2402B of the base 24B and the second communicating opening 202 of the filtering device 20B define a primary purified water route, the water collecting hole 2330B of the secondary filter 23B, the flow collecting channel 2331B, the purified water outlet 2301B of the secondary filter 23B, the first water cavity 2401B of the base 24B and the third communicating opening 203 of the filtering device 20B define a secondary purified water route. It should be understood that the primary purified water route and the secondary purified water route are separated from each other, so as to prevent the water inside the primary purified water route and the secondary purified water route from mixing, in other words, the primary purified water route and the secondary purified water route are separated from each other, so as to prevent the purified water generated by the primary filter 22 from being mixed into the purified water generated by the secondary filter 23B.

As shown in FIG.43A to FIG.44E, accordingly, when the filtering device 20B of the water purifier 2 according to the second embodiment of the present invention is used to treat the raw water, the users can control the raw water flowing to the first communicating opening 201 of the filtering device 20B through the control valve 10, and the raw water flows to the raw water channel 2101 of the filtering device 20B under the action of water pressure, then the purified water generated by the treatment of the primary filter 22 flows to the purified water channel 2201B under the action of water pressure, at this time, if the purified water inside the purified water channel 2201B can flow freely through the second communicating opening 202 of the filtering device 20B under the control of the control valve 10, and the purified water generated by the secondary filter 23B cannot flow freely to the third communicating opening 203, the purified water generated by the primary filter 22 will flow in through the first end 2311B of the ultrafiltration membrane filament 231B under the action of water pressure, and flows out through the second end 2312B of the ultrafiltration membrane filament 231B, an then flows out and is provided through the second communicating opening 202. Accordingly, at this time, the water purifier 2 according to the second embodiment of the present invention is under a filtering working state, the purified water generated by the primary filter 22 will flow through the purified water channel 2201B, the membrane filament channel 2310B of the ultrafiltration membrane filament 231B, the second water cavity 2402B and the second communicating opening 202 in sequence, and be provided. On the other hand, if the purified water inside the purified water channel 2201B cannot flow freely through the second communicating opening 202 of the filtering device 20B under the control of the control valve 10, and the purified water generated by the secondary filter 23B can flow freely to the third communicating opening 203, the purified water generated by the primary filter 22 will flow in through the first end 2311B of the ultrafiltration membrane filament 231B under the action of water pressure, and is collected by the water collecting hole 2330B and the flow collecting channel 2331B of the flow collecting tube 233B after ultrafiltration treated by the ultrafiltration membrane filament 231B, and then flows out and is provided through the purified water outlet 2301B of the secondary filter 23B, the first water cavity 2401B and the third communicating opening 203. Accordingly, the water purifier 2 according to the second embodiment of the present invention is under an ultrafiltration filtering working state at this time. As shown in FIG.43A to FIG.44E, further, the water purifier 2 according to the second embodiment of the present invention has a raw water supplying working state, wherein when the water purifier 2 of the present invention is under the raw water supplying working state, the user can control the raw water to flow directly to a raw water outlet and to be provided through the control valve 10, instead of flowing through the filtering device 20B and being purified by it.

It is worth noting that the vast majority of existing tap water purifiers, or even all existing tap water purifiers in practical application, cannot achieve functions other than purification of raw water (such as filtration or ultrafiltration) and raw water supply. For example, they are difficult to control and achieve the back-flushing of the primary filter element 22K of the tap water purifier. The mentioned situation is related to the structure of the control valve adopted by the existing tap water purifier. Due to the small size of the tap water purifier, the application of the existing tap water purifiers is often limited. Therefore, the control valve of most of the existing tap water purifiers has a simple structure and cannot control and realize the complex functions other than the purification of raw water (such as filtration or ultrafiltration) and raw water supply. However, the control valve 10K (control valve 10T) of the water purifier 2 of the present invention has been purposefully designed, and its special structure can not only be integrated with the faucet, but also control and realize the back-flushing of the primary filter 22K of the water purifier 2 of the present invention.

It can be understood by those skilled in the art that the water purifier 2 of the present invention has a connection mechanism or installation mechanism so that the water purifier 2 can be installed or fixed on the faucet or the running water pipe adjacent to the faucet, so that the running water (or raw water) can be purified and provided under the control of the control valve 10K (control valve 10T) of the water purifier 2 of the present invention, or directly provided. The connection mechanism or installation mechanism of the water purifier 2 of the present invention can be installed or fixed on the faucet or the tap water pipe adjacent to the faucet by screw connection, connection or any other way that facilitates the connection between the raw water inlet 1106K (or raw water inlet 1107) of the water purifier 2 of the present invention and the faucet. Preferably, the water purifier 2 of the present invention is installed or fixed on the faucet through the connecting mechanism or installation mechanism, so that the raw water inlet 1106K (or raw water inlet 1107) of the water purifier 2 of the present invention is connected with the faucet. Accordingly, the water purifier 2 of the present invention is provided on the control valve 10K (control valve 10T) through a connection mechanism or installation mechanism, and even the connection mechanism or installation mechanism can be regarded as a part of the control valve 10K (control valve 10T).

It should be noted that the first, second, third, fourth, fifth, sixth, seventh, eighth, ninth, tenth and / or eleventh in this paper are only used to name different components (or elements) of the present invention and distinguish between different parts, elements and structures of the present invention, they themselves have no meaning of order or number.

Those skilled in the art should understand that the embodiments of the present invention shown in the above description and the accompanying drawings are only examples and do not limit the present invention.

The objects of the present invention have been completely and effectively realized. The function and structural principle of the present invention have been shown and explained in the above embodiments. Without departing from the principle, the embodiments of the present invention can be deformed or modified.

## Claims

1. A water purifier, comprising:
a control valve for controlling the flow of water; and
a filtering device for purifying a raw water, wherein the filtering device has a first communicating opening, a second communicating opening and a third communicating opening, the control valve comprises a valve body and a valve core, wherein the valve body defines a valve cavity, a first opening, a second opening, a third opening, a fourth opening, a fifth opening, a raw water inlet and a draining opening, wherein the valve core is provided inside the valve cavity, wherein the first opening of the valve body is adapted to be communicated with the first communicating opening of the filtering device, the second opening of the valve body is adapted to be communicated with the second communicating opening of the filtering device, the fourth opening of the valve body is adapted to be communicated with the third communicating opening of the filtering device, the raw water inlet of the valve body is adapted to be communicated with a raw water source.

2. The water purifier, as recited in claim 1, wherein when the control valve is under a first purifying working position, the valve core of the control valve defines a first communicating passage respectively communicated with the first opening and the raw water inlet of the valve body and a second communicating passage respectively communicated with the fourth opening and the fifth opening of the valve body.

3. The water purifier, as recited in claim 2, wherein the control valve is a plane valve, wherein the valve core further comprises a fixed disk and a rotatable disk, wherein the fixed disk has a first fluid control surface, and the rotatable disk has a second fluid control surface, wherein the rotatable disk and the fixed disk are arranged in the valve cavity, wherein the second fluid control surface of the rotatable disk is provided on the first fluid control surface of the fixed disk, and the rotatable disk is capable of rotating relative to the fixed disk, wherein the plane valve has a first channel, a second channel, a third channel, a fourth channel, a fifth channel, a sixth channel and a seventh channel, wherein the first channel, the second channel, the third channel, the fourth channel and the fifth channel are respectively provided at the fixed disk and extended from the first fluid control surface of the fixed disk; the sixth channel and the seventh channel are respectively provided at the rotatable disk and extended from the second fluid control surface of the rotatable disk, wherein the first channel is communicated with the first opening, the second channel is communicated with the second opening, the third channel is communicated with the third opening, the fourth channel is communicated with the fourth opening, the fifth channel is communicated with the fifth opening, the sixth channel is communicated with the raw water inlet, wherein when the plane valve is under the first purifying working position, the sixth channel of the plane valve is communicated with the first channel, so as to define the first communicating passage communicated with the raw water inlet and the first opening respectively, and the seventh channel is communicated with the fourth channel and the fifth channel respectively, so as to define the second communicating passage communicated with the fourth opening and the fifth opening respectively.

4. The water purifier, as recited in claim 3, wherein the plane valve further has an eighth channel, wherein the eighth channel is provided at the fixed disk and extended from the first fluid control surface of the fixed disk, wherein the eighth channel is communicated with the first opening, wherein when the plane valve is under a second purifying working position, the sixth channel of the plane valve is communicated with the eighth channel, so as to define a third communicating passage communicated with the raw water inlet and the first opening respectively, the seventh channel is communicated with the second channel and the third channel respectively, so as to define a fourth communicating passage communicated with the second opening and the third opening respectively.

5. The water purifier, as recited in claim 4, wherein the plane valve further has a ninth channel, a tenth channel and an eleventh channel, wherein the ninth channel, the tenth channel and the eleventh channel are provided at the fixed disk respectively and extended from the first fluid control surface of the fixed disk respectively, wherein the ninth channel is communicated with the draining opening, the tenth channel is communicated with the second opening, the eleventh channel is communicated with the first opening, wherein when the plane valve is under a back-flushing working position, the sixth channel of the plane valve is communicated with the tenth channel to define a fifth communicating passage communicated with the raw water inlet and the second opening respectively, the seventh channel is communicated with the ninth channel and the eleventh channel respectively to define a sixth communicating passage communicated with the first opening and the draining opening respectively.

6. The water purifier, as recited in claim 3, wherein when the plane valve is under a standby working position, the sixth channel of the plane valve is blocked by the first fluid control surface of the fixed disk.

7. The water purifier, as recited in claim 4, wherein when the plane valve is under the first purifying working position, the second channel and the third channel of the plane valve are blocked by the rotatable disk respectively; wherein when the plane valve is under the second purifying working position, the first channel, the fourth channel and the fifth channel of the plane valve are blocked by the rotatable disk respectively.

8. The water purifier, as recited in claim 5, wherein when the plane valve is under the back-flushing working position, the first channel, the second channel, the third channel, the fourth channel, the fifth channel and the eighth channel of the plane valve are blocked by the rotatable disk respectively.

9. The water purifier, as recited in claim 5, wherein the fixed disk of the plane valve defines an inner portion, an extending portion extended outward from the inner portion and an edge portion extended outward from the extending portion, wherein the first channel, the eighth channel and the tenth channel of the plane valve are extended from the edge portion of the first fluid control surface of the fixed disk respectively, the second channel, the third channel, the fourth channel, the fifth channel, the ninth channel and the eleventh channel are extended from the extending portion of the first fluid control surface of the fixed disk respectively, wherein the second fluid control surface of the rotatable disk of the plane valve defines an inner region, an extending region extended outward from the inner region and an edge region extended outward from the extending region, wherein the sixth channel of the plane valve is extended from the edge region of the second fluid control surface of the rotatable disk , the seventh channel is extended from the extending region of the second fluid control surface of the rotatable disk.

10. The water purifier, as recited in claim 5, wherein the first channel, the second channel, the third channel, the fourth channel, the fifth channel, the eighth channel, the ninth channel, the tenth channel and the eleventh channel of the plane valve are spacedly provided at the first fluid control surface of the fixed disk; the sixth channel and the seventh channel of the plane valve are spacedly provided at the second fluid control surface of the rotatable disk.

11. The water purifier, as recited in claim 2, wherein the control valve is a plane valve, wherein the valve core further comprises a fixed disk and a rotatable disk, wherein the fixed disk has a first fluid control surface, and the rotatable disk has a second fluid control surface, wherein the rotatable disk and the fixed disk are arranged in the valve cavity, wherein the second fluid control surface of the rotatable disk is provided on the first fluid control surface of the fixed disk, and the rotatable disk is capable of rotating relative to the fixed disk, wherein the plane valve has a first channel, a second channel, a third channel, a fourth channel, a fifth channel, a sixth channel, a seventh channel and a raw water inlet channel, wherein the first channel, the second channel, the third channel, the fourth channel, the fifth channel and the raw water inlet channel are respectively provided at the fixed disk and extended from the first fluid control surface of the fixed disk; the sixth channel and the seventh channel are respectively provided at the rotatable disk and extended from the second fluid control surface of the rotatable disk, wherein the first channel is communicated with the first opening, the second channel is communicated with the second opening, the third channel is communicated with the third opening, the fourth channel is communicated with the fourth opening, the fifth channel is communicated with the fifth opening, the raw water inlet channel are communicated with the sixth channel and the raw water inlet respectively, wherein when the plane valve is under a first purifying working position, the sixth channel of the plane valve is communicated with the raw water inlet channel and the first channel to define the first communicating passage communicated with the raw water inlet and the first opening respectively, and the seventh channel is communicated with the fourth channel and the fifth channel respectively to define the second communicating passage communicated with the fourth opening and the fifth opening respectively.

12. The water purifier, as recited in claim 11, wherein the plane valve further has an eighth channel, wherein the eighth channel is provided at the fixed disk and extended from the first fluid control surface of the fixed disk, wherein the eighth channel is communicated with the first opening, wherein when the plane valve is under a second purifying working position, the sixth channel of the plane valve is communicated with the raw water inlet channel and the eighth channel to define a third communicating passage communicated with the raw water inlet and the first opening respectively, the seventh channel is communicated with the second channel and the third channel respectively to define a fourth communicating passage communicated with the second opening and the third opening respectively.

13. The water purifier, as recited in claim 12, wherein the plane valve further has a ninth channel, a tenth channel and an eleventh channel, wherein the ninth channel, the tenth channel and the eleventh channel are provided at the fixed disk respectively and extended from the first fluid control surface of the fixed disk respectively, wherein the ninth channel is communicated with the draining opening, the tenth channel is communicated with the second opening, the eleventh channel is communicated with the first opening, wherein when the plane valve is under a back-flushing working position, the sixth channel of the plane valve is communicated with the raw water inlet channel and the tenth channel to define a fifth communicating passage communicated with the raw water inlet and the second opening respectively, the seventh channel is communicated with the ninth channel and the eleventh channel respectively to define a sixth communicating passage communicated with the first opening and the draining opening respectively.

14. The water purifier, as recited in claim 11, wherein when the plane valve is under a standby working position, the sixth channel of the plane valve is only communicated with the raw water inlet channel.

15. The water purifier, as recited in claim 12, wherein when the plane valve is under the first purifying working position, the second channel and the third channel of the plane valve are blocked by the rotatable disk respectively; wherein when the plane valve is under the second purifying working position, the first channel, the fourth channel and the fifth channel of the plane valve are blocked by the rotatable disk respectively.

16. The water purifier, as recited in claim 13, wherein when the plane valve is under the back-flushing working position, the first channel, the second channel, the third channel, the fourth channel, the fifth channel and the eighth channel of the plane valve are blocked by the rotatable disk respectively.

17. The water purifier, as recited in claim 13, wherein the fixed disk of the plane valve defines an inner portion, an extending portion extended outward from the inner portion and an edge portion extended outward from the extending portion, wherein the first channel, the eighth channel and the tenth channel of the plane valve are extended from the extending portion of the first fluid control surface of the fixed disk respectively, the second channel, the third channel, the fourth channel, the fifth channel, the ninth channel and the eleventh channel are extended from the edge portion of the first fluid control surface of the fixed disk respectively, the raw water inlet channel is extended from the inner portion of the first fluid control surface of the fixed disk, wherein the second fluid control surface of the rotatable disk of the plane valve defines an inner region, an extending region extended outward from the inner region and an edge region extended outward from the extending region, wherein the sixth channel of the plane valve is extended from the inner region and the extending region of the second fluid control surface of the rotatable disk, the seventh channel is extended from the edge region of the second fluid control surface of the rotatable disk.

18. The water purifier, as recited in claim 17, wherein the first channel, the second channel, the third channel, the fourth channel, the fifth channel, the eighth channel, the ninth channel, the tenth channel and the eleventh channel of the plane valve are spacedly provided at the first fluid control surface of the fixed disk; the sixth channel and the seventh channel of the plane valve are spacedly provided at the second fluid control surface of the rotatable disk.

19. The water purifier, as recited in anyone of claims 1-18, wherein the filtering device comprises an outer casing, a primary filter and a secondary filter, wherein the outer casing defines a first accommodation cavity, wherein the primary filter and the secondary filter are provided inside the first accommodation cavity of the outer casing, and the outer casing and the primary filter define a raw water channel therebetween, the primary filter and the secondary filter define a purified water channel therebetween, the secondary filter has a purified water outlet, wherein the first communicating opening of the filtering device is communicated with the raw water channel of the filtering device, the second communicating opening of the filtering device is communicated with the purified water channel of the filtering device, the third communicating opening of the filtering device is communicated with the purified water outlet of the secondary filter.

20. The water purifier, as recited in claim 19, wherein the primary filter defines a second accommodation cavity, wherein the primary filter is provided inside the first accommodation cavity, and the secondary filter is provided inside the second accommodation cavity.
